# EUROPEAN PATENT SPECIFICATION

(11) **EP 2 346 255 B1**
(45) Date of publication and mention of the grant of the patent: **08.04.2015**
(21) Application number: 09819011.9
(22) Date of filing: 09.10.2009
(51) Int. Cl.: H04N 19/51, H04N 19/44, H04N 19/70, H04N 19/174, H04N 19/61, H04N 19/436

(54) **IMAGE DECODING APPARATUS AND IMAGE DECODING METHOD**
BILDDECODIERUNGSVORRICHTUNG UND BILDDECODIERUNGSVERFAHREN
APPAREIL ET PROCÉDÉ DE DÉCODAGE D'IMAGES

(30) Priority: 10.10.2008 JP 2008264665
(43) Date of publication of application: 20.07.2011
(73) Proprietor: Panasonic Corporation, Kadoma-shi Osaka 571-8501 (JP)
(72) Inventor: IWAHASHI, Daisuke, Osaka-shi, Osaka 540-6207 (JP); YOSHIMATSU, Naoki, Osaka-shi, Osaka 540-6207 (JP); TANAKA, Takeshi, Osaka-shi, Osaka 540-6207 (JP)
(74) Representative: Eisenführ Speiser
(86) International application number: PCT/JP2009/005298
(87) International publication number: WO 2010/041472

(56) References cited:
- EP-A2- 1 363 458
- WO-A1-2009/119888
- TOL VAN DER E B ET AL: "MAPPING OF H.264 DECODING ON A MULTIPROCESSOR ARCHITECTURE", PROCEEDINGS OF SPIE, SPIE, US, vol. 5022, 21 January 2003 (2003-01-21), pages 707-718, XP008025096, ISSN: 0277-786X, DOI: 10.1117/12.476234
- ZHAO, J. ET AL.: 'New Results using Entropy Slices for Parallel Decoding' ITU - TELECOMMUNICATIONS STANDARDIZATION SECTOR STUDY GROUP 16 QUESTION 6 VIDEO CODING EXPERTS GROUP VCEG-A32 16 July 2008, XP030003597
- JUNG, B. ET AL.: 'Adaptive slice-level parallelism for H.264/AVC encoding using pre macroblockmode selection' JOURNAL OF VISUAL COMMUNICATION AND IMAGE REPRESENTATION vol. 19, no. 8, 02 October 2008, pages 558 - 572, XP025691590
- ROITZSCH, M: 'Slice-Balancing H.264 Video Encoding for Improved Scalability of Multicore Decoding' PROC.OF THE 7TH ACM AND IEEE INT. CONF. ON EMBEDDED SOFTWARE 2007, pages 269 - 278, XP002518730
- "Text of ISO/IEC 14496-10:200X / FDIS Advanced Video Coding (4th edition)", 81. MPEG MEETING;2-6-2007 - 6-6-2007; LAUSANNE; (MOTION PICTURE EXPERTGROUP OR ISO/IEC JTC1/SC29/WG11),, no. N9198, 28 October 2007 (2007-10-28), XP030015692, ISSN: 0000-0130

## Description

### [Technical Field]

The present invention relates to image decoding apparatuses and image decoding methods for decoding coded images, and in particular to image decoding apparatuses and image decoding methods for executing parallel decoding.

### [Background Art]

An image coding apparatus which codes a moving picture segments each of the pictures that constitute a moving picture into macroblocks, and codes the moving picture in units of a macroblock. Furthermore, the image coding apparatus generates a bit stream representing the coded moving picture.

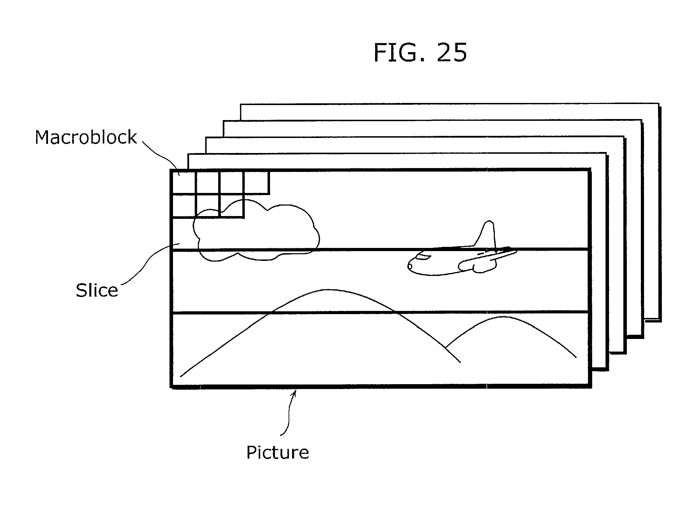

FIG. 25 is a diagram showing a structure of a picture to be coded.

Each of the pictures is segmented into macroblocks composed of 16 x 16 pixels, and coded. Here, each of the macroblocks in the picture is composed of slices, and the slices constitute the picture. A structural unit of a picture is referred to as a macroblock line (MB line) including macroblocks that are arranged in the picture from left end to right end in the horizontal direction.

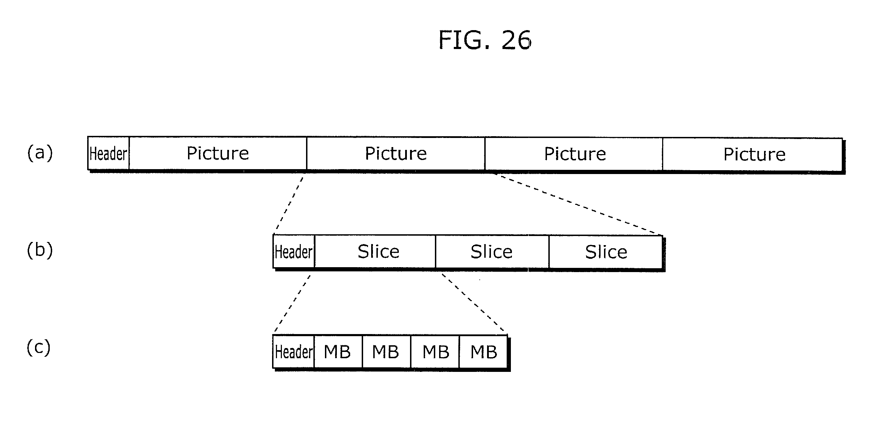

FIG. 26 is a diagram showing a structure of a bit stream.

The bit stream is hierarchical, and as shown in FIG. 26(a), is configured to include a header and pictures arranged in coding order. The header includes, for example, sequence parameter sets (SPSs) referred to for decoding a sequence including the pictures. As shown in FIG. 26(b), each of the coded pictures is configured to include a header and slices. Likewise, as shown in FIG. 26(c), each of the slices is configured to include a header and macroblocks (MBs). The header at the beginning of the picture in FIG. 26(b) includes, for example, picture parameter sets (PPSs) referred to for decoding the picture.

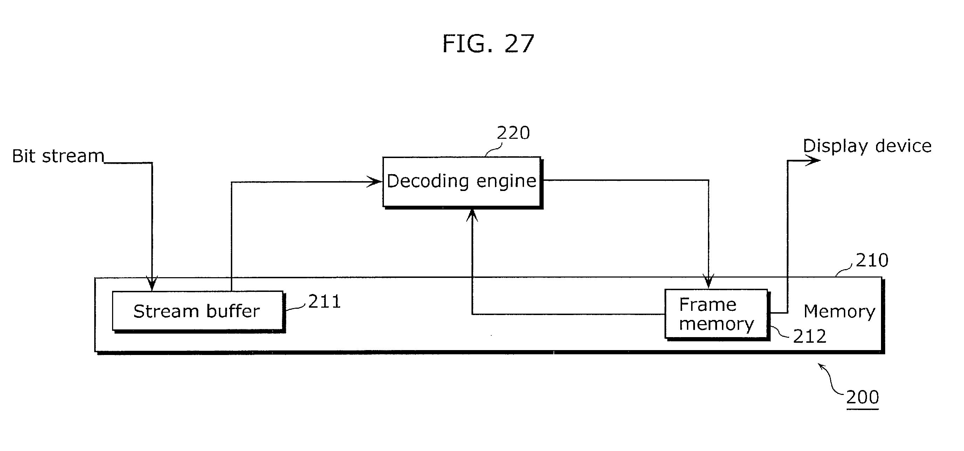

FIG. 27 is a diagram showing a structure of a conventional image decoding apparatus.

The image decoding apparatus 200 includes a memory 210 and a decoding engine 220. The memory 210 includes a stream buffer 211 having an area for storing a bit stream, and a frame memory 212 having an area for storing decoded image data outputted by the decoding engine 220. The image decoding apparatus 200 obtains coded image data such as macroblocks and pictures included in the bit stream sequentially from the beginning side, and stores the coded image data into the stream buffer 211.

The decoding engine 220 sequentially reads out the coded image data from the stream buffer 211 in decoding order, and stores the decoded image data generated by the decoding into the frame memory 212. The decoding engine 220 decodes the coded image data with reference to the decoded image data already stored in the frame memory 212.

Subsequently, the decoded image data stored in the frame memory 212 is outputted to a display device in display order so as to be displayed.

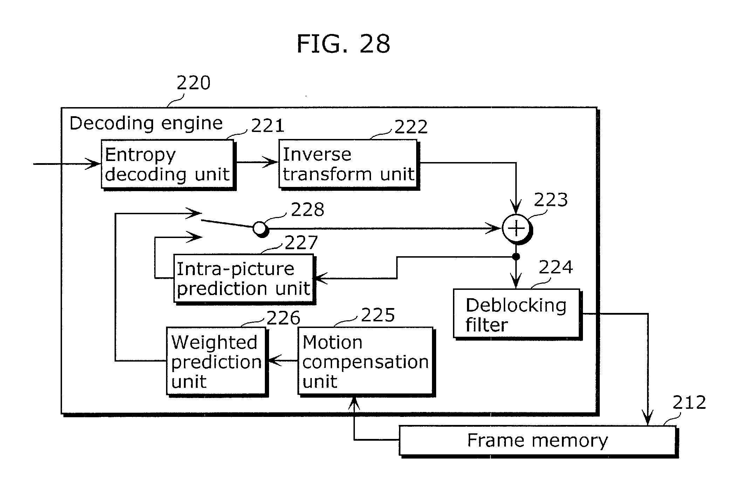

FIG. 28 is a diagram showing a structure of the decoding engine 220.

The decoding engine 220 includes, an entropy decoding unit 221, an inverse transform unit 222, an adder 223, a deblocking filter 224, a motion compensation unit 225, a weighted prediction unit 226, an intra-picture prediction unit 227, and a switch 228.

The entropy decoding unit 221 performs entropy decoding on coded image data to generate quantized data indicating quantized values, and outputs the quantized data to the inverse transform unit 222.

The inverse transform unit 222 performs inverse quantization and inverse orthogonal transform on the quantized data to transform it into difference image data.

The adder 223 generates decoded image data by adding the difference image data outputted from the inverse transform unit 222 and predicted image data outputted from either the weighted prediction unit 226 or the intra-picture prediction unit 227 via the switch 228.

The deblocking filter 224 removes coding distortion included in the decoded image data generated by the adder 223, and stores the decoded image data without the coding distortion into the frame memory 212.

The motion compensation unit 225 reads out the decoded image data stored in the frame memory 212 and performs motion compensation thereon to generate predicted image data, and outputs the predicted image data to the weighted prediction unit 226.

The weighted prediction unit 226 adds weights to the predicted image data outputted from the motion compensation unit 225, and outputs it to the switch 228.

The intra-picture prediction unit 227 performs intra-picture prediction. In other words, the intra-picture prediction unit 227 performs intra-picture prediction on the decoded image data generated by the adder 223 to generate the predicted image data, and outputs it to the switch 228.

In the case where the difference image data to be outputted from the inverse transform unit 222 has been generated by intra-picture prediction, the switch 228 outputs the predicted image data that is outputted from the intra-picture prediction unit 227 to the adder 223. In the other case where the difference image data that is outputted from the inverse transform unit 222 has been generated by inter-picture prediction, the switch 228 outputs the predicted image data that is outputted from the weighted prediction unit 226 to the adder 223.

Recent years have seen increases in definitions and frame rates of images. HD (High Definition) coding and decoding are performed on images at present, but coding and decoding using higher definitions and higher frame rates are to be performed on images. More specifically, moving pictures having a so-called 4k2k resolution are considered for practical use.

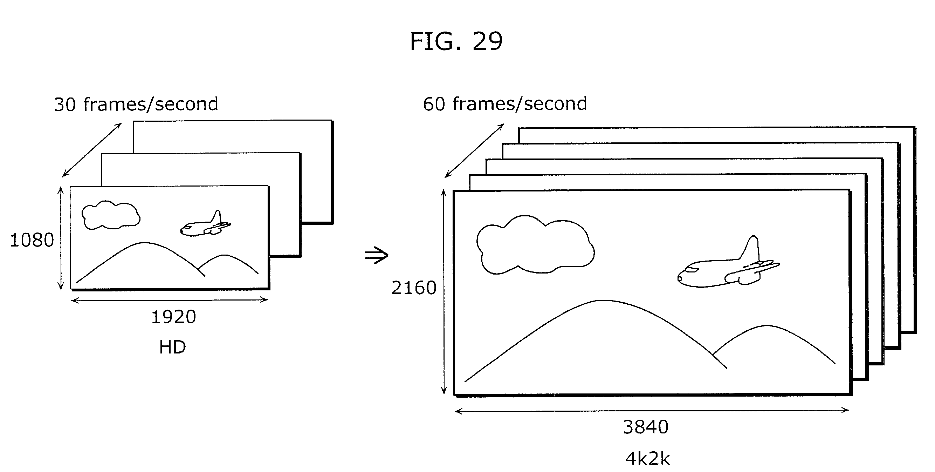

FIG. 29 is an illustration of HD and 4k2k.

HD bit streams are distributed via ground digital broadcasting, BS digital broadcasting, and the like, wherein pictures having a resolution of "1920 x 1080 pixels" are decoded and displayed at a frame rate of 30 frames per second. 4k2k bit streams are scheduled to be experimentally distributed via high BS digital broadcasting from 2011, wherein pictures having a resolution of "3840 x 2160 pixels" are decoded and displayed at a frame rate of 60 frames per second.

In short, a 4k2k bit stream has vertical and horizontal resolutions two times those of an HD bit stream, and has a frame rate two times that of the HD bit stream.

Furthermore, coding and decoding of 8k4k bit streams (7680 x 4320 pixels) having vertical and horizontal resolutions two times those of 4k2k bit streams are to be considered.

Increases in the resolutions and frame rates of images inevitably result in significant increases in the processing loads that are placed on decoding engines of image decoding apparatuses. For example, in the case of decoding a 4k2k bit stream, the decoding engine 220 of the image decoding apparatus 200 shown in FIG. 27 requires an operation frequency of 1 GHz or more that is practically difficult to achieve. This is why parallel decoding processing is considered.

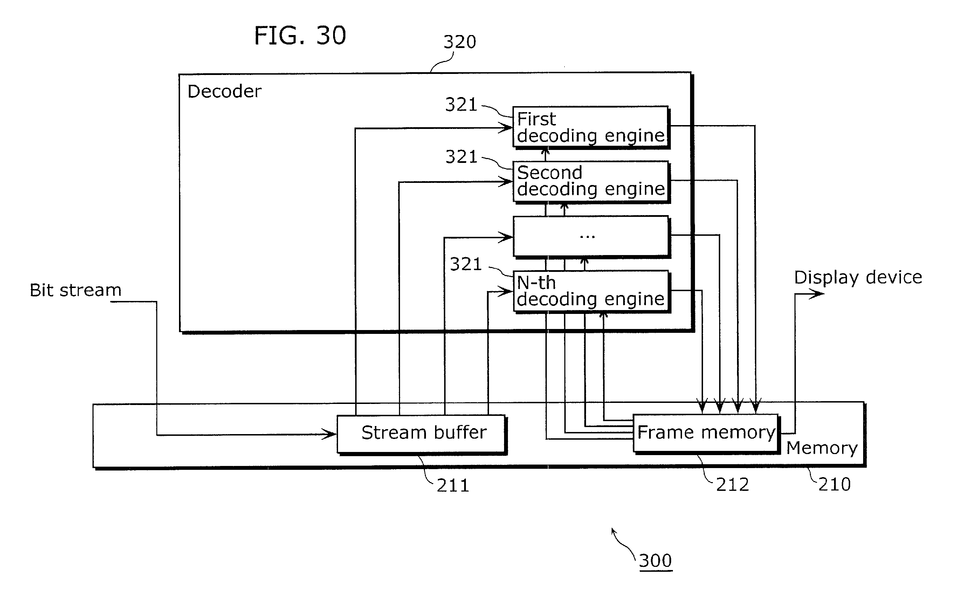

FIG. 30 is a block diagram showing a structure of an image decoding apparatus that executes parallel decoding processing.

An image decoding apparatus 300 includes a memory 210 and a decoder 320. The decoder 320 includes N decoding engines 321 (for example, N = 4) which function similarly to the decoding engine 220 shown in FIGS. 27 and 28. Each of the N decoding engines 321 (first decoding engine 321 to N-th decoding engine 321) extracts a portion to be processed by the decoding engine 321 itself from a bit stream stored in the stream buffer 211, decodes the extracted portion, and outputs it to the frame memory 212.

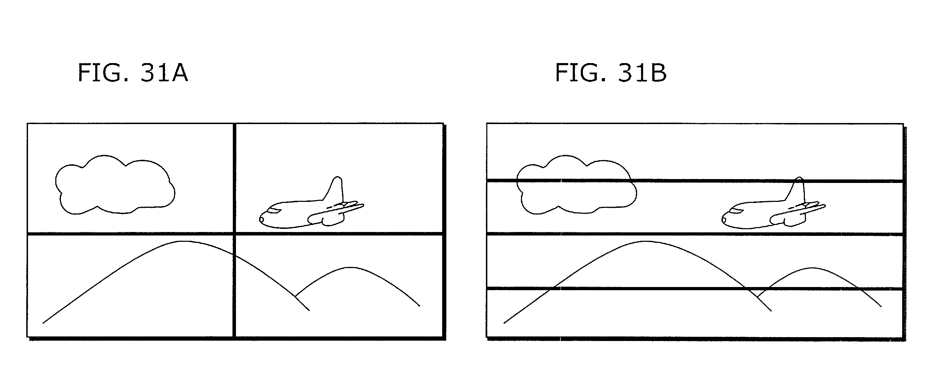

Each of FIGS. 31A and 31B is an illustration for an example of parallel decoding processing.

For example, the image decoding apparatus 300 obtains a bit stream including four segment streams, and stores it into the stream buffer 211. Each of the four segment streams is an independent stream, and as shown in FIG. 31A, indicates a moving picture in the segment among the four segments of a picture. Each of the four decoding engines 321 (for example, N = 4) of the image decoding apparatus 300 extracts the segment stream to be processed by the decoding engine 321 itself from the stream buffer 211, decodes it, and causes the moving picture to be displayed in the segment corresponding to the segment stream.

Otherwise, the image decoding apparatus 300 obtains a bit stream including pictures composed of four slices, and stores it into the stream buffer 211. The four slices are generated by horizontally dividing the picture into four segments as shown in FIG. 31B. Each of the four decoding engines 321 (for example, N = 4) of the image decoding apparatus 300 extracts the slices to be processed by the decoding engine 321 itself from the stream buffer 211, decodes them, and causes the moving picture to be displayed in the segments corresponding to the respective slices.

However, as shown in FIG. 31A, there is a need to restrict moving picture coding methods in order to generate a single bit stream as four segment streams and decode these streams. This necessitates modification in the whole system, requiring heavy loads.

Furthermore, as shown in FIG. 31B, there is a need to restrict moving picture coding methods in order to divide a picture into four segments, code and decode the respective segments.

More specifically, in the MPEG-2 (Moving Picture Experts Group phase 2) that is moving picture coding and decoding standards, slices are always divided at boundaries of MB lines. In addition, in H. 264/AVC, the sizes and positions of slices that are set for pictures are arbitrary, and only one slice may be set for a picture. Accordingly, as shown in FIG. 31B, uniquely setting the positions and sizes of slices necessitates modifying the whole systems in MPEG-2 and H. 264/AVC, requiring heavy loads.

For this, image decoding apparatuses have been considered which decodes, in parallel, bit streams each representing a moving picture coded conforming to the MPEG-2 or H. 264/AVC standards without restricting or modifying the operational standards.

For example, each of the image decoding apparatuses in Patent Literatures 1 and 2 segments each of the pictures in a bit stream generated conforming to MPEG-2 into slices, and performs parallel decoding processing on the respective slices.

The image decoding apparatus in Patent Literature 3 segments each of the pictures in a bit stream generated conforming to H. 264/AVC into MB lines, and performs parallel decoding processing on the respective MB lines.

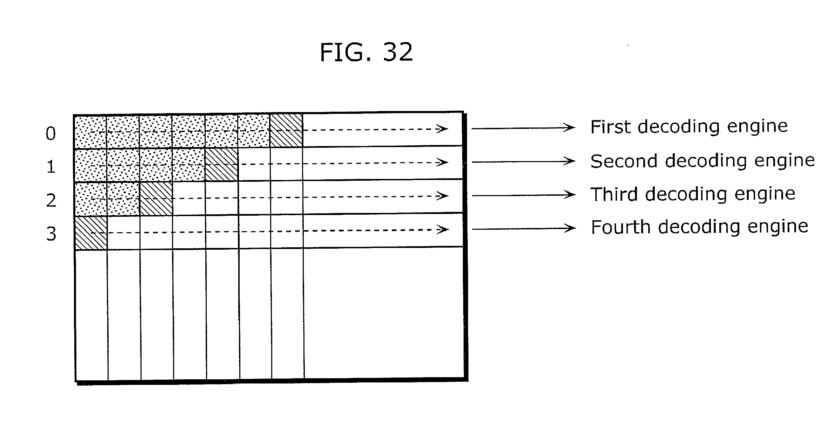

FIG. 32 is an illustration of decoding processing performed by the image decoding apparatus according to Patent Literature 3.

The first decoding engine of the image decoding apparatus decodes the 0th MB line in a picture, the second decoding engine decodes the first MB line in the picture, and the third decoding engine decodes the second MB line in the picture.

In addition, each of the decoding engines sequentially decodes the macroblocks from left end to right end of each MB lines. Here, in the decoding of the macroblodks, a current macroblock to be decoded has dependent relationships with the macroblocks located at the left, left above, above, and right above positions when seen from the current macroblock. In other words, in the decoding of the macroblocks, each of the decoding engines requires information obtained by decoding the macroblocks located at the left, left above, above, and right above positions when seen from the current macroblock. Accordingly, each of the decoding engines starts decoding the current macroblock after the decoding of these required macroblocks is completed. In the case where at least one of these macroblocks located at the left, left above, above, and right above positions of a current macroblock does not exist, decoding of the current macroblock is started after the decoding of the other macroblocks is completed. In other words, the image decoding apparatus executes parallel decoding on the macroblocks located two segments apart vertically and one segment apart horizontally.

The image decoding apparatus in Patent Literature 4 and 5 receives a bit stream generated conforming to H. 264/AVC, inserts a line header to each of the MB lines of the bit stream, and executes parallel decoding processing on the MB lines. Each of the decoding engines of the image decoding apparatus extracts the MB lines to be processed by the decoding engine itself based on the line headers, and decodes the respective MB lines.

### [Citation List]

### [Patent Literature]

[PTL 1] Japanese Unexamined Laid-open Patent Application Publication No. 6-225278
[PTL 2] Japanese Unexamined Laid-open Patent Application Publication No. 8-130745
[PTL 3] Japanese Unexamined Laid-open Patent Application Publication No. 2006-129284
[PTL 4] US Patent No. 7305036, Specification
[PTL 5] EP 1 363 458 A2

### [Summary of Invention]

### [Technical Problem]

However, the image decoding apparatuses according to Patent Literatures 1 to 4 entail a problem of not being able to execute appropriate parallel decoding processing or a problem of requiring a complicated apparatus configuration.

In other words, since each of the image decoding apparatuses according to Patent Literatures 1 and 2 segments each of pictures into slices and executes parallel decoding on the respective slices, each of the image decoding apparatuses cannot execute appropriate parallel decoding processing on a bit stream such as an H. 264/AVC bit stream in which the sizes and positions of the slices are arbitrarily set. In other words, unequal loads are placed on the decoding engines provided to the image decoding apparatus, which disable the image decoding apparatus to effectively execute decoding utilizing parallel processing. For example, in the case where a picture is composed of a slice, the image decoding apparatus cannot segment the picture, and thus one of the decoding engines must decode the whole picture.

Furthermore, each of the image decoding apparatuses according to Patent Literatures 3 and 4 may segment a slice in an H. 264/AVC picture. In this case, each of the decoding engines must have a function for appropriately recognizing each of portions of the segmented slice as a slice, requiring that the image decoding apparatus has a complicated structure.

The present invention has been conceived in view of this, and thus has an object to provide image decoding apparatuses and image decoding methods for appropriately executing parallel decoding processing only requiring a simple configuration.

### [Solution to Problem]

In order to achieve the aformentioned object, an image decoding apparatus, according to the present invention, which decodes a bit stream including coded image data includes: an obtainment unit configured to obtain the bit stream; a stream segmentation unit configured to generate N segment streams by segmenting each of coded pictures included in the bit stream obtained by the obtainment unit into structural units, and assigning, as a portion, each of the structural units to a corresponding one of the N segment streams to be generated, N being an integer equal to or greater than 2; and N decoding units configured to decode, in parallel, the respective N segment streams generated by the stream segmentation unit, wherein, when the stream segmentation unit segments a slice in one of the coded pictures into slice portions and assigns each of the slice portions to the corresponding one of the N segment streams in generating the N segment streams, the stream segmentation unit reconstructs a slice portion group as a new slice so that the slice portion group is recognized as the new slice by an associated one of the N decoding units, the slice portion group including at least one slice portion to be assigned to the corresponding one of the N segment streams.

In this way, each of the coded pictures is segmented into structural units such as plural macroblock lines, and each of the macroblock lines is assigned as a portion of the corresponding one of the segment stream to the associated one of the N decoding units. This allows the respective N decoding units to equally share the decoding processing, and execute appropriate parallel decoding processing. For example even in the case of a coded picture conforming to H. 264/AVC which is composed of a slice, the coded picture is segmented into plural macroblock lines, and thus the load to decode the slice is equally shared by the N decoding units without being placed on one of the decoding units.

Here, when the coded picture is segmented into plural macroblock lines, a slice located across plural macroblock lines may be segmented into plural slice portions, and the respective slice portions may be assigned to mutually different segment streams. In other words, each of the segment streams includes slice portion groups each composed of at least one slice portion that is a chip of a slice, instead of including the whole slice in the coded picture. The slice portion groups may not include a header indicating the beginning of the group, and end information indicating the end.

For this, in the present invention, the stream segmentation unit reconstructs each of the slice portion groups as a new slice. Thus, the decoding engine that decodes the segment stream including the slice portion group can easily recognize the slice portion group as the new slice and decode it appropriately without performing any special processing for appropriately recognizing and decoding the slice portion group. In other words, the present invention eliminates the need to provide each of the N decoding units with a function or a structure for such special processing. For this reason, it is possible to use conventional decoding circuits as the decoding units for decoding the segment streams, and therefore to simplify the structure of the whole image decoding apparatus.

For example, in the case where the slice portion group does not start at a beginning of a slice in the coded picture, the stream segmentation unit reconstructs the slice portion group as the new slice by inserting supplemental information required to decode the new slice to a beginning of the slice portion group.

The supplemental information that is placed at the beginning of the slice portion group included in the bit stream in this way allows the decoding unit that decodes the segment stream to appropriately decode the slice portion group by obtaining and using the supplemental information without performing any special processing.

In addition, the stream segmentation unit may include: a copying unit configured to generate a supplemental information copy by copying the supplemental information that is required to decode the slice and placed at the beginning of the slice in the coded picture; and an insertion unit configured to insert the supplemental information copy regarded as the supplemental information to the beginning of the slice portion group, and the image decoding apparatus may further include an address update unit configured to update address information included in the supplemental information copy to address information indicating an address of a starting macroblock in the slice portion group.

Since the address information indicating the address of the starting macroblock in the slice portion group is included in the supplemental information of the slice portion group, the decoding unit can recognize the correct address of the starting macroblock in the slice portion group by reading out the address information without performing any special processing.

In addition, the slice in the bit stream may include, at the beginning of the slice, supplemental information required to decode the slice, the stream segmentation units may include: N buffers each of which is associated with a corresponding one of the N decoding units; a segment output unit configured to segment each of the coded pictures into structural units, and output each of the structural units to an associated one of the N buffers; and a supplemental information processing unit configured to sequentially obtain data included in the coded picture, and output the supplemental information to the respective N buffers when the supplemental information is included in the sequentially obtained data, each of the N buffers may be configured to: output data included in one of the structural units outputted by the segment output unit upon obtaining the data; receive and hold the supplemental information outputted from the supplemental information processing unit; output the held supplemental information before outputting the data only when the data of the assigned one of the structural units is obtained immediately after the supplemental information; and overwrite new supplemental information on the held supplemental information when the new supplemental information is obtained immediately after the held supplemental information, and each of the N decoding units may be configured to decode the segment stream including the supplemental information and the data of the assigned one of the structural units, the segment stream being outputted from the buffer associated with the decoding unit.

Causing the supplemental information processing unit to output the supplemental information obtainable from the bit stream in this simple manner makes it possible to cause the N buffers to output, with an appropriate timing, only the supplemental information necessary for the N segment streams from among the supplemental information that are otherwise outputted from the N buffers. As a result, it is possible to appropriately insert supplemental information to the beginning of each slice portion group that does not start at the beginning of a slice in the coded picture.

In addition, in the case where the slice portion group does not end at an end of a slice in the coded picture, the stream segmentation unit reconstructs the slice portion group as a new slice by setting end information indicating an end of the slice portion group at the end of the slice portion group.

Since end information is placed at the end of the slice portion group included in the segment stream, the decoding unit that decodes the segment stream can appropriately recognize the end of the slice portion group without performing any special processing.

In addition, the stream segmentation unit may be further configured to: obtain mode information indicating whether or not to perform segmentation; and output each of bit streams obtained by the obtainment unit to a corresponding one of the N decoding units in the case where the mode information indicates that no segmentation should be performed, and the respective N decoding units may be further configured to receive and decode, in parallel, the bit streams outputted by the stream segmentation unit.

In this way, according to mode information, it is possible to switch between processing of segmenting a bit stream into segment streams and decoding these segment streams in parallel and processing of decoding bit streams in parallel. As a result, for example, it is possible to reproduce a 4k2k high-resolution image, and simultaneously reproduce a multi-channel HD image.

It is to be noted that the present invention can be implemented as not only as the image decoding apparatus, but also as a method and a program performed thereby, as a recording medium storing the program, and as a corresponding integrated circuit.

### [Advantageous Effects of Invention]

The image decoding apparatus according to the present invention provides an advantageous effect of being able to allow a simply-structured apparatus to execute appropriate parallel decoding processing.

### [Brief Description of Drawings]

[FIG. 1]

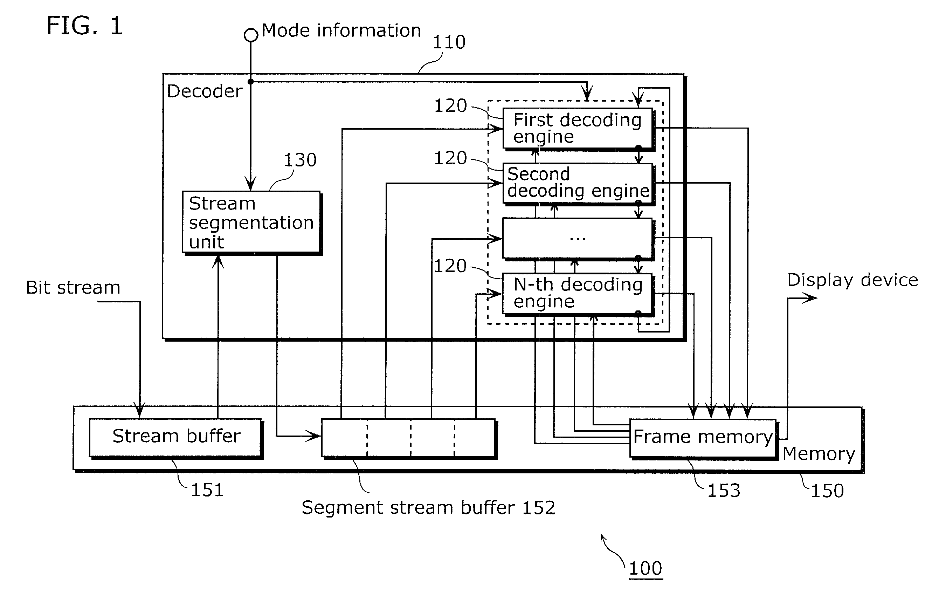

   FIG. 1 is a block diagram showing a structure of an image decoding apparatus according to an embodiment of the present invention.
[FIG. 2A]

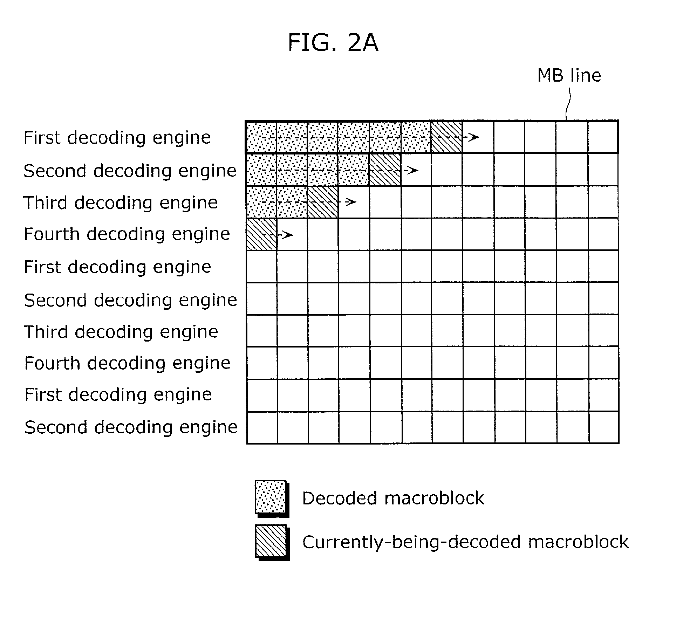

   FIG. 2A is a diagram showing decoding orders of a picture that is not composed of MBAFFs according to the embodiment.
[FIG. 2B]

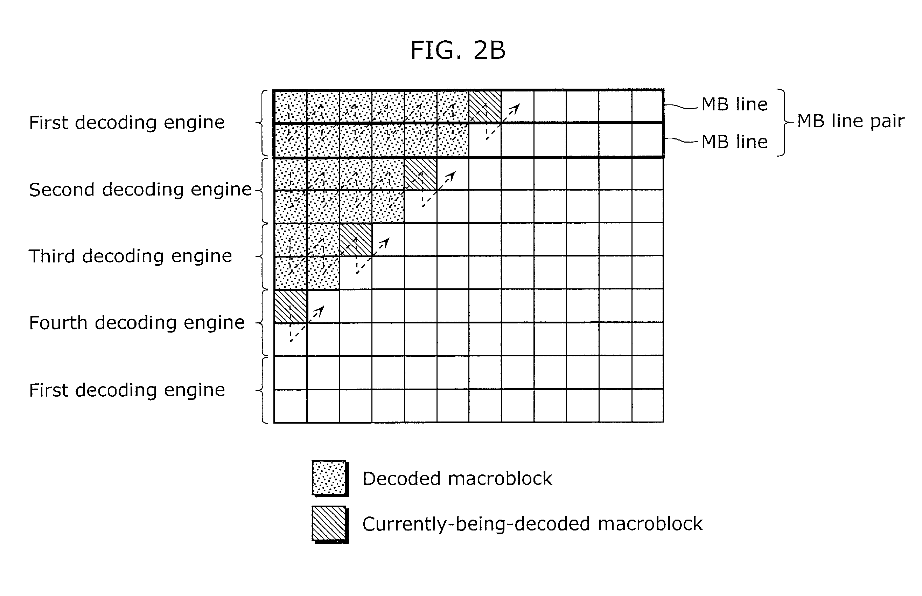

   FIG. 2B is a diagram showing decoding orders of a picture that is composed of MBAFFs according to the embodiment.
[FIG. 3]

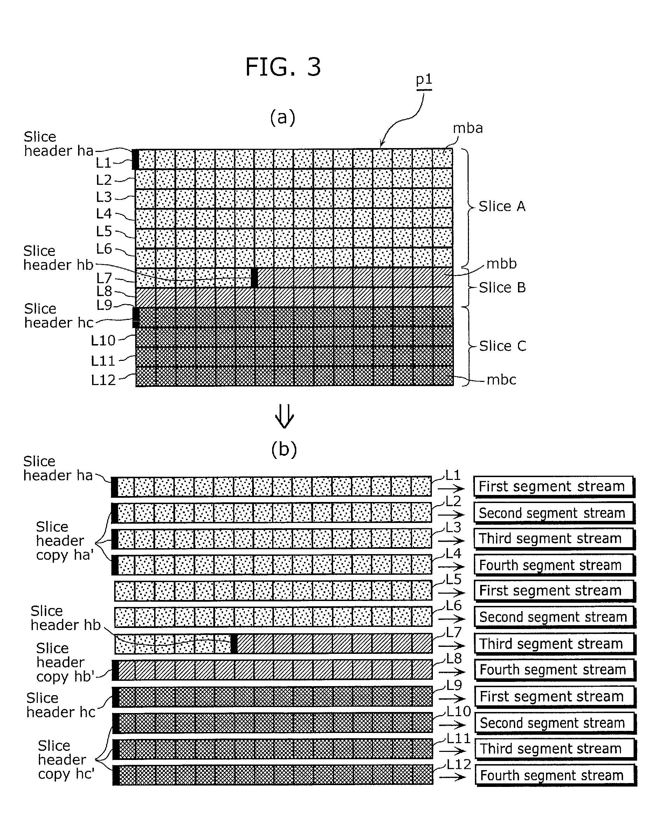

   FIG. 3 is an illustration of processing of inserting slice headers in the picture according to the embodiment.
[FIG. 4]

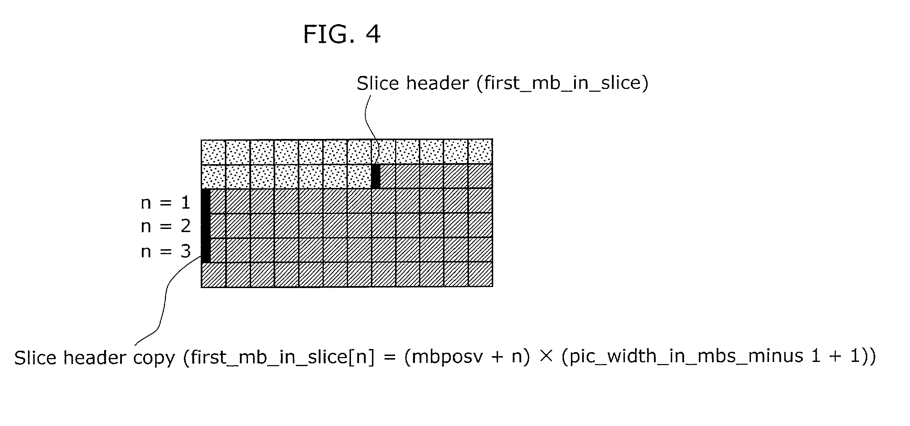

   FIG. 4 is an illustration of processing of updating MB address information for the picture according to the embodiment.
[FIG. 5]

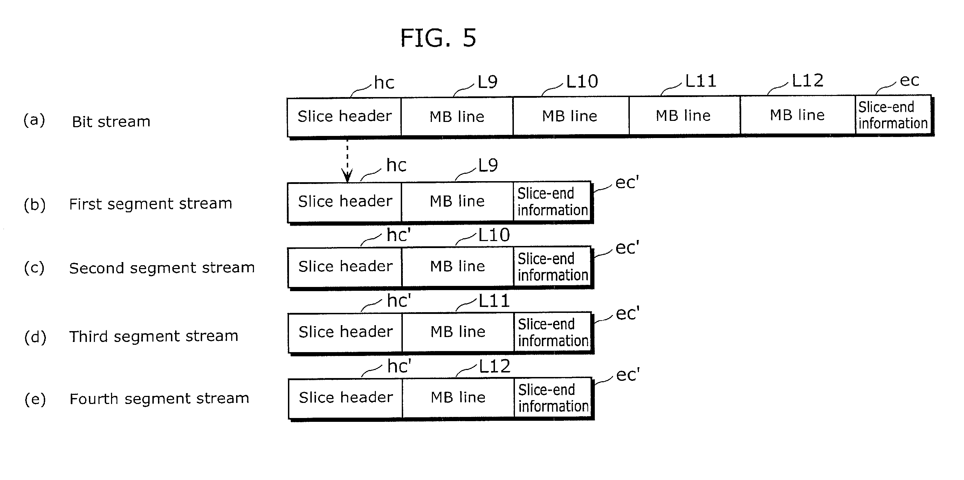

   FIG. 5 is an illustration of slice-end processing performed on the picture according to the embodiment.
[FIG. 6]

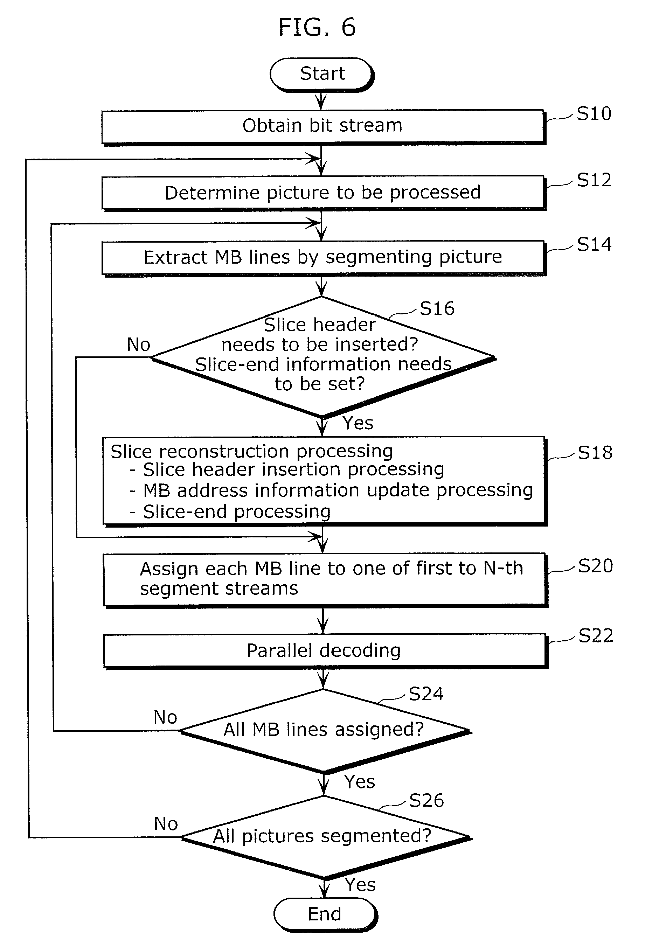

   FIG. 6 is a flowchart indicating overall operations performed by the image decoding apparatus according to the embodiment.
[FIG. 7]

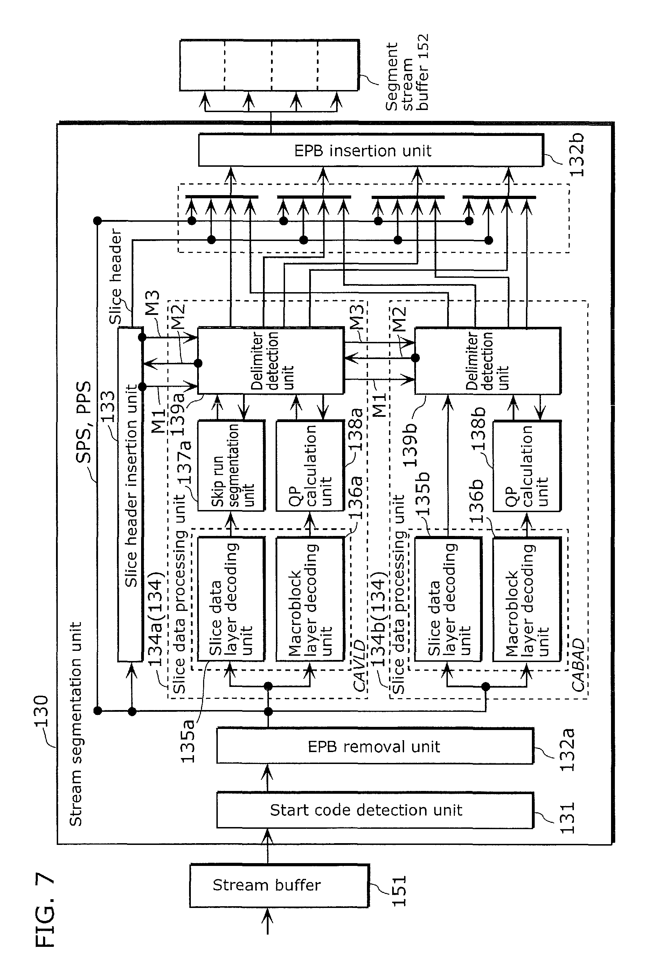

   FIG. 7 is a block diagram showing a structure of a stream segmentation unit according to the embodiment.
[FIG. 8]

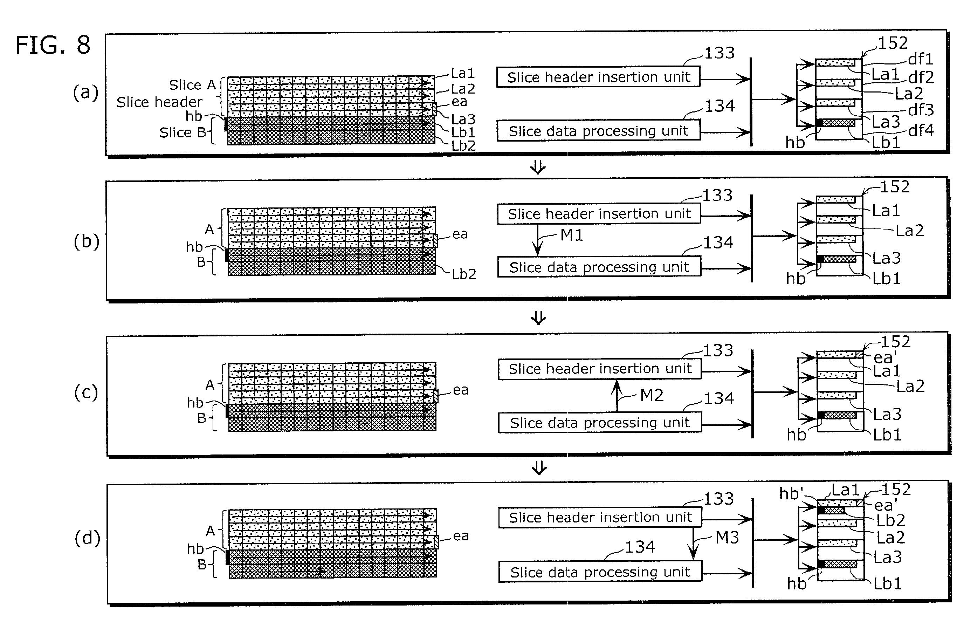

   FIG. 8 is an illustration of operations performed by a slice header insertion unit and a slice data processing unit according to the embodiment.
[FIG. 9]

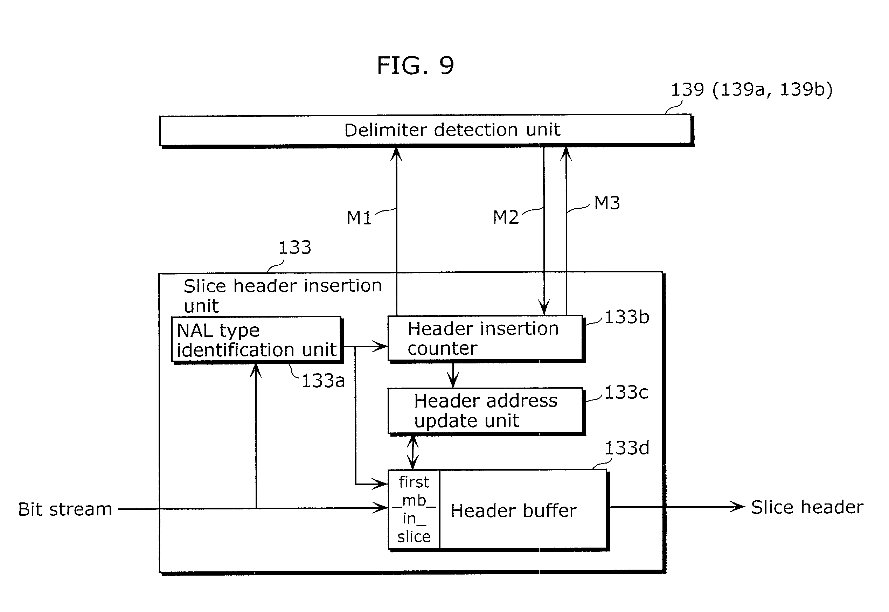

   FIG. 9 is a block diagram showing a structure of the slice header insertion unit according to the embodiment.
[FIG. 10]

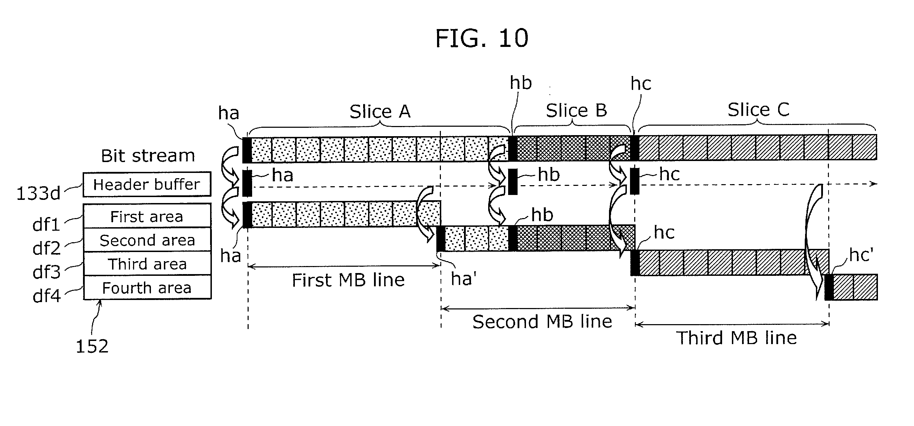

   FIG. 10 is a diagram showing MB lines and slice headers to be assigned to a first area to a fourth area in a segment stream buffer according to the embodiment.
[FIG. 11A]

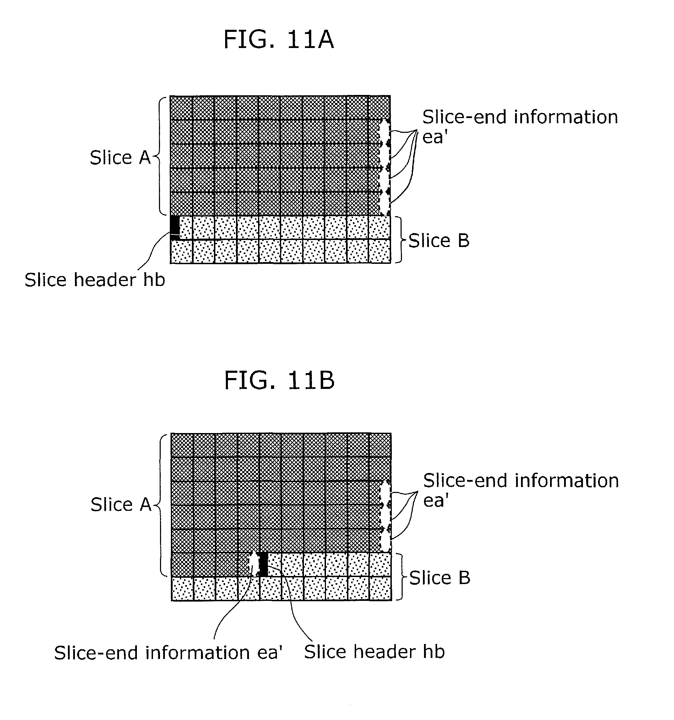

   FIG. 11A is a diagram showing positions at which slice-end information is provided according to the embodiment.
[FIG. 11B]
   FIG. 11B is a diagram showing modified positions at which slice-end information is provided according to the embodiment.
[FIG. 12]

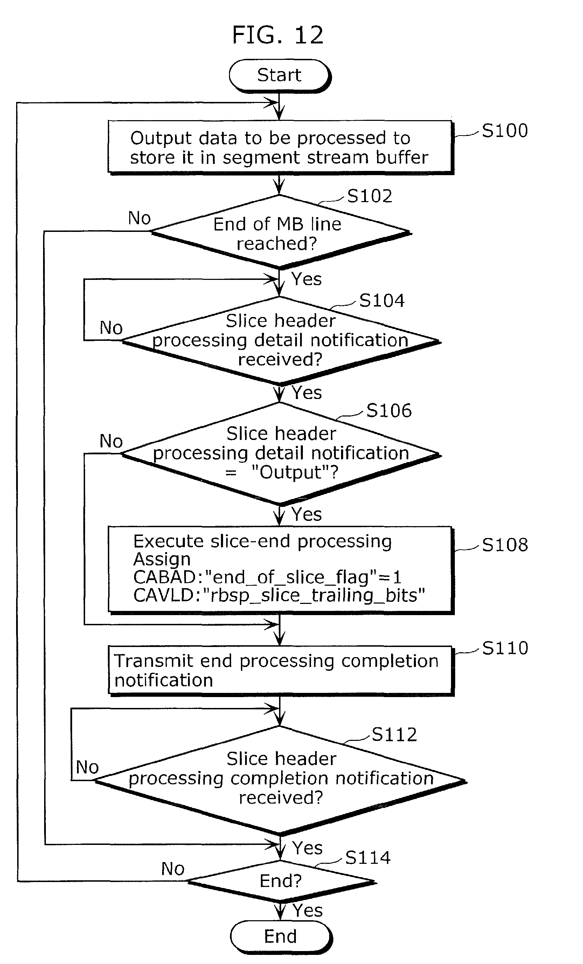

   FIG. 12 is a flowchart indicating operations performed by a delimiter detection unit according to the embodiment.
[FIG. 13A]

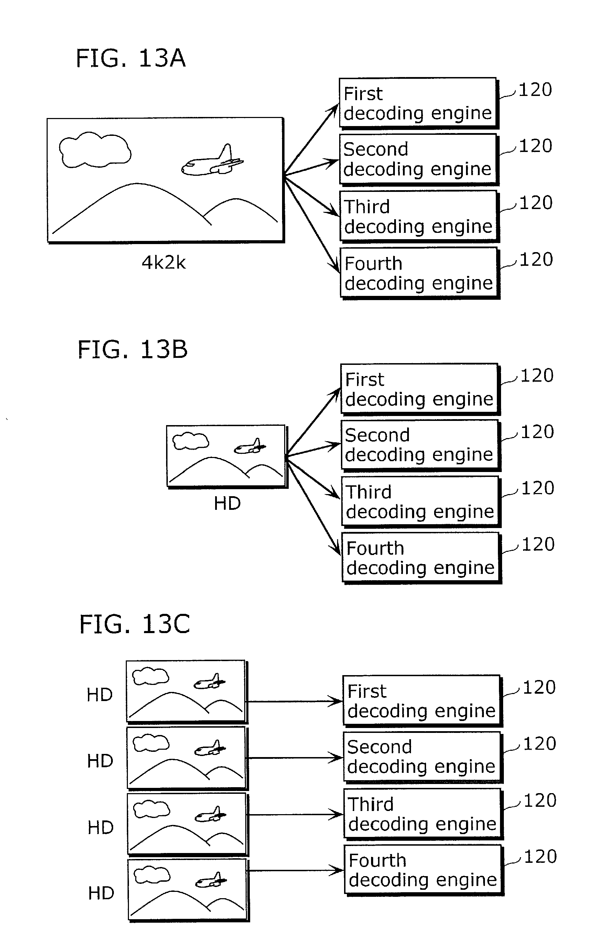

   FIG. 13A is an illustration of high-resolution decoding according to the embodiment.
[FIG. 13B]
   FIG. 13B is an illustration of high-speed decoding according to the embodiment.
[FIG. 13C]
   FIG. 13C is an illustration of multi-channel decoding according to the embodiment.
[FIG. 14]

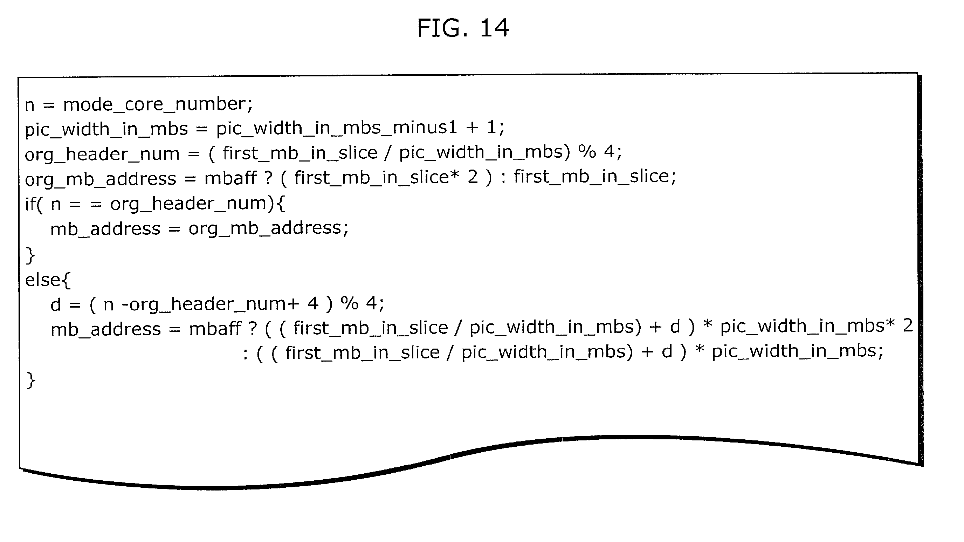

   FIG. 14 is a diagram showing codes that are used by a decoding engine according to Variation 1 of the embodiment for updating MB address information.
[FIG. 15]

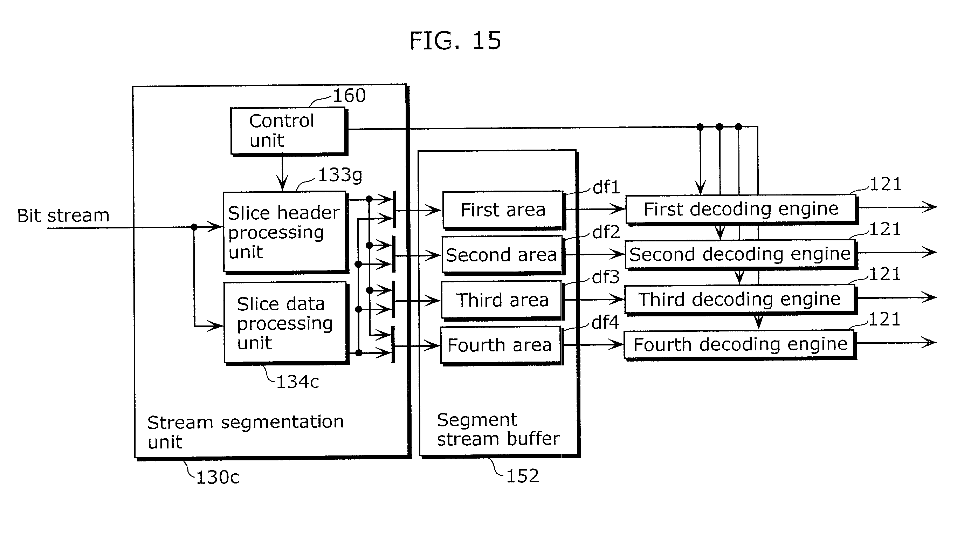

   FIG. 15 is a block diagram showing a stream segmentation unit, a segment stream buffer, and four decoding engines of an image decoding apparatus according to Variation 2 of the embodiment.
[FIG. 16]

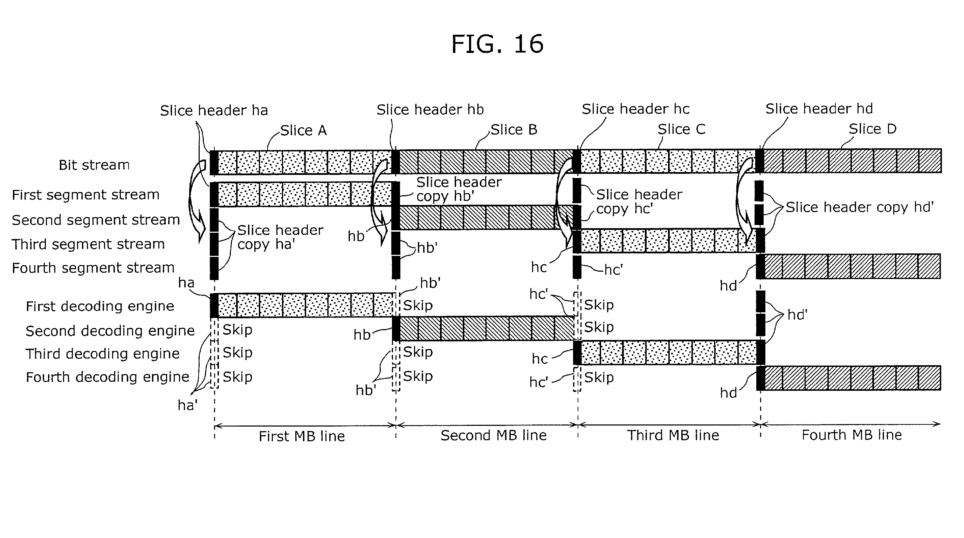

   FIG. 16 is an illustration of operations performed by the stream segmentation unit and the four decoding engines according to Variation 2 of the embodiment.
[FIG. 17]

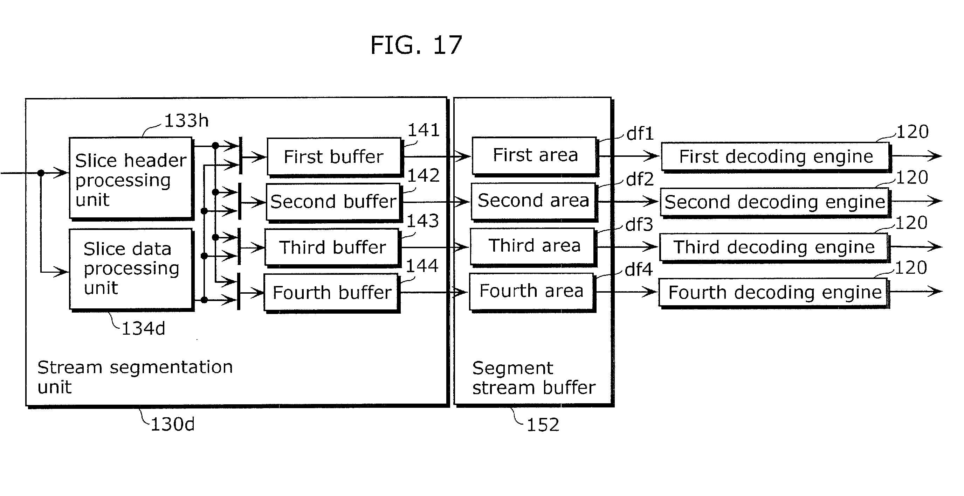

   FIG. 17 is a block diagram showing a stream segmentation unit, a segment stream buffer, and four decoding engines of an image decoding apparatus according to Variation 3 of the embodiment.
[FIG. 18]

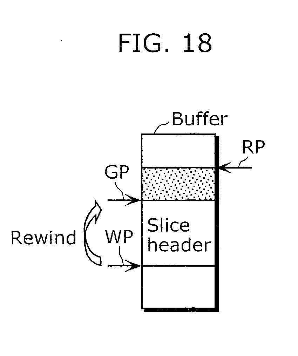

   FIG. 18 is a diagram showing pointers in a buffer according to Variation 3 of the embodiment.
[FIG. 19]

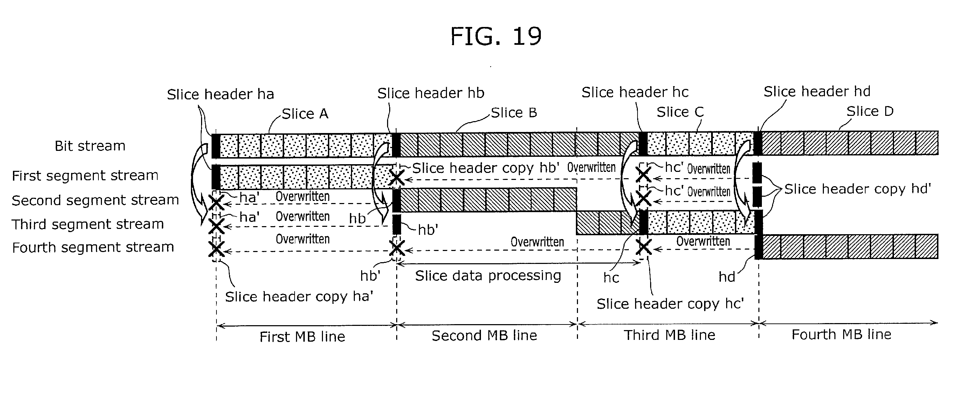

   FIG. 19 is an illustration of operations performed by the stream segmentation unit according to Variation 3 of the embodiment.
[FIG. 20]

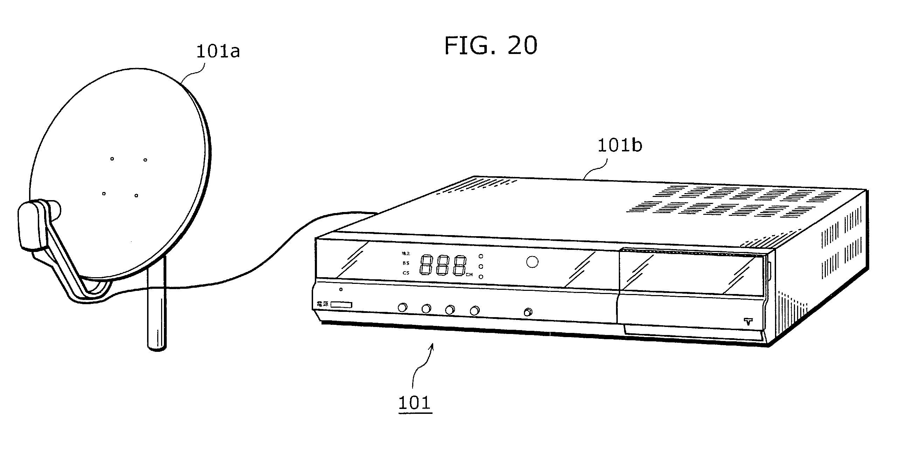

   FIG. 20 is a diagram showing an exemplary application of an image decoding apparatus according to the present invention.
[FIG. 21]

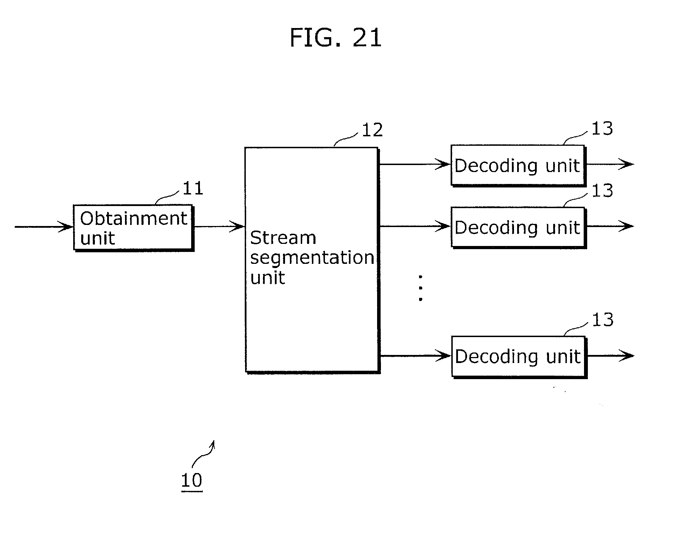

   FIG. 21 is a diagram showing a minimum structure of an image decoding apparatus according to the present invention.
[FIG. 22]

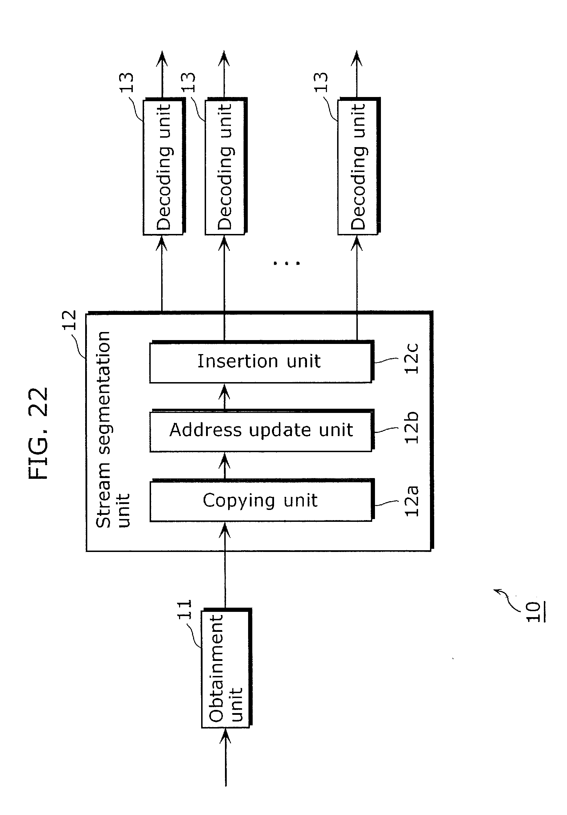

   FIG. 22 is a block diagram showing a structure of a stream segmentation unit according to the present invention.
[FIG. 23]

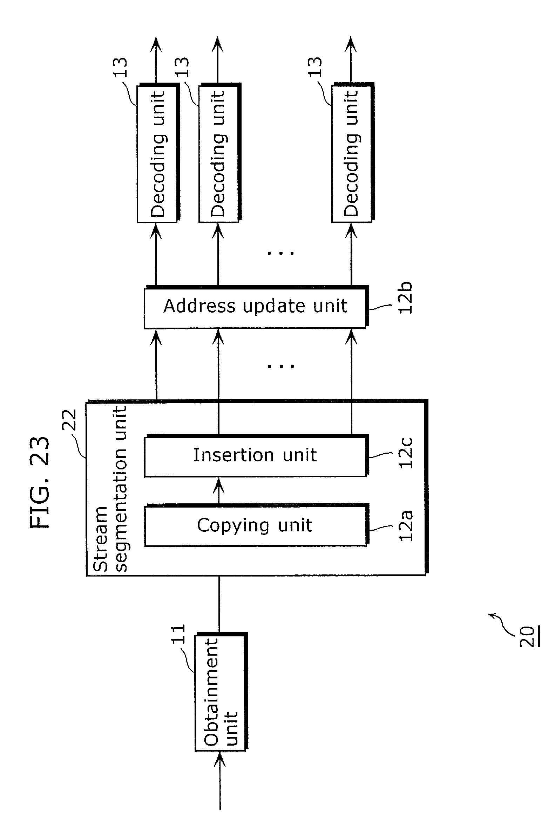

   FIG. 23 is a block diagram showing another minimum structure of an image decoding apparatus according to the present invention.
[FIG. 24]

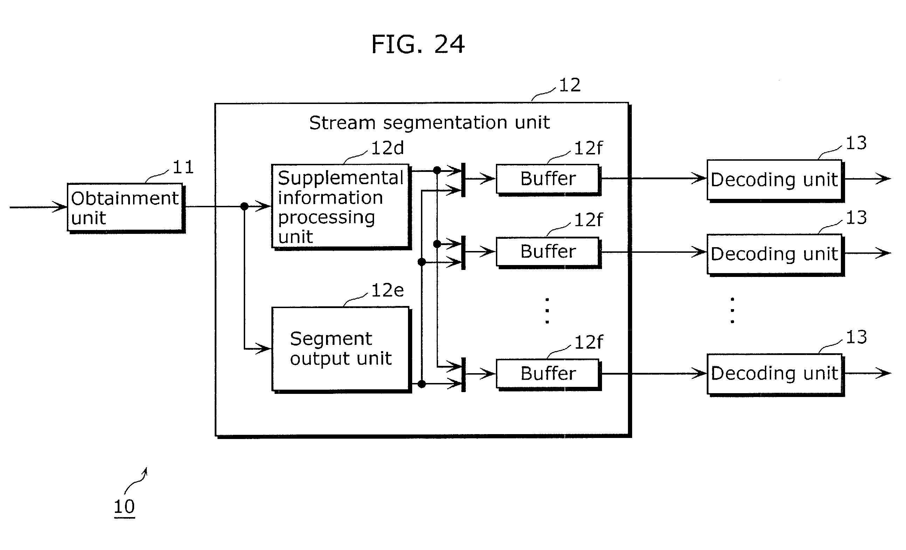

   FIG. 24 is a block diagram showing another structure of a stream segmentation unit according to the present invention.
[FIG. 25]
   FIG. 25 is a diagram showing a structure of a picture to be coded.
[FIG. 26]
   FIG. 26 is a diagram showing a structure of a bit stream.
[FIG. 27]
   FIG. 27 is a diagram showing a structure of a conventional image decoding apparatus.
[FIG. 28]
   FIG. 28 is a diagram showing a structure of a conventional decoding engine.
[FIG. 29]
   FIG. 29 is an illustration of HD and 4k2k.
[FIG. 30]
   FIG. 30 is a block diagram showing a structure of an image decoding apparatus that executes conventional parallel decoding processing.
[FIG. 31A]
   FIG. 31A is an illustration of an exemplary conventional parallel decoding processing.
[FIG. 31B]
   FIG. 31B is an illustration of another exemplary conventional parallel decoding processing.
[FIG. 32]
   FIG. 32 is an illustration of decoding processing performed by a conventional image decoding apparatus.

### [Description of Embodiment]

An image decoding apparatus according to an embodiment of the present invention will be described below with reference to the drawings.

FIG. 1 is a block diagram showing a structure of an image decoding apparatus according to an embodiment of the present invention.

The image decoding apparatus 100 according to the embodiment of the present invention is a simply-structured apparatus which executes appropriate parallel decoding processing, and includes a decoder 110 and a memory 150.

The memory 150 includes an area for storing data generated as intermediate data by the decoder 110, and an area for storing data outputted as final data from the decoder 110.

More specifically, the memory 150 includes a stream buffer 151, a segment stream buffer 152, and a frame memory 153.

The steram buffer 151 stores a bit stream generated by and transmitted from the image coding apparatus. In other words, in this embodiment, this stream buffer 151 is configured as an obtainment unit which obtains the bit stream. The segment stream buffer 152 stores, as the aforementioned intermediate data, N segment streams generated by the decoder 110. The frame memory 153 stores, as the aforementioned final data generated and outputted, N segments of decoded image data generated by the N decoding engines (decoding units) 120. The decoded image data is stored in the frame memory 153. The display device reads the decoded image data, and displays it as a moving picture.

The decoder 110 generates decoded image data by reading out the bit stream stored in the stream buffer 151 in the memory 150 and decodes the bit stream, and stores the decoded image data into the frame memory 153 in the memory 150. In addition, this decoder 110 includes a stream segmentation unit 130, and N decoding engines (first decoding engine to N-th decoding engine) 120.

The decoding engine 120 in this embodiment has a processing capability of decoding two HD images (1920 x 1088 pixels, 60i) respectively corresponding to two channels.

The stream segmentation unit 130 obtains later-described mode information, and segments the bit stream into N segment streams (first segment stream to N-th segment stream) according to the mode information. In other words, the stream segmentation unit 130 in this embodiment segments each of the coded pictures in the bit stream into plural MB lines. Subsequently, the stream segmentation unit 130 generates N segment streams by assigning, as a portion, each of the plural MB lines to a corresponding one of the N segment streams to be generated.

An MB line is a structural unit including a row of plural macroblocks which are arranged in a picture from left end to right end in the horizontal direction. In the case where a picture is not composed of MBAFFs (Macroblock Adaptive Frame Fields), the stream segmentation unit 130 segments each of the pictures into plural MB lines. In the other case where a picture is composed of MBAFFs, the stream segmentation unit 130 regards two MB lines as a one structural unit (hereinafter referred to as an MB line pair), and segments each of the pictures into plural MB pairs. In other words, in the case of the picture composed of MBAFFs, the stream segmentation unit 130 segments each of the pictures into plural MB lines, and assigns, as a portion, each of both the two MB lines belonging to each of the MB line pairs to a corresponding one of the segment streams. The following descriptions are given assuming that each of pictures is not composed of MBAFFs. However, in the case where processes required for pictures composed of MBAFFs are different from those for pictures not composed of MBAFFs in the present invention, descriptions are given of the unique processes for such MBAFFs as necessary. As long as no unique processes are required for such MBAFFs, the following descriptions given of pictures that are not composed of MBAFFs can be interpreted as descriptions given of pictures that are composed of MBAFFs by replacing MB lines with MB line pairs in the descriptions.

In segmenting each of the pictures to plural MB lines, the stream segmentation unit 130 checks whether or not a header exists immediately before an MB line in a bit stream or between two macroblock lines belonging to the MB line, and in the case where a header exists as such, the stream segmentation unit 130 attaches the header to the MB line and assigns it as a portion of the segment stream.

Such segmentation into MB lines by the stream segmentation unit 130 results in segmentation of slices arranged across plural MB lines in each of the pictures. Furthermore, in segmenting a bit stream into N segment streams, the stream segmentation unit 130 removes dependency relationships between macroblocks arranged across N segment streams prior to variable length decoding processing.

Each of the N decoding engines 120 generates N segments of decoded image data by reading out a current segment stream to be processed by the decoding engine 120 itself from the segment stream buffer 152, and performs parallel decoding on the read-out segment streams. For example, the first decoding engine 120 reads out a first segment stream from the segment stream buffer 152, the second decoding engine 120 reads out a second segment stream from the segment stream buffer 152, the third decoding engine 120 reads out a third segment stream from the segment stream buffer 152, and the fourth decoding engine 120 reads out a fourth segment stream from the segment stream buffer 152. Subsequently, the respective first decoding engines 120 to the fourth decoding engine 120 perform parallel decoding on the first to fourth segment streams.

In decoding the segment streams, each of the N decoding engines 120 decodes the segment stream by performing motion compensation as necessary with reference to decoded image data already stored in the frame memory 153.

Furthermore, in decoding a current macroblock which is in a current segment stream and has been coded by intra-picture prediction, the corresponding one of the N decoding engines 120 obtains, as adjacent MB information, information of the decoded macroblocks located at the left above, above, and right above positions with respect to the current macroblock to be decoded from the decoding engines 120 which have decoded the macroblocks. The decoding engine 120 which has obtained the adjacent MB information decodes the current macroblock to be decoded using the adjacent MB information. As in the same manner, in exemplary cases of performing deblocking filtering processing and motion vector prediction processing, the decoding engine 120 obtains, as adjacent MB information, information of the decoded macroblocks located at the left above, above, and right above positions with respect to the current macroblock to be decoded from the decoding engines 120 which have decoded the macroblocks.

For simplicity, the following descriptions in this embodiment are given assuming that N represents 4. In this embodiment, when each of the N (N = 4) decoding engines 120 completes decoding of the macroblocks located at the left above, above, and right above positions with respect to the current macroblock to be decoded, the decoding engine 120 starts decoding the current macroblock to be decoded using the adjacent MB information. As a result, the respective first decoding engine 120 to fourth decoding engine 120 decode, in parallel, the macroblocks located in the MB lines at different horizontal positions.

FIG. 2A is a diagram showing decoding orders of a picture that is not composed of MBAFFs.

In the case of a picture that is not composed of MBAFFs, the first decoding engine 120 decodes the 0th MB line, the second decoding engine 120 decodes the first MB line, the third decoding engine 120 decodes the second MB line, and the fourth decoding engine 120 decodes the third MB line. The K-th (K is an integer equal to or greater than 0) MB line corresponds to the K-th MB line from the top end of a picture. For example, the 0th MB line is located at the 0th position from the top end of the picture.

Here, at the start of decoding pictures, the first decoding engine 120 starts decoding the 0th MB line first. Next, upon completion of the decoding of two macroblocks located at the left end of the 0th MB line, the second decoding engine 120 starts decoding the left-end mackroblocks of the first MB line. Next, upon completion of the decoding of two macroblocks located at the left end of the first MB line, the third decoding engine 120 starts decoding the left-end mackroblocks of the second MB line. Likewise, upon completion of the decoding of two macroblocks located at the left end of the second MB line, the fourth decoding engine 120 starts decoding the left-end mackroblocks of the third MB line.

Accordingly, the (K + 1)-th MB line is decoded in order from left-end macroblock to right-end macroblock with a delay by two macroblocks from when the K-th macroblock line is decoded.

FIG. 2B is a diagram showing decoding orders of a picture that is composed of MBAFFs.

In the case of a picture that is composed of MBAFFs, each of the MB pairs is a structural unit corresponding to two rows (MB lines) of plural macroblocks arranged in a picture from left end to right end in the horizontal direction, as described above. Each MB line pair is coded by field coding in units of two vertically arranged macroblocks (a macroblock pair). In each macroblock pair, the top macroblock is decoded first, and the bottom macroblock is decoded next. In this case, as in the case of a picture that is not composed of MBAFFs, the first decoding engine 120 decodes the 0th MB line pair, the second decoding engine 120 decodes the first MB line pair, the third decoding engine 120 decodes the second MB line pair, and the fourth decoding engine 120 decodes the third MB line pair. The K-th (K denotes an integer equal to or greater than 0) MB line pair is a structural unit corresponding to the K-th two rows (MB lines) of macroblocks from top end of a picture. For example, the 0th MB line is the 0th two MB lines from the top end of the picture.

Here, at the start of decoding pictures, the first decoding engine 120 starts decoding the 0th MB line pair first. Next, upon completion of the decoding of two macroblock pairs located at the left end of the 0th MB line pair, the second decoding engine 120 starts decoding the left-end mackroblocks of the first MB line pair. Next, upon completion of the decoding of two macroblock pairs located at the left end of the first MB line pair, the third decoding engine 120 starts decoding the left top end mackroblocks of the second MB line pair. Likewise, upon completion of the decoding of two macroblock pairs located at the left end of the second MB line pair, the fourth decoding engine 120 starts decoding the left-top-end mackroblocks of the third MB line pair.

Accordingly, the (K + 1)-th MB line pair is decoded in order from left-end macroblock pair to right-end macroblock pair with a delay by two macroblock pairs from when the K-th MB line pair is decoded.

In the case of a picture that is not composed of MBAFFs, it is only necessary that the (K + 1)-th MB line is decoded with a delay by at least two macroblocks from when the K-th MB line is decoded. In the case of a picture that is composed of MBAFFs, it is only necessary that the (K + 1)-th MB line pair is decoded with a delay by at least two macroblock pairs from when the K-th MB line pair is decoded. In short, the picture that is not composed of MBAFFs and the picture that is composed of MBAFFs may be decoded with delays by three macroblocks and three macroblock pairs, respectively. It is possible to minimize time for decoding each of pictures both in the case where the (K + 1)-th MB line is decoded with a delay by two macroblocks from when the K-th MB line is decoded and in the case where the (K + 1)-th MB line pair is decoded with a delay by two macroblock pairs from when the K-th MB line pair is decoded. In each of the exemplary cases where the delay corresponds to three or more macroblocks and the delay corresponds to three or more macroblock pairs, time for decoding the pictures becomes longer as the delay increases.

The image decoding apparatus 100 in this embodiment is characterized by reconstructing, as a new slice, a slice or a segment slice group (slice portions) generated by the stream segmentation unit 130 in the segmentation. The slice reconstruction involves slice header insertion processing, slice end processing, and processing of updating MB address information.

FIG. 3 is an illustration of processing of inserting slice headers in a picture.

For example, the stream segmentation unit 130 segments the picture p1 shown in FIG. 3(a).

The picture p1 is composed of slices A, B, and C, and in other words, MB lines L1 to L12.

The slice A covers MB lines L1 to L7, and includes a slice header ha and plural macroblocks mba arranged sequentially next to the slice header ha. The slice B covers MB lines L7 and L8, and includes a slice header hb and plural macroblocks mbb arranged sequentially next to the slice header hb. The slice C covers MB lines L9 to L12, and includes a slice header hc and plural macroblocks mbc arranged sequentially next to the slice header hc. Each of the slice headers includes supplemental information necessary for decoding the slices having the slice header.

As shown in FIG. 3(b), the stream segmentation unit 130 segments the picture p1 into MB lines. Subsequently, the stream segmentation unit 130 assigns, as a portion, each of the MB lines L1 to L12 sequentially from the top to a corresponding one of the first to fourth segment streams. For example, the stream segmentation unit 130 assigns, as portions of the respective first to fourth segment streams, the MB line L1 to the first segment stream, the MB line L2 to the second segment stream, the MB line L3 to the third segment stream, and the MB line L4 to the fourth segment stream. Subsequently, upon completion of the MB line to the fourth segment stream, the stream segmentation unit 130 repeats such assignment of MB lines starting with the first segment stream. More specifically, the stream segmentation unit 130 assigns, as portions of the respective MB line L5 to MB line L8, the MB line L5 to the first segment stream, the MB line L6 to the second segment stream, the MB line L7 to the third segment stream, and the MB line L8 to the fourth segment stream.

As a result, the first segment stream includes the MB lines L1, L5, and L9 in sequence, the second segment stream includes the MB lines L2, L6, and L10 in sequence, the third segment stream includes the MB lines L3, L7, and L11 in sequence, and the fourth segment stream includes the MB lines L4, L8, and L12 in sequence.

A set of the MB lines L1 to L6 and the top six macroblocks in the MB line L7 that are slice portions corresponds to the slice A, a set of the last 10 macroblocks in the MB line L7 that are slice portions corresponds to the slice B, and a set of MB lines L8 to L12 that are slice portions corresponds to the slice C. Furthermore, in the first segment stream, a slice portion group (the slice A in the first segment stream) is composed of the MB lines L1 and L5 that are slice portions of the slice A. Furthermore, in the second segment stream, a slice portion group (the slice A in the second segment stream) is composed of the MB lines L2 and L6 that are slice portions of the slice A.

Here, simply assigning MB lines to segment streams may be not sufficient to allow the decoding engines 120 to appropriately recognize the slices to be included in the respective segment streams.

For example, the first segment stream includes MB lines L1, L5, and L9 in sequence. In this case, the MB lines L1 and L5 should be recognized as the slice A, and the MB line L9 should be recognized as the slice C. For this purpose, the slice header ha of the slice A must be disposed at the beginning of the MB line L1 that should be the beginning of the slice A in the first segment stream, and the slice header hc of the slice C must be disposed at the beginning of the MB line L9 that should be the beginning of the slice C in the first segment stream. In the example shown in FIG. 3, the slice headers ha and hc are arranged, in advance, at the beginning of the respective MB lines L1 and L9, and thus the only thing that must be performed by the stream segmentation unit 130 is to assign the MB lines L1, L5, and L9 to the first segment stream together with the slice headers ha and hc.

On the other hand, the second segment stream includes MB lines L2, L6, and L10 in sequence. In this case, the MB lines L2 and L6 should be recognized as the slice A, and the MB lines L10 should be recognized as the slice C. For this purpose, the slice header ha of the slice A must be disposed at the beginning of the MB line L2 that should be the beginning of the slice A in the second segment stream, and the slice header hc of the slice C must be disposed at the beginning of the MB line L10 that should be the beginning of the slice C in the second segment stream.

For this purpose, the stream segmentation unit 130 in this embodiment generates slice header copies ha', hb', and hc' by copying the slice headers ha, hb, and hc as necessary and inserts these slice header copies into the segment stream when assigning these MB lines into portions of the segment stream.

For example, the stream segmentation unit 130 generates three slice header copies ha' by copying the slice header ha, and inserts the slice header copies ha' into the positions immediately before the MB lines L2, L3, and L4. Furthermore, the stream segmentation unit 130 generates a slice header copy hb' by copying the slice header hb, and inserts the the slice header copy hb' into the position immediately before the MB lines L8. Furthermore, the stream segmentation unit 130 generates three slice header copies hc' by copying the slice header hc, and inserts the slice header copies hc' into the MB lines L10, L11, and L12.

As a result, in the second segment stream, the slice header copy ha' that is a copy of the slice header ha of the slice A is disposed immediately before the MB line L2 that is the beginning of the slice A, and the slice header copy hc' that is a copy of the slice header hc of the slice C is disposed immediately before the MB line L10 that is the beginning of the slice C. In this way, the second decoding engine 120 can obtain parameters required to decode the respective slices A and C of the second segment stream, based on the slice header copies ha' and hc'.

Next, a description is given of processing of updating MB address information.

The stream segmentation unit 130 updates MB address information included in the slice header copies depending on the insertion positions when inserting the slice header copies into the segment streams as described above.

More specifically, each of the slice headers of the slices that constitute a picture in a bit stream includes MB address information such as "first_mb_in_slice" for identifying the address of the starting macroblock of the slice in the picture. Thus, each of the slice header copies generated by copying such slice headers originally includes the same MB address as the MB address of the copy-source slice header. As a result, each of the slice header copies specifies an erroneous address identified based on the MB address information of the slice header copy when being inserted to a position different from the position of the copy-source slice header in the picture. In other words, the address identified based on the MB address information of the slice header copy specifies the address of the starting macroblock in the slice having the slice header of the copy source instead of specifying the address of the starting macroblock in the slice having the slice header copy in the picture in the segment stream.

For example, the slice header ha of the slice A in the picture p1 includes MB address information identifying the address of the starting macroblock (the starting macroblock in the MB line L1) in the slice A. Thus, the slice header copy ha' generated by copying the slice header ha originally includes MB address information for identifying the address of the starting macroblock in the MB line L1 in the picture p1. As a result, when the slice header copy ha' is inserted immediately before the MB line L2, the address identified based on the MB address information of the slice header copy ha' specifies the address of the starting macroblock in the MB line L1 instead of specifying the address of the starting macroblock (the starting macroblock in the MB line L2) in the slice A having the slice header copy ha' in the second segment stream.

For this reason, the stream segmentation unit 130 in this embodiment updates the MB address information included in the slice header copies as described above.

FIG. 4 is an illustration of processing of updating MB address information.

The stream segmentation unit 130 obtains "pic_width_in_mbs_minus 1" that is information related to the number of macroblocks in the horizontal direction of a picture, from an SPS (Sequence Parameter Set) included in the bit stream.

Furthermore, the stream segmentation unit 130 determines the address of the starting macroblock in the slice having the slice header of the copy source using the MB address information "first_mb_in_slice" included in the slice header of the copy source.

Next, the stream segmentation unit 130 calculates "mbposv" that is a value indicating the order of the MB line in which a current starting macroblock is located in the picture, based on the determined address of the starting macroblock. Here, the value "mbposv" is an integer equal to or greater than 0.

Subsequently, in the case where the MB line located immediately after the position to which the slice header copy is inserted is apart by n lines when seen from the MB line in which the slice header of the copy source is disposed, the stream segmentation unit 130 determines the MB address information of the slice header copy, based on "first_mb_in_slice[n]" = ("mbposv" + n) x ("pic_width_in_mbs_minus 1" + 1).

In the case where the picture is composed of MBAFFs (Macroblock Adaptive Frame Fields), the stream segmentation unit 130 determines the MB address information of the slice header copy, based on "first_mb_in_slice[n]" = ("mbposv" / 2 + n) x ("pic_width_in_mbs_minus 1" + 1).

The stream segmentation unit 130 updates the MB address information originally included in the slice header copy to the MB address information determined as described above. In this way, the address identified based on the MB address information of the slice header copy specifies the correct address of the starting macroblock in the slice having the slice header copy in the picture in the segment stream.

Next, a description is given of slice-end processing.

Slice-end information indicating the end of a slice is set at the end of each of slices that constitute a picture in the bit stream. Thus, as shown in FIG. 3, simply segmenting the picture into MB lines and assigning the respective MB lines to portions of the first to fourth segment streams may not be sufficient to allow the decoding engines 120 to appropriately recognize the ends of the slices in the segment streams.

For this, the stream segmentation unit 130 in this embodiment also executes slice-end processing as well as the slice header insertion processing.

FIG. 5 is an illustration of the slice-end processing.

For example, as shown in FIG. 5(a), the slice C of the picture p1 in the bit stream includes a slice header hc, MB lines L9 to L12, and a slice-end information ec.

The stream segmentation unit 130 segments the picture p1 into MB lines. As a result, as shown in FIG. 5(b) to 5(e), the MB line L9 is assigned to the first segment stream together with the slice header hc, the MB line L10 is assigned to the second segment stream, the MB line L11 is assigned to the third segment stream, and the MB line L12 is assigned to the fourth segment stream.

Furthermore, in the aforementioned slice insertion processing, the stream segmentation unit 130 generates three slice header copies hc' by copying the slice header hc, and inserts the respective three slice header copies hc' into the positions immediately before the MB lines L10, L11, and L12 of the second to fourth segment streams. In addition, in the aforementioned MB address update processing, the stream segmentation unit 130 updates the MB address information included in the slice header copies hc' depending on the positions of the slice header copies hc' to be inserted.

Here, in the slice-end processing, the stream segmentation unit 130 generates slice-end information ec' indicating the end of the slice C (MB line L9) in the first segment stream, the end of the slice C (MB line L10) in the second segment stream, the end of the slice C (MB line L11) in the third segment stream, and the end of the slice C (MB line L12) in the fourth segment stream. Subsequently, the stream segmentation unit 130 sets the generated slice-end information ec' at the positions immediately after the MB lines L9, L10, L11, and L12 of the first to fourth segment streams. The stream segmentation unit 130 discards the slice-end information ec originally included in the bit stream when segmenting the bit stream into MB lines. In addition, since the slice-end information ec is identical to the slice-end information ec', the MB line L12 is finally assigned to the fourth segment stream together with the slice-end information ec' (ec).

In this way, each of the decoding engines 120 can appropriately recognize the ends of the slices in the assigned segment stream.

FIG. 6 is a flowchart indicating the overall operations performed by the image decoding apparatus 100 in this embodiment.

First, the image decoding apparatus 100 obtains a bit stream (Step S10), and determines the current coded pictures to be processed in the bit stream (Step S12). Furthermore, the image decoding apparatus 100 extracts an MB line by segmenting the pictures to be processed (Step S14). In the case where a slice header exists immediately before an MB line or between two macroblocks belonging to the MB line, the MB line is extracted together with the slice header.

Next, prior to assigning the current MB line extracted by the segmentation in Step S14 to one of the first to N-th segment streams to be generated, the image decoding apparatus 100 determines whether or not a slice header needs to be inserted immediately before the MB line, and whether or not slice-end information needs to be set immediately after the MB line already assigned (Step S16).

The image decoding apparatus 100 executes slice reconstruction processing (Step S18) in the case where it determines in Step S16 that either a slice header needs to be inserted, slice-end information needs to be set, or both the insertion and setting need to be performed (Yes in Step S16). In short, the image decoding apparatus 100 executes at least one of the aforementioned slice header insertion processing and slice-end processing. In addition, the image decoding apparatus 100 also executes MB address information update processing when executing the slice header insertion processing.

Subsequently, the image decoding apparatus 100 assigns the MB line to one of the first to the N-th segment streams to be generated (Step S20). This Step S20 is repeatedly performed to sequentially assign MB lines to the first to N-th segment streams, thereby generating the first to the N-th segment streams.

The image decoding apparatus 100 decodes, in parallel, the MB lines assigned to the respective first to N-th streams (Step S22). In the case where no MB line is assigned to any of the first to N-th segment streams, the image decoding apparatus 100 decodes the remaining segment streams other than the segment stream not assigned with any MB line.

Next, the image decoding apparatus 100 determines whether or not all the MB lines in the picture have already been assigned (Step S24), and when it is determined that all the MB lines have not yet been assigned (No in Step S24), repeats the execution of the processing starting with Step S14. In contrast, when it is determined that all the MB lines have already been assigned (Yes in Step S24), the image decoding apparatus 100 further determines whether or not all the pictures in the bit stream have already been segmented (Step S26). Here, when it is determined that all the pictures have not yet been segmented (No in Step S26), the image decoding apparatus 100 repeats the execution of the processing starting with Step S12. In contrast, when it is determined that all the pictures have already been segmented (Yes in Step S26), the image decoding apparatus 100 completes the decoding processing.

The processing operations indicated by the flowchart in FIG. 6 are examples of processing operations performed by the image decoding apparatus 100 according to the present invention. The present invention is not limited to the processing operations shown in this flowchart.

For example, in the flowchart in FIG. 6, the stream segmentation unit 130 of the image decoding apparatus 100 performs slice header insertion processing in the slice reconstruction process of Step S18. However, the stream segmentation unit 130 may directly provide the slice header copies to the decoding engines 120 that require the respective slice headers without performing such slice header insertion processing. In addition, in the flowchart in FIG. 6, the stream segmentation unit 130 performs MB address information update processing in the slice reconstruction process of Step S18. However, the stream segmentation unit 130 may skip such update processing. In this case, for example, the decoding engines 120 update the MB address information of the slice header copies in the segment streams. In addition, in the flowchart in FIG. 6, the stream segmentation unit 130 performs slice-end processing in the slice reconstruction process of Step S18. However, the stream segmentation unit 130 may skip such slice reconstruction processing. In this case, for example, such slice-end processing may be performed on the already-assigned MB lines, after each of the MB lines is assigned to a corresponding one of the first to fourth segment streams in Step S20 and immediately before a next new MB line is assigned to one of the segment streams by the stream segmentation unit 130.

Here, a detailed description is given of a structure and operations of the stream segmentation unit 130.

FIG. 7 is a block diagram showing the structure of the stream segmentation unit 130.

The stream segmentation unit 130 includes a start code detection unit 131, an EPB removal unit 132a, an EPB insertion unit 132b, a slice header insertion unit 133, and slice data processing units 134a and 134b.

The start code detection unit 131 reads out a bit stream from the stream buffer 151, and detects the start code of each of NAL units.

The EPB removal unit 132a removes the EPBs (bytes for emulation prevention) from the bit stream, and outputs the bit stream without the EPBs to the slice data processing units 134a and 134b. Furthermore, the EPB removal unit 132a obtains information such as SPSs (Sequence Parameter Sets) and PPSs (Picture Parameter Sets) that are included in layers higher than the layer of slices in the bit stream, and outputs the information items to the EPB insertion unit 132b so as to enable the EPB insertion unit 132b to insert the information items to the respective four segment streams.

The EPB insertion unit 132b inserts the EPBs removed by the EPB removal unit 132a into the segment streams that are generated by segmenting the bit stream.

The slice header insertion unit 133 executes the aforementioned slice header insertion processing and MB address information update processing. The slice header insertion unit 133 executes the slice header insertion processing at a predetermined timing. The timing is after the slice header insetion unit 133 transmits, to the slice data processing units 134a and 134b, a slice header processing detail notification M1 indicating whether or not slice header insertion processing is to be performed, and when it receives a slice-end processing completion notification M2 from the slice data processing units 134a and 134b. In the subsequent slice header insertion processing, the slice header insertion unit 133 outputs, to the EPB insertion unit 132b, the slice header immediately before a current MB line and the slice header copy with updated MB address information.

The slice data processing units 134a and 134b generate four segment streams by segmenting the bit stream without the EPBs, and output the four segment streams. The segment streams outputted from the slice data processing units 134a and 134b do not include slice headers and slice header copies in the MB lines or at the positions immediately before the MB lines. Here, the slice data processing unit 134a executes processing in accordance with CAVLD (Context-Adaptive Variable Length Decoding), and segments the bit stream generated by CAVLC (Context-Adaptive Variable Length Coding) into four segment streams. Furthermore, the slice data processing unit 134b executes processing in accordance with CABAD (Context-Adaptive Binary Arithmetic Decoding), and segments the bit stream generated by CABAC (Context-Adaptive Binary Arithmetic Coding) into four segment streams.

The slice data processing unit 134a includes a slice data layer decoding unit 135a, a macroblock layer decoding unit 136a, a skip run segmentation unit 137a, a QP calculation unit 138a, and a delimiter detection unit 139a.

The slice data layer decoding unit 135a performs variable length decoding on coded data in the slice data layer in the bit stream. The macroblock layer decoding unit 136a performs variable length decoding on coded data in the macroblock layer in the bit stream. Dependency relationships between adjacent macroblocks are dissolved by such variable length decoding performed by the slice data layer decoding unit 135a and the macroblock layer decoding unit 136a. The slice data layer decoding unit 135a and the macroblock layer decoding unit 136a may decode only information (specifically, nCs (non-zero coefficients) in CAVAC) which is dependent on macroblocks adjacent to a current macroblock to be processed.

The skip run segmentation unit 137a modifies the MB skip run information "mb_skip_run" decoded by the slice data layer decoding unit 135a, codes the modified MB skip run information, and outputs the coded MB skip run information. Here, the MB skip run information indicates the number of macroblocks to be skipped in sequence.

For example, in the case where a set of macroblocks to be skipped in sequence is present across plural MB lines in a slice of the bit stream, the MB skip run information decoded by the slice data layer decoding unit 135a indicates the number of macroblocks to be skipped in sequence in the set. In such case, segmenting a picture into MB lines and assigning the MB lines to separate segment streams changes the number of macroblocks to be skipped in sequence in the respective segment streams.

For this, the skip run segmentation unit 137a determines, for each of MB lines including a portion of such set, the number of macroblocks which constitute the portion included in the MB line and are to be skipped in sequence. Subsequently, the skip run segmentation unit 137a modifies the MB skip run information such that the number of macroblocks indicated by the MB skip run information is the number specified for the MB line.

The QP calculation unit 138a transforms the QP variation "mb_qp_delta" of each macroblock decoded by the macroblock layer decoding unit 136a into a QP value (a value of a quantized parameter), and outputs the QP value. The QP variation is included in the macroblock (current macroblock), and indicates the difference between the QP value of the current macroblock and the QP value of the macroblock located at the left side (the left-side macroblock) with respect to the current macroblock.

In other words, the picture is segmented into MB lines, and when each of the MB lines is assigned to a corresponding one of the segment streams, the adjacent macroblocks having a boundary corresponding to the boundary of the MB lines are assigned to separate segment streams. As a result, the decoding engine 120 which decodes the segment stream including one of the adjacent macroblocks (current macroblock) cannot derive the QP value of the current macroblock based on the QP variation of the current macroblock.

For this, the QP calculation unit 138a calculates the QP value of the current macroblock by adding the QP value of the left-side macroblock to the QP variation of each macroblock (current macroblock) prior to the picture segmentation.

The delimiter detection unit 139a segments the bit stream into four segment streams. More specifically, the delimiter detection unit 139a segments each of the pictures into plural MB lines, and assigns each of the MB lines to a corresponding one of the four segment streams. In the case where a slice header is placed immediately before a current MB line or between two macroblocks belonging to the current MB line, the delimiter detection unit 139a assigns only the MB line to a corresponding one of the segment streams without assigning the slice header. Furthermore, the delimiter detection unit 139a provides each of the segment streams with MB skip run information obtained from the skip run segmentation unit 137a and the QP value obtained from the QP calculation unit 138a.

Furthermore, when the delimiter detection unit 139a detects the end of a current slice in the segment stream and receives the slice header processing detail notification M1 from the slice header insertion unit 133, it executes the aforementioned slice-end processing according to the details indicated by the slice header processing detail notification M1. In addition, upon completion of the slice-end processing, the delimiter detection unit 139a transmits the end processing completion notification M2 to the slice header insertion unit 133.

The slice data processing unit 134b includes a slice header layer decoding unit 135b, a macroblock layer decoding unit 136b, a QP calculation unit 138b, and a delimiter detection unit 139b.

The slice data layer decoding unit 135b performs variable length decoding (arithmetic decoding) on coded data in the slice data layer in the bit stream. The macroblock layer decoding unit 136b performs variable length decoding (arithmetic decoding) on coded data in the macroblock layer in the bit stream. Dependency relationships between adjacent macroblocks are dissolved by such variable length decoding performed by the slice data layer decoding unit 135a and the macroblock layer decoding unit 136b.

As with the aforementioned QP calculation unit 138a, the QP calculation unit 138b transforms the QP variation "mb_qp_delta" of each macroblock decoded by the macroblock layer decoding unit 136b into a QP value (a value of a quantized parameter), and outputs the QP value.

As with the delimiter detection unit 139a, the delimiter detection unit 139b segments the bit stream into four segment streams. At this time, the delimiter detection unit 139b provides each of the segment streams with the QP value obtained from the QP calculation unit 138b. Furthermore, when the delimiter detection unit 139b detects the end of the current slice in the segment stream and receives the slice header processing detail notification M1 from the slice header insertion unit 133, it executes the aforementioned slice-end processing according to the details indicated by the slice header processing detail notification M1. In addition, upon completion of the slice-end processing, the delimiter detection unit 139b transmits the end processing completion notification M2 to the slice header insertion unit 133.

Here, detailed descriptions are given of the slice header insertion unit 133 and the slice data processing units 134a and 134b. It is to be noted that, in the descriptions given of the functions and processing operations that are performed by both the slice data processing units 134a and 134b, the slice data processing units 134a and 134b are not differentiated from each other and referred to as slice data processing units 134.

First, descriptions are given of timings at which the slice header insertion unit 133 inserts slice headers, and timings at which the slice data processing unit 134 inserts slice-end information.

FIG. 8 is an illustration of operations performed by the slice header insertion unit 133 and the slice data processing unit 134.

The slice data processing unit 134 segments each of pictures including a slice A and a slice B into MB lines, and sequentially stores, via the EPB insertion unit 132b, the MB lines from the beginning side into the four areas (the first area df1 to the fourth area df4) included in the segment stream buffer 152. At this time, the slice data processing unit 134 changes the storage destinations of MB lines on a per MB line basis to the first area df1, the second area df2, the third area df3, or the fourth area df4 in this listed order, and repeats this change.

For example, as shown in FIG. 8(a), the slice data processing unit 134 stores an MB line La1 of the slice A to the first area df1 of the segment stream buffer 152, stores a next MB line La2 of the slice A to the second area df2 of the segment stream buffer 152, and stores a next MB line La3 of the slice A to the third area df3 of the segment stream buffer 152. Furthermore, the slice data processing unit 134 stores the MB line Lb1 of a next slice B of the slice A into the fourth area df4 of the segment stream buffer 152.

As a result, an MB line is stored into each of the first area df1 to the fourth area df4 that are the four areas of the segment stream buffer 152. Thus, the segment stream buffer 152 is in a state in which the first area df1 is just ready for storage of a next MB line of the slice B.

In the case where slice-end information ea is placed immediately before the MB line La3 in the bit stream when the slice data processing unit 134 tries to store the MB line La3 into the third area df3, the slice data processing unit 134 stores only the MB line La3 into the third area df3 without storing the slice-end information ea. Subsequently, the slice data processing unit 134 stores slice-end information ea' corresponding to the slice-end information ea into the third area df3 when storing an MB line belonging to a new slice into the third area df3. Here, a slice header hb of the slice B is stored in advance in the fourth area df4 by the slice header insertion unit 133 by the time when the slice data processing unit 134 tries to store the MB line Lb1 into the fourth area df4. In addition, in the picture, another MB line of the slice A exists before the MB line La1 of the slice A. Accordingly, no slice header copy of the slice A is inserted immediately before the MB lines La1, La2, and La3 of the first area df1, the second area df2, and the third area df3.

Furthermore, each time a macroblock is outputted, the delimiter detection units 139a and 139b of the slice data processing unit 134 determines whether or not all the macroblocks in a current MB line have been outputted. As a result, when each of the delimiter detection units 139a and 139b detects that all the macroblocks have been outputted, it detects a boundary between MB lines (the end of the MB line). Each of the delimiter detection units 139a and 139b stops the macroblock output processing each time of detecting an MB line boundary, and notifies the slice header insertion unit 133 of the detection of the MB line boundary.

Accordingly, when the last macroblock of the MB line is stored into the segment stream buffer 152, and the segment stream buffer 152 is in the aforementioned state shown in FIG. 8(a), the slice header insertion unit 133 receives a notification of the detection of the MB line boundary from the delimiter detection units 139a and 139b of the slice data processing unit 134.

As shown in FIG. 8(b), the slice header insertion unit 133 that received the notification of the detection of the MB line boundary transmits the slice header processing detail notification M1 to the slice data processing unit 134. The slice header processing detail notification M1 shows "Output" or "No output" as information for notifying the slice data processing unit 134 of whether or not a slice header is to be outputted to and stored in the segment stream buffer 152 immediately before a next MB line from the slice data processing unit 134 is stored in the segment stream buffer 152. In short, a slice header processing detail notification M1 showing "Output" is a notification urging the slice data processing unit 134 to perform slice-end processing.

For example, the slice header insertion unit 133 determines that a slice header copy hb' is outputted to and stored in the segment stream buffer 152 immediately before a next MB line Lb2 from the slice data processing unit 134 is stored into the segment stream buffer 152. At this time, the slice header insertion unit 133 outputs the slice header processing detail notification M1 showing "Output" to the slice data processing unit 134.

In the case where the slice data processing unit 134 receives a slice header processing detail notification M1 showing "Output", the slice data processing unit 134 generates slice-end information and stores the slice-end information into the segment stream buffer 152, and outputs an end processing completion notification M2 to the slice header insertion unit 133. In the other case where the slice data processing unit 134 receives a slice header processing detail notification M1 showing "No output", the slice data processing unit 134 outputs an end processing completion notification M2 to the slice header insertion unit 133 without storing slice-end information into the segment stream buffer 152.

For example, as shown in FIG. 8(c), in the case where the slice data processing unit 134 receives the slice header processing detail notification M1 showing "Output", the slice data processing unit 134 generates slice-end information ea', and stores the slice-end information ea' into the first area df1 of the segment stream buffer 152. Upon completion of the storage, the slice data processing unit 134 outputs the end processing completion notification M2 to the slice header insertion unit 133.

In the case where the slice header insertion unit 133 receives the end processing completion notification M2 from the slice header processing unit 134 and the slice header processing detail notification M1 outputted immediately before shows "Output", the slice header insertion unit 133 outputs the slice header to store it into the segment stream buffer 152 via the EPB insertion unit 132b, and subsequently outputs a slice header processing completion notification M3 to the slice data processing unit 134. In the case where the slice header processing detail notification M1 outputted immediately before shows "No output", the slice header insertion unit 133 outputs the slice header processing completion notification M3 to the slice data processing unit 134 without storing the slice header into the segment stream buffer 152.

For example, in the case where the slice header insertion unit 133 receives the end processing completion notification M2 from the slice data processing unit 134 when the immediately-outputted slice header processing detail notification M1 shows "Output", the slice header insertion unit 133 generates a slice header copy hb' and stores it into the first area df1 of the segment stream buffer 152 as shown in FIG. 8(d). Subsequently, the slice header insertion unit 133 outputs the slice header processing detail notification M3 to the slice data processing unit 134.

When each of the delimiter detection units 139a and 139b of the slice data processing unit 134 receives the slice header processing completion notification M3 from the slice header insertion unit 133, it re-starts macroblock output processing that has been stopped to output a next MB line and store the MB line into the segment stream buffer 152.

For example, as shown in FIG. 8(d), the slice data processing unit 134 outputs the next MB line Lb2 and stores it into the first area df1 of the segment stream buffer 152.

These processes performed by the slice header insertion unit 133 and the slice data processing unit 134 make it possible to write the data that is the slice-end information, a slice header, and a next MB line at the correct MB line boundary in this listed order, in each of the areas of the segment stream buffer 152.

FIG. 9 is a block diagram showing a structure of the slice header insertion unit 133.

It is to be noted that, in the descriptions given of the functions and processing operations that are performed by both the delimiter detection units 139a and 139b, the delimiter detection units 139a and 139b are not differentiated from each other and referred to as delimiter detection units 139.

The slice header insertion unit 133 includes a NAL type identification unit 133a, a header insertion counter 133b, a header address update unit 133c, and a header buffer 133d.

The NAL type identification unit 133a obtains NAL units of the bit stream, and determines, for each obtained NAL unit, whether or not the NAL unit type shows a slice. Subsequently, in the case where the NAL type identification unit 133a determines that the NAL type shows a slice, it notifies the header buffer 133d and the header insertion counter 133b of the determination.

On receiving the notification from the NAL type identification unit 133a, the header buffer 133d checks whether or not the NAL unit indicated by the notification includes a slice header, and when the NAL unit includes a slice header, extracts the slice header from the NAL unit and stores it. In the case where a next NAL unit includes a new slice header, the header buffer 133d replaces the already-stored slice header with the new slice header. In short, the header buffer 133d always stores the latest slice header.

The header insertion counter 133b counts how many times the delimiter detection unit 139 detects an MB line boundary (end) in the bit stream in order to determine timings for generating and inserting slice header copies. More specifically, the header insertion counter 133b counts values from 0 to 4 (the number of the decoding engines 120). On receiving the notification from the NAL type identification unit 133a, the header buffer 133d checks whether or not the NAL unit indicated by the notification includes a slice header, and when the NAL unit includes a slice header, resets the count value to 0. When an MB line boundary (the end of the MB line) is detected, the header insertion counter 133b counts up the count vale by 1. When the count value reaches 4, and another MB line boundary is detected, the header insertion counter 133b maintains the count value at 4 without any count.

In this way, the header insertion counter 133b updates or maintains the count value and resets the count value to 0 when the MB line boundary is detected and the NAL unit includes the slice header.

When an MB line boundary is detected, the header insertion counter 133b outputs a slice header processing detail notification M1 showing either "Output" or "No output" to the delimiter detection unit 139 according to the count value (including the count value 0 that is reset by the slice header immediately after the MB line boundary) updated by the detection. More specifically, when the count value immediately after the detection of the MB line boundary is within 0 to 3, the header insertion counter 133b outputs a slice header processing detail notification M1 showing "Output", and when the count value is 4, outputs a slice header processing detail notification M1 showing "No output". Furthermore, the header insertion counter 133b outputs a slice header processing detail notification M1 showing "Output" not only when an MB line boundary is detected but also when the count value is reset to 0.

Furthermore, when the header insertion counter 133b outputs the slice header processing detail notification M1 to the delimiter detection unit 139 and receives the end processing completion notification M2 from the delimiter detection unit 139, and in the case where the outputted slice header processing detail notification M1 shows "Output", the header insertion counter 133b causes the header buffer 133d to output the slice header stored in the header buffer 133d. Subsequently, the header insertion counter 133b outputs the slice header processing completion notification M3 to the delimiter detection unit 139. When the slice header is outputted from the header buffer 133d, the slice header insertion unit 133 selects an area as a storage destination in the segment stream buffer 152 according to the value indicated by the MB address information included in the slice header. Subsequently, the slice header insertion unit 133 stores the slice header in the area as the selected storage destination. In contrast, when the outputted slice header processing detail notification M1 shows "No output", the header insertion counter 133b maintains the slice header in a storage status without causing the header buffer 133d to output the slice header stored in the header buffer 133d. Subsequently, as described earlier, the header insertion counter 133b outputs the slice header processing completion notification M3 to the delimiter detection unit 139.

The header address update unit 133c updates MB address information "first_mb_in_slice" of the slice header stored in the header buffer 133d according to the count value (including the count value 0 that is reset by the slice header located immediately after the MB line boundary) of the count value immediately after the detection of the MB line boundary.

For example, the header address update unit 133c does not update MB address information when the count value n is 0, and updates MB address information to ("mbposv" + n) x ("pic_width_in_mbs_minus 1" + 1) when the count value n is not 0. In the case where a current picture is composed of MBAFFs, the header address update unit 133c updates the MB address information according to ("mbposv"/2 + n) x ("pic_width_in_mbs_minus 1" + 1).

FIG. 10 is a diagram showing MB lines and slice headers assigned to the first area df1 to the fourth area df4 in the segment stream buffer 152.

For example, the stream segmentation unit 130 reads out the slices A, B, and C of the bit stream stored in the stream buffer 151 in this listed order.

In this case, first, the header buffer 133d of the slice header insertion unit 133 extracts the slice header ha from the beginning of the slice A, and stores the slice header ha. At this time, the header insertion counter 133b resets the count value to 0. Since the count value is 0, the header buffer 133d outputs the stored slice header ha to store the slice header ha into the first area df1 of the segment stream buffer 152.

When the slice header ha is outputted from the header buffer 133d, the slice data processing unit 134 outputs the first MB line next to the slice header ha of the slice A in the bit stream, and stores the first MB line in the first area df1 of the segment stream buffer 152. As a result, data that are the slice header ha and the first MB line belonging to the slice A are stored in the first area df1 in this listed order.

When the first MB line is outputted from the slice data processing unit 134, the aforementioned header insertion counter 133b counts up the count value to 1. Since the count value at the end of the first MB line is 1, the header buffer 133d outputs the stored slice header ha as a slice header copy ha', and stores the slice header copy ha' to the second area df2 of the segment stream buffer 152. The MB address information of the slice header copy ha' is updated by the header address update unit 133c.

When the slice header copy ha' is outputted from the header buffer 133d, the slice data processing unit 134 outputs the second MB line next to the first MB line in the bit stream, and stores the second MB line into the second area df2 of the segment stream buffer 152.

Here, the second MB line includes plural macroblocks belonging to the slice A, the slice header hb of the slice B, and plural macroblocks belonging to the slice B. First, the delimiter detection unit 139 of the slice data processing unit 134 stores all the macroblocks belonging to the slice A included in the second MB line into the second area df2. Upon completion of the storage, the delimiter detection unit 139 temporally stops the macroblock output processing, and waits for reception of the slice header processing detail notification M1 from the slice header insertion unit 133. At this time, the slice header insertion unit 133 resets the count value to 0 to detect the slice header hb of the slice B, and transmits the slice header processing detail notification unit M1 showing "Output" to the delimiter detection unit 139. On receiving this slice header processing detail notification M1, the delimiter detection unit 139 performs slice-end processing on the end of the slice A in the second area df2, and transmits the end processing completion notification M2 to the slice header insertion unit 133. On receiving this end processing completion notification M2, the slice header insertion unit 133 stores the slice header hb of the slice B into the second area df2, and transmits the slice header completion notification M3 to the delimiter detection unit 139. On receiving this slice header processing completion notification M3, the delimiter detection unit 139 re-starts the output processing that has been stopped, and stores the plural macroblocks belonging to the next slice B included in the second MB line into the second area df2.

As a result, in the second area df2, data that are the macroblocks each corresponding to a potion of the second MB line belonging to the slice A, the slice header hb, and the macroblocks each corresponding to a portion of the second MB line belonging to the slice B are stored next to the slice header copy ha' in this listed sequence.

When the second MB line is outputted from the slice data processing unit 134, the header buffer 133d of the slice header insertion unit 133 extracts the slice header hc from the beginning of the slice C next to the second MB line in the bit stream, and stores the slice header hc. At this time, the header insertion counter 133b resets the count value to 0. Since the count value at the end of the second MB line is 0, the header buffer 133d outputs the stored slice header hc, and stores the slice header hc into the third area df3 of the segment stream buffer 152.

When the slice header hc is outputted from the header buffer 133d, the slice data processing unit 134 outputs the third MB line next to the slice header hc of the slice C in the bit stream, and stores the third MB line in the third area df3 of the segment stream buffer 152. As a result, the slice header hc and the third MB line belonging to the slice C are stored in the third area df3 in this listed order.

When the third MB line is outputted from the slice data processing unit 134, the aforementioned header insertion counter 133b counts up the count value to 1. Since the count value at the end of the third MB line is 1, the header buffer 133d outputs the stored slice header hc as a slice header copy hc', and stores the slice header copy hc' to the fourth area df4 of the segment stream buffer 152. The MB address information of the slice header copy hc' is updated by the header address update unit 133c.

This processing is repeated to sequentially store data into the first area df1 to the fourth area df4 in the segment stream buffer 152. As a result, each of the first segment stream to the fourth segment stream is stored in a corresponding one of the first area df1 to the fourth area df4.

Each of FIG. 11A and FIG. 11B is a diagram showing positions at which the slice-end information is provided.

For example, as shown in FIG.11A, the picture includes a slice A and a slice B, and the starting macroblock in the slice B next to the slice A is at the left end of an MB line. In this case, the delimiter detection unit 139 of the slice data processing unit 134 provides slice-end information ea' of the slice A at the end of the MB line that is in the slice A and located four MB lines before the starting MB line in the slice B, before the slice header hb of the slice B is outputted from the slice header insertion unit 133. Furthermore, the delimiter detection unit 139 of the slice data processing unit 134 provides slice-end information ea' of the slice A at the end of the MB line of the slice A at the end of the MB line that is in the slice A and located three MB lines before the starting MB line in the slice B, before the slice header copy hb' of the slice B is outputted from the slice header insertion unit 133.

In this way, in the case where the starting macroblok in the slice is located at the left end of an MB line, the slice-end information ea' is provided at the end of each of the four MB lines located immediately before the MB line.

For example, as shown in FIG. 11B, the picture includes a slice A and a slice B, and the starting macroblock in the slice B next to the slice A is located at a position other than the left end of an MB line. In this case, the delimiter detection unit 139 of the slice data processing unit 134 provides slice-end information ea' of the slice A at the end of the MB line that is in the slice A and located three MB lines before the MB line including the slice header hb in the slice B, immediately before the slice header copy hb' of the slice B is outputted from the slice header insertion unit 133.

In this way, when the starting macroblock in a slice is located at a position other than the left end of an MB line, slice-end information ea' is provided at the boundary between the slices in the MB line and the end of each of the three MB lines located immediately before the MB line.

Here, a detailed description is given of operations performed by the delimiter detection unit 139.

FIG. 12 is a flowchart indicating operations performed by the delimiter detection unit 139.

First, the delimiter detection unit 139 determines data (such as macroblocks) to be processed from the beginning side of the bit stream, outputs the data to store it into the segment stream buffer 152 (Step S100).

Here, the delimiter detection unit 139 manages the addresses of macroblocks (MB address values) to be outputted. More specifically, when a current macroblock to be outputted is the starting macroblock in a slice in the bit stream, the delimiter detection unit 139 updates the MB address value of the macroblock to be outputted to a value indicated by the MB address information included in the slice header of the slice. Subsequently, the delimiter detection unit 139 increments the MB address value each time a macroblock succeeding the starting macroblock is outputted. Here, MB address values are integer equal to or greater than 0.

Subsequently, when outputting the macroblock in Step S100, the delimiter detection unit 139 selects a storage-destination area in the segment stream buffer 152 according to the MB address value of the macroblock, and stores the macroblock into the storage-destination area. More specifically, in the case where the numbers 1 to 4 are assigned to the respective four areas included in the bit stream buffer 152, the delimiter detection unit 139 selects m-th ((MB address value/W) % N + 1) area, and stores the macroblock into the m-th area.

Here, W is shown by, for example, W = "pic_width_in_mbs_minus 1", and denotes the number of macroblocks in the horizontal direction of the picture. N denotes the total number (N = 4) of the decoding engines 120, and % denotes a remainder when (MB address value/W) is divided by N.

Next, the delimiter detection unit 139 determines whether or not the macroblock outputted in Step S100 is located at the end (boundary) of the MB line, that is, whether or not the last macroblock in the MB line has already been subjected to the macroblock output processing (Step S102). More specifically, the delimiter detection unit 139 determines whether or not the MB address value of the macroblock outputted in Step S100 is a value obtained by (a multiple of W minus 1). When the MB address value is a value obtained by (a multiple of W minus 1), the last macroblock in the MB line has already been subjected to the macroblock output processing, and when the MB address value is not a value obtained by (a multiple of W minus 1), the last macroblock in the MB line has not yet been subjected to the macroblock output processing.

When the delimiter detection unit 139 determines that the last macroblock in the MB line has not yet been subjected to the macroblock output processing (No in Step S102), the delimiter detection unit 139 determines whether or not data to be processed next remains in the bit stream, that is, whether or not to finish the output processing (Step S114). In contrast, when the delimiter detection unit 139 determines that the last macroblock in the MB line has already been subjected to the macroblock output processing (Yes in Step S102), the delimiter detection unit 139 notifies the slice header insertion unit 133 of the detection of the MB line boundary and stops the output processing, and then determines whether or not a slice header processing detail notification M1 is received from the slice header insertion unit 133 (Step S104).

When the delimiter detection unit 139 determines that no slice header processing detail notification M1 has been received (No in Step S104), the delimiter detection unit 139 waits until a slice header processing detail notification M1 is received. In contrast, when the delimiter detection unit 139 determines that a slice header processing detail notification M1 has been received (Yes in Step S104), the delimiter detection unit 139 determines whether or not the slice header processing detail notification M1 shows "Output" (Step S106).

Here, when the delimiter detection unit 139 determines that the slice header processing detail notification M1 shows "Output" (Yes in Step S106), the delimiter detection unit 139 executes the slice-end processing (Step S108). In other words, when the bit stream is decoded by CABAD, the delimiter detection unit 139 sets "1" to "end_of_slice_flag" as the slice-end information. In contrast, when the bit stream is decoded by CAVLD, the delimiter detection unit 139 provides "rbsp_slice_trailing_bit" as the slice-end information.

After the delimiter detection unit 139 determines that the slice header processing detail notification M1 does not show "Output" (No in Step S106) or after the slice-end processing is executed in Step S108, the delimiter detection unit 139 transmits the end processing completion notification M2 to the slice header insertion unit 133 (Step S110). Subsequently, the delimiter detection unit 139 determines whether or not a slice header processing completion notification M3 has been received from the slice header insertion unit 133 (Step S112). Here, when the delimiter detection unit 139 determines that no slice header processing detail notification M3 has been received (No in Step S112), the delimiter detection unit 139 waits until a slice header processing completion notification M3 is received. In contrast, when the delimiter detection unit 139 determines that a slice header processing detail notification M3 has been received (Yes in Step S112), the delimiter detection unit 139 determines whether or not data to be processed next remains in the bit stream, that is, whether or not to finish the output processing (Step S114).

Here, the delimiter detection unit 139 finishes the output processing when it determines to do so (Yes in Step S114). When the delimiter detection nit 139 determines that the output processing should not be finished (No in Step S114), the delimiter detection nit 139 outputs data to be processed next to store the data into the segment stream buffer 152 (Step S100).

In this way, in the image decoding apparatus 100 in this embodiment, each of the coded pictures is segmented into plural MB lines (structural units), and each of the plural MB lines is assigned as a portion of a segment stream to a corresponding one of N decoding engines 120. This makes it possible to equalize loads of decoding processing performed by the N decoding engines 120, thereby being able to appropriately execute parallel decoding processing. For example, even in the case of a coded picture conforming to H. 264/AVC which is composed of a slice, the coded picture is segmented into plural MB lines, and thus the load to decode the slice is equally shared by the N decoding engines 120 without being placed on one of the decoding engine 120.

Here, when a coded picture is segmented into plural MB lines, a slice located across plural MB lines may be segmented into plural slice portions (for example, each of the MB lines L1 to L6 or a set of top six macroblocks in the MB line L7 shown in FIG. 3), and the respective slice portions may be assigned to mutually different segment streams. In other words, the segment stream includes slice portion groups each of which is composed of at least one slice portion that is a chip of a slice (examples of the groups includes MB lines L2 and L6 included in the second segment stream shown in FIG. 3), instead of including the whole slice in the coded picture. In addition, the slice portion group (such as MB lines L2 and L6) may not include a slice header indicating the beginning of the group and slice-end information indicating the end.

For this, in the present invention, the stream segmentation unit 130 reconstructs the slice portion group as a new slice. Thus, the decoding engine 120 that decodes the segment stream including the slice portion group can easily recognize the slice portion group as a new slice and decode it appropriately without performing any special processing for appropriately recognizing and decoding the slice portion group. In short, the present invention eliminates the need to provide each of the N decoding engines 120 with a function or a structure for such special processing, thereby simplifying the structure of the whole image decoding apparatus 100.

Furthermore, the present invention makes it possible to accelerate decoding processing compared to the image decoding apparatus in Patent Literature 3. More specifically, the image decoding apparatus in Patent Literature 3 does not perform, in parallel, variable length decoding and deblocking filtering on a bit stream. In other words, the image decoding apparatus in Patent Literature 3 does not appropriately segment the bit stream. More specifically, data to be generated by segmenting the bit stream is not constructed as a stream that can be decoded by a conventional decoding engine. In contrast, the image decoding apparatus 100 according to the present invention appropriately segments a bit stream into plural segment streams, thereby allowing the respective decoding engines 120 to execute, in parallel, variable length decoding and deblocking filtering in the same manner as the decoding engine 220 shown in FIG. 28. As a result, the image decoding apparatus according to the present invention can accelerate decoding processing.

Furthermore, the present invention provides an advantage of being able to use conventional decoding engines, compared to the image decoding apparatus in Patent Literature 4. More specifically, the image decoding apparatus in Patent Literature 4 inserts a line header to each of the boundaries between MB lines in a bit stream without segmenting the bit stream. Accordingly, each of the plural decoding engines of the image decoding apparatus in Patent Literature 4 must extract the MB line to be processed by the decoding engine itself from the bit stream, based on the line header. At this time, the decoding engine needs to discontinuously access the bit stream to extract the MB line to be processed when the storage location of the MB line to be processed has already been determined, and when the storage position has not yet been determined, needs to access the beginning of the bit stream and skip MB lines that are not the targets to be processed. In contrast, the image decoding apparatus 100 according to the present invention appropriately segments a bit stream into segment streams, thereby allowing each of the decoding engines 120 to decode the bit stream as if it were a normal bit stream in the same manner as the decoding engine 220 shown in FIG. 28. In this way, the image decoding apparatus 100 according to the present invention can use conventional decoding engines, thereby being able to provide an advantageous effect that cannot be achieved by the image decoding apparatus in Patent Literature 4.

Furthermore, the image decoding apparatus 100 in this embodiment executes one of high-resolution decoding, a high-speed decoding, and multi-channel decoding, according to the aforementioned mode information to be inputted to the stream segmentation unit 130.

FIGS. 13A, 13B, and 13C are illustrations of high-resolution decoding, high-speed decoding, and multi-channel decoding, respectively.

As shown in FIG. 13A, when the stream segmentation unit 130 of the image decoding apparatus 100 obtains the mode information directing execution of high-resolution decoding, it segments a 4k2k bit stream into four segment streams as described above, and causes each of the decoding engines 120 to decode a corresponding one of the four segment streams.

For example, each of the four decoding engines 120 has a processing performance sufficient to decode two channels of HD images (1920 x 1088 pixels, 60i), and thus the image decoding apparatus 100 can process the 4k2k image (3840 x 2160 pixels, 60p) in real time.

As shown in FIG. 13B, when the stream segmentation unit 130 of the image decoding apparatus 100 obtains the mode information directing execution of high-speed decoding, it segments an HD bit stream into four segment streams as described above, and causes each of the decoding engines 120 to decode a corresponding one of the four segment streams.

For example, each of the four decoding engines 120 has a processing performance sufficient to decode two channels of HD images (1920 x 1088 pixels, 60i), and thus the image decoding apparatus 100 can process the HD image at a speed 8 (4 x 2) times faster.

In addition, as shown in FIG. 13C, when the stream segmentation unit 130 of the image decoding apparatus 100 obtains mode information directing execution of multi-channel decoding, it causes each of the decoding engines 120 to decode the corresponding one of the bit streams without segmenting each of the plural HD bit streams. In the case of multi-channel decoding, the stream segmentation unit 130 does not copy and insert various NAL units such as SPSs, PPSs, and slices, and only allocates each of the bit streams (channels) to a corresponding one of the areas in the segment stream buffer 152.

For example, each of the four decoding engines 120 has a processing performance sufficient to decode two channels of HD images (1920 x 1088 pixels, 60i), and thus the image decoding apparatus 100 can simultaneously decode eight channels at maximum, that is, eight HD bit streams. Furthermore, in the case of decoding channels (bit streams) equal to or less than the maximum number of channels, the image decoding apparatus 100 can lower the clock frequency of each decoding engine 120, thereby being able to reduce its power consumption. For example, in the case of decoding four channels, the image decoding apparatus 100 causes the first and second decoding engines to decode the two channels, respectively, and causes the remaining third and fourth decoding engines 120 to stop decoding. Otherwise, the image decoding apparatus 100 causes the first decoding engine 120 to the fourth decoding engine 120 to operate at a clock frequency reduced to 1/2.

In this way, the image decoding apparatus 100 in this embodiment switches decoding processing between high-resolution decoding, high-speed decoding, and multi-channel decoding, according to mode information, thereby being able to increase user friendliness. The high-resolution decoding and high-speed decoding performed in the image decoding apparatus 100 are the same in terms of involving segmenting a bit stream into four segment streams, and decoding these in parallel. In short, the high-resolution decoding and high-speed decoding are different only in the resolutions and frame rates (4k2k or HD) of the bit streams to be decoded. Accordingly, the image decoding apparatus 100 switches decoding processing between high-resolution decoding and high-speed decoding according to mode information, and further switches decoding processing between high-resolution decoding and high-speed decoding according to the resolutions and frame rates of the bit streams.

### (Variation 1)

Here, in the above-described embodiment, the header address update unit 133c of the stream segmentation unit 130 updates MB address information included in slice header copies. However, the decoding engines 120 may update MB address information stream in place of the stream segmentation unit 130. In Variation 1, the stream segmentation unit 130 outputs slice header copies without updating the MB address information included in the slice header copies. Subsequently, the decoding engines 120 update the MB address information included in the slice header copies before obtaining and processing the slice header copies.

FIG. 14 is a diagram showing pseudecodes that are used by a decoding engine 120 according to Variation 1 in updating MB address information.

Here, it is assumed that the k-th (k is an integer equal to or greater than 0) MB line included in a picture is decoded by the (k % 4)-th decoding engine 120. A 0th decoding engine 120 is the first decoding engine 120, a first decoding engine 120 is the second decoding engine 120, a second decoding engine 120 is a third decoding engine 120, and a third decoding engine 120 is the fourth decoding engine 120.

First, the decoding engine 120 assigns "n" as the number for the decoding engine 120 itself by executing "n = mode_core_number". Next, the decoding engine 120 assigns "pic_width_in_mbs" as the number of macroblocks in the horizontal direction of the picture by executing "pic_width_in_mbs = pic_widh_in_mbs_minus1 + 1".

Subsequently, the decoding engine 120 assigns "org_header_num" as the number for the decoding engine 120 that should decode the MB line having the slice header of the copy source by executing "org_header_num = (first_mb_in_slice/pic_width_in_mbs) % 4). In short, the "org_header_num"-th decoding engine 120 decodes the MB line having the slice header of the copy source. Furthermore, the decoding engine 120 executes "org_mb_address = mbaff ? (first_mb_in_slice * 2) : first_mb_in_slice", regarding the MB address "org_mb_address" as "first_mb_in_slcie * 2" in the case where the picture is composed of MBAFFs, and executes "org_mb_address = mbaff ? (first_mb_in_slice * 2) : first_mb_in_slice", regarding the MB address "org_mb_address" as "first_mb_in_slice" in the case where the picture is not composed of MBAFFs.

Here, when the number "n" assigned to the decoding engine 120 is equal to "org_header_num", the decoding engine 120 updates the MB address information "mb_address" included in the slice header copy to "org_mb_address" by executing "mb_address = org_mb_address". In contrast, when the number "n" assigned to the decoding engine 120 is not equal to "org_header_num", the decoding engine 120 first determines the order of the slice header copy by executing "d = (n - or_header_num + 4) % 4". Subsequently, in the case where the picture is composed of MBAFFs, the decoding engine 120 updates the MB address information "mb_address" included in the slice header copy to "((first_mb_in_slice/pic_width_in_mbs) + d) * pic_width_in_mbs * 2". In the case where the picture is not composed of MBAFFs, the decoding engine 120 updates the MB address information "mb_address" included in the slice header copy to "((first_mb_in_slice/pic_width_in_mbs) + d) * pic_width_in_mbs"

In this way, in Variation 1, the stream segmentation unit 130 does not update MB address information, thereby making it possible to reduce processing load placed on the stream segmentation unit 130. Therefore, it is possible to simplify the structure of the stream segmentation unit 130. It is to be noted that, in the present invention, timings for updating MB addresses are not limited to the timings at which the stream segmentation unit 130 segments a bit stream. The timings may be after the bit stream is generated, and any other timings before the decoding engine 120 processes slice header copies.

### (Variation 2)

In the above-described embodiment, the stream segmentation unit 130 inserts a slice header to each of segment streams requiring the slice header copy. Here, however, the stream segmentation unit 130 may insert a slice header copy to other segment streams. The stream segmentation unit according to Variation 2 inserts slice header copies to each of the segment streams other than the segment stream including the slice header of the copy source irrespective of whether or not the slice header copies are necessary.

FIG. 15 is a block diagram showing a stream segmentation unit, a segment stream buffer, and four decoding engines of an image decoding apparatus according to Variation 2.

The stream segmentation unit 130c according to Variation 2 includes a slice header processing unit 133g, a slice data processing unit 134c, and a control unit 160. In addition to the aforementioned structural elements, the stream segmentation unit 130c includes a start code detection unit 131, an EPB removal unit 132a, and an EPB insertion unit 132b. However, for simplification, FIG. 15 does not include the structural elements such as the start code detection unit 131.

The segment stream buffer 152 has four areas (the first area df1 to the fourth area df4) for accumulating data that are outputted from the slice header processing unit 133g and the slice data processing unit 134c, and configure segment streams from the accumulated data.

The slice data processing unit 134c includes the same functions and structures as the slice data processing units 134a and 134b in the above-described embodiment. The slice data processing unit 134c segments each of the pictures in a bit stream into MB lines, and stores each of the MB lines into the first area df1, the second area df2, the third area df3, or the fourth area df4 sequentially from the top in this listed order. For example, the slice data processing unit 134c stores the respective MB lines to the first area df1, the second area df2, the third area df3, and the fourth area df4 by switching areas in this listed order to the corresponding areas for storing the respective MB lines. The slice data processing unit 134c stores only MB lines in the areas of the segment stream buffer 152 even when a slice header is placed immediately before the MB lines in a bit stream. In the case where a slice header is in an MB line, the slice data processing unit 134c stores the MB lines without the slice header into the areas of the segment stream buffer 152.

In the case where the slice header processing unit 133g detects that current data is a slice header while sequentially obtaining data included in the bit stream from the beginning side, it simultaneously outputs the slice header to the first area df1 to the fourth area df4 in the segment stream buffer 152. As a result, the slice header is copied to generate four slice headers. More specifically, the slice header of the copy source included in the bit stream is stored into a corresponding one of the first area df1 to the fourth area df4, and the three slice header copies are stored in the respective remaining three areas.

For example, the slice header processing unit 133g simultaneously outputs the slice headers to the first area df1 to the fourth area df4 such that the slice header of the copy source is stored in the first area df1, and the three slice header copies are inserted to the beginning of the respective MB lines and stored in the second area df2, the third area df3, and the fourth area df4.

The processes performed by the slice data processing unit 134c and the slice header processing unit 133g in this way enables output that is from each of the areas in the segment stream buffer 152 and of the segment streams having plural sequential slice headers (a slice header copy or the slice header of the copy source) at the beginning of the MB lines, not only the segment streams that do not include any slice header or includes one slice header at the beginning of the MB lines.

The control unit 160 manages processing performed by the aforementioned slice header processing unit 133g, and counts the number of slice headers (the total number of headers) to be sequentially inserted immediately before the MB lines to be stored in the respective areas of the segment stream buffer 152. Subsequently, the control unit 160 notifies the total number of headers to the decoding engines 121 (all of a first decoding engine 121 to a fourth decoding engine 121) that decode segment streams to be outputted from the areas.

Each of the first decoding engine 121 to the fourth decoding engine 121 decodes a corresponding one of the segment streams to be outputted from the stream segmentation unit 130c. At this time, on receiving the notification of the total number of the headers from the control unit 160, each of the first decoding engine 121 to the fourth decoding engine 121 performs processing according to the total number of the headers. More specifically, in the case where the total number of the headers is 1, the decoding engine 121 processes the slice header inserted to the beginning of the MB lines, while it does not perform such slice header processing when the total number of the headers is 0. In the case where the total number of the headers is 2 or 3, the decoding engine 121 processes only the last slice header skipping processing on the other slice headers among the 2 or 3 slice headers sequentially inserted to the beginning of the MB lines.

FIG. 16 is an illustration of operations performed by the stream segmentation unit 130c and the four decoding engines 121 in Variation 2.

For example, a picture in the bit stream includes a slice A, a slice B, a slice C, and a slice D. Here, the slice A includes a slice header ha and a first MB line, the slice B includes a slice header hb and a second MB line, the slice C includes a slice header hc and a third MB line, and the slice D includes a slice header hd and a fourth MB line.

On obtaining the slice header ha of the bit stream, the slice header processing unit 133g of the stream segmentation unit 130c simultaneously outputs the slice header ha to the first area df1 to the fourth area df4. As a result, the slice header ha is stored in the first area df1 as a portion of the first segment stream, and the respective three slice header copies ha' identical to the slice header ha and serve as portions of the second, third, and fourth segment streams are stored in the second area df2, the third area df3, and the fourth area df4, respectively. Subsequently, the slice data processing unit 134c stores the first MB line as a portion of the first segment stream into the first area df1.

Next, on obtaining the slice header hb of the bit stream, the slice header processing unit 133g simultaneously outputs the slice header hb to the first area df1 to the fourth area df4. As a result, the slice header hb is stored in the second area df2 as a portion of the second segment stream, and the respective three slice header copies hb' identical to the slice header hb and serve as portions of the first, third, and fourth segment streams are stored in the first area df1, the third area df3, and the fourth area df4, respectively. Subsequently, the slice data processing unit 134c stores the second MB line as a portion of the second segment stream in the second area df2.

The stream segmentation unit 130c repeatedly executes the same processing on the slices C and D.

As a result, the first segment stream is outputted from the first area df1 which includes the slice header ha, the first MB line, and the slice header copies hb', hc', and hd'. Likewise, the second segment stream is outputted from the second area df2 which includes the slice header hb, the second MB line, and the slice header copies ha', hc', and hd'. From the third area df3, the third segment stream is outputted which includes the slice header hc, the third MB line, and the slice header copies ha', hb', and hd'. From the fourth area df4, the fourth segment stream is outputted which includes the slice header hd, the fourth MB line, and the slice header copies ha', hb', and hc'.

In the first area df1 to the fourth area df4, the MB lines subsequent to the fourth MB line are sequentially stored. Other MB lines are sequentially arranged after the end of the first to the fourth segment streams shown in FIG. 16. More specifically, slice data equal to or greater than the four MB lines belonging to a slice D follows the fourth MB line, and no new slice header follows the end of the first to the fourth segment streams shown in FIG. 16.

In other words, in the first segment stream, the slice header ha is placed before the first MB line, and the three slice header copies hb', hc, and hd' are sequentially arranged after the first MB line.

In the second segment stream, two slice headers that are the slice header copy ha' and the slice header hb are sequentially arranged before the second MB line, and the two slice header copies hc' and hd' are sequentially arranged after the second MB line.

In the third segment stream, three slice headers that are the slice header copies ha' and hb' and the slice header hc are sequentially arranged before the third MB line, and the slice header copy hd' is placed after the third MB line.

In the fourth segment stream, four slice headers that are the slice header copies ha', hb', and hc', and the slice header hd are sequentially arranged before the fourth MB line.

The decoding engine 121 first receives a notification of the total number of headers "1" from the control unit 160 when decoding the first MB line of the aforementioned first segment stream outputted from the first area df1. As a result, the first decoding engine 121 processes the slice header ha without skipping the processing on the slice header, and decodes the first MB line subsequent to the slice header ha. Next, the first decoding engine 121 receives a notification of the total number of headers "3" from the control unit 160. As a result, the first decoding engine 121 skips processing on the two slice headers (according to the total number of the headers minus 1) after decoding the first MB line. In other words, the first decoding engine 121 skips processing on two slice headers (slice header copies hb' and hc'), processes the slice header copy hd', and decodes the MB line subsequent to the slice header copy hd'.

Likewise, the second decoding engine 121 first receives a notification of the total number of headers "2" from the control unit 160 when decoding the second MB line of the aforementioned second segment stream outputted from the second area df2. As a result, the second decoding engine 121 skips processing on the slice header (according to the total number of the headers minus 1). In other words, the second decoding engine 121 skips processing on the slice header copy ha', processes the slice header hb, and decodes the second MB line subsequent to the slice header hb. Next, the second decoding engine 121 receives a notification of the total number of headers "2" from the control unit 160 again. As a result, the second decoding engine 121 skips processing on the slice header (according to the total number of the headers minus 1). In other words, the second decoding engine 121 skips processing on the slice header copy hc', processes the slice header copy hd', and decodes the MB line subsequent to the copy of the slice header hd'.

Furthermore, the decoding engine 121 first receives a notification of the total number of headers "3" from the control unit 160 when decoding the third MB line of the aforementioned third segment stream outputted from the third area df3. As a result, the third decoding engine 121 skips processing on the two slice headers (according to the total number of the headers minus 1). In other words, the third decoding engine 121 skips processing on the slice header copies ha' and hb', processes the slice header hc, and decodes the third MB line subsequent to the slice header hc. Next, the third decoding engine 121 receives a notification of the total number of headers "1" from the control unit 160. As a result, the third decoding engine 121 processes the slice header copy hd' without skipping the processing on the slice header, and decodes the MB line subsequent to the slice header copy hd'.

Furthermore, the fourth decoding engine 121 first receives a notification of the total number of headers "4" from the control unit 160 when decoding the fourth MB line of the aforementioned fourth segment stream outputted from the fourth area df4. As a result, the fourth decoding engine 121 skips processing on the three slice headers (according to the total number of the headers minus 1). In other words, the fourth decoding engine 121 skips processing on the slice header copies ha', hb', and hc', processes the slice header hd, and decodes the fourth MB line subsequent to the slice header hd.

In this way, in Variation 2, slice header copies are inserted into the segment streams irrespective of whether or not the stream segmentation unit 130c requires the slice header copies. Thus, it is possible to eliminate processing load that is otherwise placed on the stream segmentation unit 130c in determining the necessity of the slice header copies. Furthermore, since it is only necessary for the stream segmentation unit 130c to simply output the received slice headers included in the bit stream, the stream segmentation unit 130c does not need to have a header buffer 133d dissimilarly to the stream segmentation unit 130 in the embodiment. As a result, it is possible to simplify the structure of the stream segmentation unit 130c.

### (Variation 3)

In the above-described Variation 2, each of the segment streams including sequentially arranged slice headers is generated by inserting slice header copies into each of the segment streams other than the segment stream including the copy-source slice header, irrespective of whether or not the slice header copies are necessary. As with Variation 2, in Variation 3, slice header copies are inserted into each of the segment streams other than the segment stream including the copy-source slice header, irrespective of whether or not the slice header copies are necessary. However, in the case where slice headers are inserted in sequence, new slice headers are overwritten on the already inserted slice headers. This prevents plural slice headers from being arranged in sequence in a bit stream.

FIG. 17 is a block diagram showing a stream segmentation unit, a segment stream buffer, and four decoding engines of an image decoding apparatus according to Variation 3.

The stream segmentation unit 130d according to Variation 3 includes a slice header processing unit 133h, a slice data processing unit 134d, and four buffers (a first buffer 141 to a fourth buffer 144). In addition to the aforementioned structural elements, the stream segmentation unit 130d includes a start code detection unit 131, an EPB removal unit 132a, and an EPB insertion unit 132b. However, for simplification, FIG. 17 does not include the structural elements such as the start code detection unit 131.

The slice data processing unit 134d has the functions and structure similar to those of the slice data processing units 134a and 134b in the embodiment. The slice data processing unit 134d segments each of the pictures in the bit stream into MB lines, and outputs, sequentially from the beginning side, each of the MB lines to a corresponding one of the first buffer 141, the second buffer 142, the third buffer 143, and the fourth buffer 144. For example, the slice data processing unit 134d outputs the respective MB lines to the first buffer 141, the second buffer 142, the third buffer 143, and the fourth buffer 144 by switching buffers in this listed order to the corresponding buffers as output destinations of the respective MB line. The slice data processing unit 134d outputs only MB lines to the buffers even when a slice header is placed immediately before an MB line in the bit stream. In the case where a slice header is in an MB line, the slice data processing unit 134d outputs the MB line without the slice header to the buffer.

In the case where the slice header processing unit 133h detects that current data is a slice header while sequentially obtaining data included in the bit stream from the beginning side, it simultaneously outputs the slice header to the first buffer 141 to the fourth buffer 144. As a result, the slice header is copied to generate four slice headers. More specifically, the slice header of the copy source included in the bit stream is stored into a corresponding one of the first buffer 141 to the fourth buffer 144, and the three slice header copies are stored in the respective remaining three buffers.

For example, the slice header processing unit 133h simultaneously outputs the slice headers to the first buffer 141 to the fourth buffer 144 such that the slice header of the copy source is stored in the first buffer 141, and the three slice header copies are stored in the second buffer 142, the third buffer 143, and the fourth buffer 144.

Each of the buffers (the first buffer 141 to the fourth buffer 144) has a capacity sufficient to store at least one slice header, temporally accumulates data outputted from the slice data processing unit 133h and the slice data processing unit 134d, and outputs the data to an associated one of the areas in the segment stream buffer 152. For simplification, the following description is given assuming that each of the buffers has a capacity sufficient to store a slice header and a macroblock.

A buffer temporarily holds a slice header (the copy-source slice header or a slice header copy) obtained from the slice header processing unit 133h. Each time the buffer obtains a new slice header when it already holds a slice header, the buffer overwrites the new slice header on the already held slice header.

When the buffer obtains a macroblock from the slice data processing unit 134d immediately after obtaining the slice header and holds the macroblock, the buffer outputs the slice header and macroblock in this listed order. Furthermore, when the buffer obtains a new macroblock from the slice data processing unit 134d next to the previous macroblock, the buffer sequentially erases the already held slice header and macroblock, and holds and outputs the new macroblock.

In short, the buffer outputs newly obtained macroblocks upon receiving each macroblock. On the other hand, when the buffer obtains a slice header, the buffer holds the slice header instead of outputting it immediately, and outputs the slice header before outputting the obtained macroblock. In the case where the buffer obtains a new slice header when already holding a slice header, the buffer overwrites the new slice header on the already-held slice header.

The processes performed by the slice data processing unit 134d, the slice header processing unit 133h, and the buffer make it possible to accumulate segment streams that do not include sequential slice headers into the respective areas (the first area df1 to the fourth area df4) in the segment stream buffer 152.

As with the above-described embodiment, the respective decoding engines 120 read out the segment streams from the associated areas in the segment stream buffer 152.

FIG. 18 is a diagram showing pointers in a buffer.

When the buffer obtains a slice header from the slice header processing unit 133h and writes it into the storage area, the buffer rewinds the position from a position indicated by a write pointer WP to a position indicated by a guard pointer GP in the storage area, and writes the slice header in a portion starting from the position indicated by the guard pointer GP. In this way, the already stored slice header is erased and overwritten. Normally, the buffer reads out data written in the storage area based on a read pointer RP and outputs the data. Thus, the read pointer RP is set so as not to exceed the guard pointer GP.

Thus, the buffer removes the guard by the guard pointer GP for the read pointer RP only when writing a macroblock into the storage area immediately after writing the slice header into the storage area, and reads out and outputs the written slice header and macroblock. The slice header and macroblock outputted in this way are to be erased and overwritten when a new slice header or macroblock is written.

FIG. 19 is an illustration of operations performed by the stream segmentation unit 130d in Variation 3.

For example, a picture in the bit stream includes a slice A, a slice B, a slice C, and a slice D. Here, the slice A includes a slice header ha and a first MB line, the slice B includes a slice header hb, a second MB line, and a portion of a third MB line, the slice C includes a slice header hc and the remaining portion of the third MB line, and the slice D includes a slice header hd and a fourth MB line.

The slice header processing unit 133h of the stream segmentation unit 130d obtains the slice header ha in the bit stream, and simultaneously outputs the slice header ha to the first buffer 141 to the fourth buffer 144. As a result, the slice header ha is outputted to the first buffer 141 as a portion of the first segment stream, and the respective three slice header copies ha' identical to the slice header ha and portions of the second segment stream, the third segment stream, and the fourth segment stream are outputted to the second buffer 142, the third buffer 143, and the fourth buffer 144, respectively. As a result, the slice header ha is written into the first buffer 141, and the slice header copy ha' is written into each of the second buffer 142 to the fourth buffer 144.

Subsequently, the slice data processing unit 134d outputs, sequentially from the beginning side, the macroblocks included in the first MB line as a part of the first segment stream to the first buffer 141. The macroblocks are written immediately after the slice header ha in the first buffer 141 in this way, which removes the guard of the read pointer RP in the first buffer 141. Accordingly, the first buffer 141 outputs the slice header ha and the starting macroblock in the first MB line to the first area df1 in the segment stream buffer 152. When the second and subsequent macroblocks following the starting macroblock in the first MB line are sequentially written in the first buffer 141 after the starting macroblock is written in the first buffer 141, the slice header ha and the starting macroblock that have already been written in the first buffer 141 are erased and overwritten by the second and subsequent macroblocks. Each time the first buffer 141 obtains one of the second and subsequent macroblocks in the first MB line, the buffer 141 erases already written data and outputs the one of the second macroblock and subsequent macroblocks to the first area df1 in the segment stream buffer 152.

The stream segmentation unit 130d performs such processing in this way to store the slice header ha and the first MB line into the first area df1 of the segment stream buffer 152 via the first buffer 141.

Next, the slice header processing unit 133h obtains the slice header hb in the bit stream, and simultaneously outputs the slice header hb to the first buffer 141 to the fourth buffer 144. As a result, the slice header hb is outputted to the second buffer 142 as a portion of the second segment stream, and the respective three slice header copies hb' identical to the slice header hb and portions of the first segment stream, the third segment stream, and the fourth segment stream are outputted to the first buffer 141, the third buffer 143, and the fourth buffer 144, respectively.

As a result, the slice header hb is written into the second buffer 142, and the slice header copy hb' is written into each of the first buffer 141, the third buffer 143, and the fourth buffer 144. In short, each of the slice headers already written in the second buffer 142 to the fourth buffer 144 is overwritten by the slice header hb or the slice header copy hb'.

Subsequently, the slice data processing unit 134d outputs, sequentially from the beginning side, the macroblocks included in the second MB line as a part of the second segment stream to the second buffer 142. The macroblocks are written immediately after the slice header hb in the second buffer 142 in this way, which removes the guard of the read pointer RP in the second buffer 142. Accordingly, the second buffer 142 outputs the slice header hb and the starting macroblock in the second MB line to the second area df2 in the segment stream buffer 152. When the second and subsequent macroblocks following the starting macroblock in the second MB line are sequentially written in the second buffer 142 after the starting macroblock is written in the second buffer 142, the slice header hb and the starting macroblock that have already been written in the second buffer 142 are erased and overwritten by the second and subsequent macroblocks. Each time the second buffer 142 obtains one of the second and subsequent macroblocks in the second MB line, the buffer 142 erases already written data and outputs the one of the second and subsequent macroblocks to the second area df2 in the segment stream buffer 152.

The stream segmentation unit 130d performs such processing in this way to store the slice header hb and the second MB line into the second area df2 of the segment stream buffer 152 via the second buffer 142.

Here, the slice B includes the second MB line and three macroblocks in the third MB line. Accordingly, the slice data processing unit 134d outputs the second MB line and then outputs, sequentially from the beginning side, the three macroblocks that are included in the third MB line as portions of the third segment stream to the third buffer 143.

The macroblocks are written immediately after the slice header hb' in the third buffer 143 in this way, which removes the guard of the read pointer RP in the third buffer 143. Accordingly, the third buffer 143 outputs the slice header copy hb' and the starting macroblock in the third MB line to the third area df3 in the segment stream buffer 152. When the second and subsequent macroblocks following the starting macroblock in the third MB line are sequentially written in the third buffer 143 after the starting macroblock is written in the third buffer 143, the slice header hb' and the starting macroblock that have already been written in the third buffer 143 are erased and overwritten by the second and subsequent macroblocks. Each time the second buffer 143 obtains one of the second and subsequent macroblocks in the third MB line, the buffer 143 erases already written data and outputs the one of the second and subsequent macroblocks to the third area df3 in the segment stream buffer 152.

The stream segmentation unit 130d performs such processing in this way to store the remaining three macroblocks in the slice B included in the third MB line into the third area df3 of the segment stream buffer 152 via the third buffer 143.

Next, the slice header processing unit 133h obtains the slice header hc in the bit stream, and simultaneously outputs the slice header hc to the first buffer 141 to the fourth buffer 144. As a result, the slice header hc is outputted to the third buffer 143 as a portion of the third segment stream, and the respective three slice header copies hc' identical to the slice header hc and portions of the first segment stream, the second segment stream, and the fourth segment stream are outputted to the first buffer 141, the second buffer 142, and the fourth buffer 144, respectively.

As a result, the slice header hc is written into the third buffer 143, and the slice header copy hc' is written into each of the first buffer 141, the second buffer 142, and the fourth buffer 144. In short, each of the slice headers already written in the first buffer 141 and the fourth buffer 144 is overwritten by the slice header copy hc'.

Subsequently, the slice data processing unit 134d outputs, sequentially from the beginning side, the macroblocks included in the third MB line as portions of the third segment stream to the third buffer 143. The macroblocks are written immediately after the slice header hc in the third buffer 143 in this way, which removes the guard of the read pointer RP in the third buffer 143. Accordingly, the third buffer 143 outputs the slice header hc and the starting macroblock in the slice C to the third area df3 in the segment stream buffer 152. When the second and subsequent macroblocks following the starting macroblock in the slice C are sequentially written in the third buffer 143 after the starting macroblock is written in the third buffer 143, the slice header hc and the starting macroblock that have already been written in the third buffer 143 are erased and overwritten by the second and subsequent macroblocks. Each time the third buffer 143 obtains one of the second and subsequent macroblocks in the slice C, the buffer 143 erases already written data and outputs the one of the second and the subsequent macroblocks to the third area df3 in the segment stream buffer 152.

The stream segmentation unit 130d performs such processing in this way to store the slice header hc and macroblock in the slice C in the third area df3 of the segment stream buffer 152 via the third buffer 143.

Next, the slice header processing unit 133h obtains the slice header hd in the bit stream, and simultaneously outputs the slice header hd to the first buffer 141 to the fourth buffer 144. As a result, the slice header hd is outputted to the fourth buffer 144 as a portion of the fourth segment stream, and the respective three slice header copies hd' identical to the slice header hd and portions of the first segment stream, the second segment stream, and the third segment stream are outputted to the first buffer 141, the second buffer 142, and the third buffer 143, respectively.

As a result, the slice header hd is written into the fourth buffer 144, the slice header copy hd' is written into each of the first buffer 141, the second buffer 142, and the third buffer 143. In short, each of the slice headers already written in the first buffer 141, the second buffer 142, and the fourth buffer 144 is overwritten by the slice header hd or the slice header copy hd'.

Subsequently, the slice data processing unit 134d outputs, sequentially from the beginning side, the macroblocks included in the fourth MB line as a portion of the fourth segment stream to the fourth buffer 144. The macroblocks are written immediately after the slice header hd in the fourth buffer 144 in this way, which removes the guard of the read pointer RP in the fourth buffer 144. Accordingly, the fourth buffer 144 outputs the slice header hd and the starting macroblock in the fourth MB line to the fourth area df4 in the segment stream buffer 152. When the second and subsequent macroblocks following the starting macroblock in the fourth MB line are sequentially written in the fourth buffer 144 after the starting macroblock is written in the fourth buffer 144, the slice header hb and starting macroblock that have already been written in the fourth buffer 144 are erased and overwritten by the second and subsequent macroblocks. Each time the fourth buffer 144 obtains one of the second and subsequent macroblocks in the fourth MB line, the buffer 144 erases already written data and outputs one of the second and subsequent macroblocks to the fourth area df4 in the segment stream buffer 152.

The stream segmentation unit 130d performs such processing in this way to store the slice header hd and the fourth MB line into the fourth area df4 of the segment stream buffer 152 via the third buffer 143.

In this way in Variation 3, the slice header processing unit 133h outputs slice header copies irrespective of whether or not the slice header copies are necessary. Thus, it is possible to eliminate the processing load that is otherwise placed on the slice header processing unit 133h in determining the necessity of the slice header copies. Furthermore, since it is only necessary for the slice header processing unit 133h to simply output the received slice headers included in the bit stream, the slice header processing unit 133h does not need to have a header buffer 133d dissimilarly to the slice header processing unit 133 in the above-described embodiment. As a result, it is possible to simplify the structure of the stream header processing unit 133h.

In Variation 3, since there is no case where slice headers are sequentially inserted into a segment stream, it is possible to reduce processing load for such sequential slice headers, compared to Variation 2. More specifically, it is possible to eliminate processing for notifying the decoding engines 120 of the number of sequential slice headers, and processing for causing each decoding engines 120 to determine whether or not to skip some slice headers. As a result, it is possible to simplify the functional structures of the stream segmentation unit 130d and decoding engines 120. This makes it possible to use conventional decoding engines as the decoding engines 120.

FIG. 20 is a diagram showing an application example of one of the image decoding apparatuses in the embodiment and its variations.

For example, as shown in FIG. 20, the image decoding apparatus in the embodiment or one of the variations thereof is provided to a reproduction device 101 that receives a broadcast wave and reproduces the bit stream included in the broadcast wave. The reproduction device 101 includes an antenna 101a that receives the broadcast wave of BS digital broadcasting, and the main body 101b including the aforementioned image decoding apparatus.

The image decoding apparatus embedded in the main body 101b extracts, for example, a 4k2k bit stream from the broadcast wave received by the antenna 101a. Subsequently, the image decoding apparatus segments the extracted bit stream to generate N segment streams, and decodes the N segment streams in parallel as described above.

The image decoding apparatuses and image decoding methods have been described above using the embodiment and its variations. However, the present invention is not limited to these.

For example, the image decoding apparatus 100 includes a segment stream buffer 152 and the like in the embodiment and its variations, but the image decoding apparatus 100 may not include these.

FIG. 21 is a diagram showing a minimum structure of an image decoding apparatus according to the present invention.

The image decoding apparatus 10 has the minimum structure for implementing the present invention, and includes an obtainment unit 11, a stream segmentation unit 12, and N decoding units 13.

The obtainment unit 11 corresponding to a stream buffer 151 or an obtainment device (or a mere obtainment port) used for receiving the bit stream from the stream buffer 151 and providing the bit stream to the image decoding apparatus 10. The stream segmentation unit 12 corresponds to stream segmentation units 130, 130c, and 130d. More specifically, the stream segmentation 12 generates N segment steams by segmenting each of pictures included in the bit stream obtained by the obtainment unit 11 into plural structural units, and assigning each of the structural units to a corresponding one of N segment streams to be generated (N is an integer equal to or greater than 2). The N decoding units 13 correspond to the decoding engines 120 and 121, and decode the respective N segment streams generated by the stream segmentation unit 12 in parallel. Furthermore, when the stream segmentation unit 12 segments a slice in one of the coded pictures into slice portions and assigns the respective slice portions to plural segment streams in the generation of the N segment streams, the stream segmentation unit 12 reconstructs the slice portion groups as new slices so that each of the slice portion groups that includes at least one slice portion and is assigned to a corresponding one of the segment streams can be recognized as a slice by an associated one of the N decoding units 13.

In this way, the bit stream is segmented into structural units such as plural macroblock lines, and each of the macroblock lines is assigned as a portion of the corresponding one of the segment streams to the associated one of the N decoding units. This allows the respective N decoding units to equally share the decoding processing, and execute appropriate parallel decoding processing. For example even in the case of a coded picture conforming to H. 264/AVC which is composed of a slice, the coded picture is segmented into plural macroblock lines, and thus the load to decode the slice is equally shared by the N decoding engines 120 without being placed on one of the decoding engines 120.

Here, when a coded picture is segmented into plural macroblock lines, a slice located across plural MB lines may be segmented into plural slice portions, and the respective slice portions may be assigned to mutually different segment streams. In other words, each of the segment streams includes slice portion groups each of which is composed of at least one slice portion that is a chip of a slice, instead of including the whole slice in the coded picture. The slice portion groups may not include a header indicating the beginning of the group and end information indicating the end.

For this, in the present invention, the stream segmentation unit 130 reconstructs the slice portion group as a new slice. Thus, the decoding engine 13 that decodes the segment stream including the slice portion group can easily recognize the slice portion group as the new slice, and decode it appropriately without performing any special processing for appropriately recognizing and decoding the slice portion group as the new slice. In other words, the present invention eliminates the need to provide each of the N decoding units 13 with a function or a structure for such special processing. For this reason, it is possible to use conventional decoding circuits as the decoding units for decoding the segment streams, and therefore to simplify the structure of the whole image decoding apparatus.

Accordingly, the image decoding apparatus 10 can provide the aforementioned unique advantageous effects and thus can achieve the aforementioned object, without requiring the segment stream buffer 152 and the like in the embodiment and its variations.

FIG. 22 is a block diagram showing the structure of the stream segmentation unit 12.

The stream segmentation unit 12 includes, for example, a copying unit 12a, an address update unit 12b, and an insertion unit 12c.

The copying unit 12a and the insertion unit 12c correspond to either the slice header insertion unit 133 or the slice header processing units 133g and 133h. In addition, the copying unit 12a generates a supplemental information copy by copying supplemental information that is placed at the beginning of the slices in a coded picture and is necessary for decoding the slices. For example, the supplemental information and the supplemental information copy correspond to a slice header and a slice header copy, respectively. The insertion unit 12c inserts the supplemental information copy to the beginning of the slice portion group as supplemental information. The address update unit 12b corresponds to the header address update unit 133c, and updates the address information included in the supplemental information copy into address information indicating the address of the starting macroblock in the slice portion group. It is to be noted that the address information is MB address information.

Here, the address update unit 12b is included in the stream segmentation unit 12, and updates the address information included in the supplemental information copy generated by the copying unit 12a. Subsequently, the insertion unit 12c inserts the supplemental information copy including the address information updated by the address update unit 12b to the beginning of the slice portion group.

Since the address information indicating the address of the starting macroblock in the slice portion group is included in the supplemental information of the slice portion group, the decoding unit 13 can recognize the correct address of the starting macroblock in the slice portion group by reading out the address information without performing any special processing.

It is to be noted that the address update unit 12b may be outside the stream segmentation unit 12.

FIG. 23 is a block diagram showing modified minimum structure of an image decoding apparatus according to the present invention.

The image decoding apparatus 20 has the minimum structure for implementing the present invention, and includes an obtainment unit 11, a stream segmentation unit 22, an address update unit 12b, and N decoding units 13. The stream segmentation unit 22 includes only the copying unit 12a and the insertion unit 12c. The address update unit 12b and the stream segmentation unit 22 are provided outside the stream segmentation unit 22. In this case, the address update unit 12b updates the address information included in the supplemental information copy inserted to the beginning of the slice portion group by the insertion unit 12c.

The address update unit 12b may be included in each of the N decoding units 13. In this case, the decoding unit 13 has a function for updating the address information of the segment stream to be processed by the decoding unit 13 itself. In short, Variation 1 of this embodiment corresponds to this case.

FIG. 24 is a block diagram showing another structure of the stream segmentation unit 12.

The stream segmentation unit 12 includes a supplemental information processing unit 12d, a segment output unit 12e, and N buffers 12f. Supplemental information necessary for decoding the slice is placed at the beginning of each of the slices included in the bit stream. For example, the supplemental information corresponds to a slice header. The respective N buffers 12f correspond to first buffer 141 to fourth buffer 144, and are associated with the N decoding units 13. The segment output unit 12e corresponds to the slice data processing unit 134d. The segment output unit 12e segments each of the coded pictures into plural structural units, and outputs each of the structural units into a corresponding one of the N buffers 12f. The supplemental information processing unit 12d corresponds to the slice header processing unit 133h. The supplemental information processing unit 12d sequentially obtains data included in the coded picture, and when the data is supplemental information, outputs the supplemental information to the N buffers 12f.

Here, each of the N buffers 12f outputs data each time the buffer 12f obtains data included in a structural unit outputted by the segment output unit 12e. Furthermore, each of the N buffers 12f obtains and holds supplemental information outputted from the supplemental information processing unit 12d. Only when the buffer 12f obtains data of a structural unit immediately after supplemental information, the buffer 12 outputs the held supplemental information before the data. When the buffer 12f obtains new supplemental information immediately after the supplemental information, the buffer 12f overwrites the new supplemental information on the already-held supplemental information. Each of the N decoding units 13 decodes the segment streams including the supplemental information and the data of the structural units that are outputted from the associated one of the buffers.

Causing the supplemental information processing unit 12d to output the supplemental information obtainable from a bit stream into the buffer 12f in this simple manner makes it possible to cause the N buffers 12f to output only the supplemental information necessary for the N segment streams from among the supplemental information that are otherwise outputted from the N buffers 12f. As a result, it is possible to appropriately insert supplemental information to the beginning of each slice portion that does not start at the beginning of a slice in the coded picture.

Slice header copies are inserted in the embodiment and its variations, but such slice header copies may not be inserted. For example, it is also good to copy only the supplemental information that is included in the copy-source slice header and thus is required to decode the slices having the slice header, and insert the supplemental information copy generated in the copying.

In the embodiment and its variations, each of the pictures is segmented into plural structural units regarded as an MB line as a structural unit. However, the structural unit is not limited to an MB line. Two MB lines or three MB lines are possible, and plural macroblocks arranged in a row in the vertical direction of a picture are also possible. For example, in the case of a picture that is composed of MBAFFs, two MB lines may be regarded as a structural unit. In the case of a picture that is not composed of MBAFFs, an MB line may be regarded as a structural unit.

In the embodiment and its variations, the stream segmentation unit inserts slice header copies into segment streams, and the decoding engines read out and decode the segment streams having the slice header copies. However, the stream segmentation unit may directly output the slice header copies to the decoding engines without inserting the slice header copies into the segment streams. For example, the stream segmentation unit determines whether or not a slice header copy should be placed immediately before a current MB line in a segment stream to be read by one of the decoding engines. When the stream segmentation unit determines that a slice header copy should be placed accordingly, it outputs the slice header copy to the decoding engine immediately before the MB line is read by the decoding engine. Here, the stream segmentation unit may output only a portion of information included in the slice header copy instead of outputting the slice header copy itself to the decoding engine.

It is to be noted that each of the functional blocks in the block diagrams (FIGS. 1, 7, 9, 15, and 17) is typically implemented as an LSI (Large Scale Integration) that is an integrated circuit. The respective functional blocks may be separately formed as plural single-function chips. Otherwise, some or all of these may be integrated into a single chip. For example, the functional blocks other than a memory may be integrated into a single chip.

The name used here is LSI, but it may also be called IC (Integrated Circuit), system LSI, super LSI, or ultra LSI depending on the degree of integration.

Moreover, ways to achieve integration are not limited to the LSI, and special circuit or general purpose processor and so forth can also achieve the integration. Field Programmable Gate Array (FPGA) that can be programmed after manufacturing LSI or a reconfigurable processor that allows re-structure of the connection or structure of circuit cells in the LSI can be used.

Furthermore, in the future, with advancement in technology of manufacturing semiconductors or other derivative technique, a new integration technology resulting in replacement of LSI may emerge. The integration may be carried out using this technology. Application of biotechnology is one such possibility.

### [Industrial Applicability]

Simply-structured image decoding apparatuses according to the present invention provide an advantageous effect of being able to properly execute parallel decoding processing. For example, the image decoding apparatuses are applicable as reproduction devices which decode a bit stream of 4k2k.

### [Reference Signs List]

- 100: Image decoding apparatus
- 110: Decoder
- 120: First to N-th decoding engine
- 130: Stream segmentation unit
- 131: Start code detection unit
- 132a: EPB removal unit
- 132b: EPB insertion unit
- 133: Slice header insertion unit
- 133a: NAL type identification unit
- 133b: Header insertion counter
- 133c: Header address update unit
- 133d: Header buffer
- 134a, 134b: Slice data processing unit
- 135a, 135b: Slice data layer decoding unit
- 136a, 136b: Macroblock layer decoding unit
- 137a: Skip run segmentation unit
- 138a, 138b: QP calculation unit
- 139a, 139b: Delimiter detection unit
- 150: Memory
- 151: Stream buffer
- 152: Segment stream buffer
- 153: Frame memory

## Claims

1. An image decoding apparatus (100; 10) which decodes a bit stream including coded image data, said apparatus (100; 10) comprising:
an obtainment unit (11) configured to obtain the bit stream;
a stream segmentation unit (130; 12) configured to generate N segment streams by segmenting each of coded pictures included in the bit stream obtained by said obtainment unit into a plurality of structural units, and assigning, as a portion, each of the plurality of structural units to one of the N segment streams to be generated, N being an integer equal to or greater than 2; and
N decoding units (120; 13) configured to decode, in parallel, the respective N segment streams generated by said stream segmentation unit (130; 12),
wherein each structural unit includes one slice portion of at least one slice of the coded picture and wherein, when said stream segmentation unit (130; 12) segments the coded pictures into structural units and assigns the structural units to the N segment streams in generating the N segment streams and when the stream segmentation unit (130; 12) assigns to at least one segment stream a plurality of structural units including slice portions of the same slice, the slice portions of the same slice forming a slice portion group, said stream segmentation unit (130; 12)
(i) determines, for each of the N segment streams, whether or not a beginning of a slice portion group to be assigned to the respective one of the N segment streams corresponds to a beginning of a slice in the coded picture, said slice portion group including the slice portions of the same slice to be assigned to the respective one of the N segment streams, and
(ii) in the case of determining that the beginning of the slice portion group does not correspond to the beginning of the slice, inserts, only at the beginning of the slice portion group, supplemental information including an address of a starting macroblock in the slice portion group.

2. The image decoding apparatus according to Claim 1,
wherein said stream segmentation unit (130; 12) is configured to insert, as a header, the supplemental information at the beginning of the slice portion group.

3. The image decoding apparatus according to Claim 1,
wherein said stream segmentation unit (130; 12) includes:
a copying unit (12a) configured to generate a supplemental information copy by copying the supplemental information including the address of the starting macroblock in the slice and placed at the beginning of the slice in the coded picture; and
an insertion unit (133; 12c) configured to insert the supplemental information copy regarded as the supplemental information at the beginning of the slice portion group, and
said image decoding apparatus (100; 10) further comprises
an address update unit (133c; 12b) configured to update address information included in the supplemental information copy to address information indicating the address of the starting macroblock in the slice portion group.

4. The image decoding apparatus (100; 10) according to Claim 3,
wherein said address update unit (133c; 12b) is included in said stream segmentation unit (130; 12), and is configured to update the address information included in the supplemental information copy generated by said copying unit (12a), and
said insertion unit (133; 12c) is configured to insert the supplemental information copy including the address information updated by said address update unit at the beginning of the slice portion group.

5. The image decoding apparatus according to Claim 3,
wherein said address update unit (133c; 12b) is configured to update the address information included in the supplemental information copy inserted by said insertion unit (133; 12c) at the beginning of the slice portion group.

6. The image decoding apparatus (100; 10) according to Claim 1,
wherein the slice in the bit stream includes, at the beginning of the slice, supplemental information including an address of a starting macroblock in the slice,
said stream segmentation units (130; 12) includes:
N buffers (12f) each of which is associated with one of said N decoding units;
a segment output unit (12e) configured to segment each of the coded pictures into structural units, and output each of the structural units to an associated one of said N buffers (12f); and
a supplemental information processing unit (12d) configured to sequentially obtain data included in the coded picture, and output the supplemental information to said respective N buffers when the supplemental information is included in the sequentially obtained data,
each of said N buffers (12f) is configured to:
output data included in one of the structural units outputted by said segment output unit (12e) upon obtaining the data;
receive and hold the supplemental information outputted from said supplemental information processing unit (12d);
output the held supplemental information before outputting the data only when the data of the assigned one of the structural units is obtained immediately after the supplemental information; and
overwrite new supplemental information on the held supplemental information when the new supplemental information is obtained immediately after the held supplemental information, and
each of said N decoding units is configured to decode the segment stream including the supplemental information and the data of the assigned one of the structural units, the segment stream being outputted from said buffer associated with said decoding unit.

7. The image decoding apparatus according to any one of Claims 1 to 6,
wherein, in the case where the slice portion group does not end at an end of a slice in the coded picture, said stream segmentation unit (130; 12) sets end information indicating an end of the slice portion group at the end of the slice portion group.

8. The image decoding apparatus according to any one of Claims 1 to 7,
wherein said stream segmentation unit is further configured to: obtain mode information indicating whether or not to perform segmentation; and output each of bit streams obtained by said obtainment unit to one of said N decoding units in the case where the mode information indicates that no segmentation should be performed, and
said respective N decoding units (120; 13) are further configured to receive and decode, in parallel, the bit streams outputted by said stream segmentation unit (130; 12).

9. The image decoding apparatus (100; 10) according to any one of Claims 1 to 8,
wherein said stream segmentation unit (130; 12) is configured to segment the coded picture into structural units regarding, as the structural unit, a unit that includes at least one macroblock line composed of macroblocks arranged in a row in a horizontal direction of the coded picture.

10. The image decoding apparatus (100; 10) according to any one of Claims 1 to 8,
wherein said N decoding units (120; 13) include a first decoding unit and a second decoding unit, and
when said first decoding unit decodes a first slice portion included in a segment stream assigned to said first decoding unit among the N segment streams and said second decoding unit decodes a second slice portion included in the segment stream assigned to said second decoding unit among the N segment streams, and when the first slice portion and the second slice portion are adjacent to each other in the coded picture:
said first decoding unit starts decoding the first slice portion before said second decoding unit starts decoding the second slice portion; and
said second decoding unit obtains, from said first decoding unit, adjacent information that is generated by said first decoding unit in the decoding of the first slice portion, and decodes the second slice potion using or without using the adjacent information.

11. An image decoding method of decoding a bit stream including coded image data, said method comprising:
obtaining the bit stream;
generating N segment streams by segmenting each of coded pictures included in the obtained bit stream into a plurality of structural units, and by assigning, as a portion, each of the plurality of structural units to a one of the N segment streams to be generated, N being an integer equal to or greater than 2; and
decoding, in parallel, the respective generated N segment streams;
wherein each structural unit includes one slice portion of at least one slice of the coded picture and wherein, when the coded pictures is segmented into structural units and the structural units are assigned to the N segment streams in said generating of the N segment streams, and when to at least one segment stream a plurality of structural units including slice portions of the same slice is assigned, the slice portions of the same slice forming a slice portion group, the method comprises:
(i) determining, for each of the N segment streams, whether or not a beginning of a slice portion group to be assigned to the respective one of the N segment streams corresponds to a beginning of a slice in the coded picture, said slice portion group including the slice portions of the same slice to be assigned to the respective one of the N segment streams, and
(ii) in the case of determining that the beginning of the slice portion group does not correspond to the beginning of the slice, inserting, only at the beginning of the slice portion group, supplemental information including an address of a starting macroblock in the slice portion group.

12. A program for decoding a bit stream including coded image data, said program causing a computer to execute:
obtaining the bit stream;
generating N segment streams by segmenting each of coded pictures included in the obtained bit stream into a plurality of structural units, and by assigning, as a portion, each of the plurality of structural units to one of the N segment streams to be generated, N being an integer equal to or greater than 2; and
decoding, in parallel, the respective generated N segment streams;
wherein each structural unit includes one slice portion of at least one slice of the coded picture and wherein, when the coded pictures is segmented into structural units and the structural units are assigned to the N segment streams in the generating of the N segment streams, and when to at least one segment stream a plurality of structural units including slice portions of the same slice is assigned, the slice portions of the same slice forming a slice portion group, the program causes the computer to execute:
(i) determining, for each of the N segment streams, whether or not a beginning of a slice portion group to be assigned to the respective one of the N segment streams corresponds to a beginning of a slice in the coded picture, said slice portion group including the slice portions of the same slice to be assigned to the respective one of the N segment streams, and
(ii) in the case of determining that the beginning of the slice portion group does not correspond to the beginning of the slice, inserting, only at the beginning of the slice portion group, supplemental information including an address of a starting macroblock in the slice portion group.

13. An integrated circuit which decodes a bit stream including coded image data, said integrated circuit comprising:
an obtainment unit (11) configured to obtain the bit stream;
a stream segmentation unit (130; 12) configured to generate N segment streams by segmenting each of coded pictures included in the bit stream obtained by said obtainment unit into a plurality of structural units, and assigning, as a portion, each of the plurality of structural units to one of the N segment streams to be generated, N being an integer equal to or greater than 2; and
N decoding units (120; 13) configured to decode, in parallel, the respective N segment streams generated by said stream segmentation unit (130; 12),
wherein each structural unit includes one slice portion of at least one slice of the coded picture and wherein, when said stream segmentation unit (130; 12) segments the coded pictures into structural units and assigns the structural units to the N segment streams in generating the N segment streams, and when and when the stream segmentation unit (130; 12) assigns to at least one segment stream a plurality of structural units including slice portions of the same slice, the slice portions of the same slice forming a slice portion group, said stream segmentation unit (130; 12)
(i) determines, for each of the N segment streams, whether or not a beginning of a slice portion group to be assigned to the respective one of the N segment streams corresponds to a beginning of a slice in the coded picture, said slice portion group including the slice portions of the same slice to be assigned to the respective one of the N segment streams, and
(ii) in the case of determining that the beginning of the slice portion group does not correspond to the beginning of the slice, inserts, only at the beginning of the slice portion group, supplemental information including an address of a starting macroblock in the slice portion group.

## Patentansprüche

1. Bildentschlüsselungsvorrichtung (100;10), welche einen Bitstrom entschlüsselt, der verschlüsselte Bilddaten enthält, wobei die Vorrichtung (100; 10) umfasst:
eine Gewinnungseinheit (11), die eingerichtet ist, den Bitstrorn abzurufen;
eine Stromsegmentierungseinheit (130; 12), die eingerichtet ist, N Segmentströme zu erzeugen durch Aufteilen eines jeden der in dem durch die Gewinnungseinheit abgerufenen Bitstrom enthaltenen, verschlüsselten Bilder in eine Mehrzahl von Struktureinheiten und durch Zuweisen einer jeden der Mehrzahl von Struktureinheiten zu einem der zu erzeugenden N Segmentströme als einen Anteil, wobei N eine ganze Zahl gleich oder größer als 2 ist; und
N Entschlüsselungseinheiten (120; 13), die eingerichtet sind, parallel zueinander die entsprechenden durch die Stromsegmentierungseinheit (130; 12) erzeugten N Segmentströme zu entschlüsseln,
wobei jede Struktureinheit einen Sliceanteil von zumindest einem Slice des verschlüsselten Bildes enthält und wobei, wenn die Stromsegmentierungseinheit (130; 12) die verschlüsselten Bilder in Struktureinheiten aufteilt und die Struktureinheiten den N Segmentströmen beim Erzeugen der N Segmentströme zuweist, und wenn die Stromsegmentierungseinheit (130;12) wenigstens einem Segmentstrom eine Mehrzahl von Struktureinheiten zuweist, welche Sliceanteile desselben Slices enthalten, wobei die Sliceanteile desselben Slices eine Sliceanteilsgruppe ausbilden, die Stromsegmentierungseinheit (130; 12)
(i) für jeden der N Segmentströme feststellt, ob ein Anfang einer Sliceanteilsgruppe, welche dem entsprechenden der N Segmentströme zugewiesen werden soll, einem Anfang eines Slices in dem verschlüsselten Bild entspricht, oder ob dies nicht der Fall ist, wobei die Sliceanteilsgruppe die Sliceanteile desselben Slices enthält, der dem Entsprechenden der N Segmentströme zugewiesen werden soll; und,
(ii) für den Fall, dass festgestellt wird, dass der Anfang der Sliceanteilsgruppe nicht dem Anfang des Slices entspricht, nur am Anfang der Sliceanteilsgruppe eine zusätzliche Information, die eine Adresse eines startenden Makroblocks enthält, in die Sliceanteilsgruppe einfügt.

2. Bildentschlüsselungsvorrichtung nach Anspruch 1, wobei
die Stromsegmentierungseinheit (130; 12) eingerichtet ist, um die zusätzliche Information als Kopf am Anfang der Sliceanteilsgruppe einzufügen.

3. Bildentschlüsselungsvorrichtung nach Anspruch 1, wobei die Stromsegmentierungseinheit (130; 12) umfasst:
eine Kopiereinheit (12a), die eingerichtet ist, eine Kopie der zusätzlichen Information zu erzeugen, indem sie die zusätzliche Information kopiert, welche die Adresse des startenden Makroblocks in dem Slice enthält und am Anfang des Slices in dem verschlüsselten Bild angeordnet ist, und
eine Einfügungseinheit (133; 12c), die eingerichtet ist, die Kopie der zusätzlichen Information am Anfang der Sliceanteilsgruppe einzufügen, wobei diese Kopie als die zusätzliche Information betrachtet wird, und
die Bildentschlüsselungsvorrichtung (100;10) weiter umfasst:
eine Adressenaktualisierungseinheit (133c, 12b), die eingerichtet ist, eine Adressinformation innerhalb der Kopie der zusätzlichen Information entsprechend einer Adressinformation, welche auf die Adresse des startenden Makroblocks in der Sliceanteilsgruppe hinweist, zu aktualisieren.

4. Bildentschlüsselungsvorrichtung (100; 10) nach Anspruch 3, wobei
die Adressenaktuallsierungseinheit (133c, 12b) in der Stromsegmentierungseinheit (130; 12) enthalten und eingerichtet ist, die in der durch die Kopiereinheit (12a) erzeugten Kopie der zusätzlichen Information enthaltene Adressinformation zu aktualisieren, und
die Einfügungseinheit (133; 12c) eingerichtet ist, die Kopie der zusätzlichen Information, die die durch die Adressenaktualisierungseinheit aktualisiert Adressinformation enthält, am Anfang der Sliceanteilsgruppe einzufügen.

5. Bildentschlüsselungsvorrichtung nach Anspruch 3, wobei
die Adressenaktualisierungseinheit (133c, 12b) eingerichtet ist, die in der Kopie der zusätzlichen Information enthaltene Adressinformation zu aktualisieren, die durch die Einfügungseinheit (133, 12c) am Anfang der Sliceanteilsgruppe eingefügt wurde.

6. Bildentschlüsselungsvorrichtung (100; 10) nach Anspruch 1, wobei
der Slice innerhalb des Bitstroms am Anfang des Slices eine zusätzliche Information umfasst, die eine Adresse eines startenden Makroblocks in dem Slice enthält,
die Stromsegmentierungseinheit (130; 12) enthält:
N Puffer (12f), von denen jeder einer der N Entschlüsselungseiheiten zugeordnet ist;
eine Segmentausgabeeinheit (12e), welche eingerichtet ist, jedes der verschlüsselten Bilder in Struktureinheiten aufzuteilen, und jede der Struktureinheiten an einen Zugeordneten der N Puffer (12) auszugeben; und
eine Zusatzinformationsverarbeitungseinheit (12d), die eingerichtet ist, nacheinander Daten abzurufen, die in dem verschlüsselten Bild enthalten sind, und die zusätzliche Information an die entsprechenden N Puffer auszugeben, wenn die zusätzliche Information in den nacheinander abgerufenen Daten enthalten ist;
jeder der N Puffer (12f) ist eingerichtet, um:
Daten, die in einer der durch die Segmentierungsausgabeeinheit (12e) beim gewinnen der Daten ausgegebenen Struktureinheiten enthalten sind, auszugeben;
die zusätzliche Information, die durch die Zusatzinformationsverarbeitungseinheit (12d) ausgegeben wurde, zu empfangen und zu halten
die gehaltene zusätzliche Information vor der Ausgabe der Daten nur auszugeben, wenn die Daten der Zugewiesenen der Struktureinheiten sofort nach der zusätzlichen Information abgerufen wurde; und
die gehaltene zusätzliche Information mit einer neuen zusätzlichen Information zu überschreiben, wenn die neue zusätzliche Information sofort nach der gehaltenen zusätzlichen Information abgerufen wird, und
jede der N Entschlüsselungseinheiten eingerichtet ist, den Segmentstrom, welcher die zusätzliche Information und die Daten der Zugewiesenen der Struktureinheiten enthält, zu entschlüsseln, wobei der Segmentstrom aus dem der Entschlüsselungseinheit zugeordneten Puffer ausgegeben wird.

7. Bildentschlüsselungsvorrichtung nach einem der Ansprüche 1 bis 6, wobei
in dem Fall, in dem die Sliceanteilsgruppe nicht an einem Ende eines Slices in dem verschlüsselten Bild endet, die Stromsegmentierungseinheit (130, 12) eine Endinformation, die ein Ende der Sliceantellsgruppe angibt, an das Ende der Sliceanteilsgruppe setzt.

8. Bildentschlüsselungsvorrichtung nach einem der Ansprüche 1 bis 7, wobei
die Stromsegmentierungseinheit weiter eingerichtet ist, eine Betriebsinformation abzurufen, die angibt, ob eine Segmentierung durchgeführt werden soll oder nicht; und
in dem Fall, in dem die Betriebsinformation angibt, dass keine Segmentierung durchgeführt werden soll, jeden der Bitströme, die durch die Gewinnungseinheit abgerufen worden sind, an eine der N Entschlüsselungseinheiten auszugeben, und
die entsprechenden N Entschlüsselungseinheiten (120; 13) weiter eingerichtet sind, parallel die Bitströme zu empfangen und zu entschlüsseln, die durch die Stromsegmentierungseinheit (130; 12) ausgegeben wurden.

9. Bildentschlüsselungsvorrichtung (100; 10) nach einem der Ansprüche 1 bis 8, wobei
die Stromsegmentierungseinheit (130; 12) eingerichtet ist, das verschlüsselte Bild in Struktureinheiten aufzuteilen, wobei als Struktureinheit eine Einheit betrachtet wird, die zumindest eine Makroblock-Linie enthält, die aus in einer Reihe entlang der Horizontalen des verschlüsselten Bildes angeordneten Makroblocks besteht.

10. Bildentschlüsselungsvorrichtung (100; 10) nach einem der Ansprüche 1 bis 8, wobei
die N Entschlüsselungseinheiten (120; 13) eine erste Entschlüsselungseinheit und eine zweite Entschlüsselungseinheit enthalten, und
wenn die erste Entschlüsselungseinheit einen ersten Sliceanteil entschlüsselt, der in einem Segmentstroms enthalten ist, welcher der ersten Entschlüsselungseinheit aus den N Segmentströmen zugeordnet worden ist, und die zweite Entschlüsselungseinheit einen zweiten Sliceanteil entschlüsselt, der in dem Segmentstrom enthalten, der der zweiten Entschlüsselungseinheit aus den N Segmentströmen zugewiesen ist, und wenn der erste Sliceanteil und der zweite Slcieanteil in dem verschlüsselten Bild aneinander angrenzen;
die erste Entschlüsselungseinheit beginnt, den ersten Sliceanteil zu entschlüsseln, bevor die zweite Entschlüsselungseinheit beginnt, den zweiten Sliceanteil zu entschlüsseln; und
die zweite Entschlüsselungseinheit von der ersten Entschlüsselungseinheit eine angrenzende Information gewinnt, die durch die erste Entschlüsselungseinheit in der Entschlüsselung des ersten Sliceanteils erzeugt wurde, und den zweiten Sliceanteil unter oder ohne Verwendung der angrenzenden Information entschlüsselt.

11. Bildentschlüsselungsverfahren zum Entschlüsseln eines Bikstroms, der verschlüsselte Bilddaten enthält, wobei das Verfahren umfasst:
Gewinnen eines Bitstroms;
Erzeugen von N Segmentströmen durch Aufteilen eines jeden der in dem abgerufenen Bitstrom enthaltenen, verschlüsselten Bilder in eine Mehrzahl von Struktureinheiten, und durch Zuweisen einer jeden der Mehrzahl von Strukturenheiten zu einem der zu generierenden N Segmentströme als einen Anteil, wobei N eine ganze Zahl gleich oder größer als 2 ist;
paralleles Entschlüsseln der entsprechend erzeugten N Segmentströme;
wobei jede Struktureinheit einen Sliceanteil von zumindest einem Slice des verschlüsselten Bildes enthält und wobei, wenn die verschlüsselten Bilder in Struktureinheiten aufgeteilt und die Struktureinheiten den N Segmentströme während des Erzeugens der N Segmentströme zugewiesen werden, und wenn mindestes einem Segmentstrom eine Mehrzahl von Struktureinheiten, die Sliceanteile desselben Slices enthalten, zugewiesen werden, wobei die Sliceanteile desselben Slices eine Sliceanteilsgruppe bilden, das Verfahren umfasst:
(i) Feststellen, für jeden der N Segmentströme, ob der Anfang einer Sliceanteilsgruppe, welche dem entsprechenden der N Segmentströme zugewiesen werden soll, einem Anfang eines Slices in dem verschlüsselten Bild entspricht, oder ob dies nicht der Fall ist, wobei die Sliceanteilsgruppe die Sliceanteile desselben Slices enthält, der dem Entsprechenden der N Segmentströme zugewiesen werden soll; und
(ii) für den Fall, dass festgestellt wird, dass der Anfang der Sliceanteilsgruppe nicht dem Anfang des Slices entspricht, Einfügen einer zusätzlichen Information, die eine Adresse eines startenden Makroblocks enthält, nur am Anfang der Sliceanteilsgruppe in die Sliceanteilsgruppe.

12. Programm zum Entschlüsseln eines Bitstroms, der verschlüsselte Bilddaten enthält, wobei das Program einen Computer veranlasst, Folgendes auszuführen:
Gewinnen des Bitstroms;
Erzeugen von N Segmentströmen durch Aufteilen jedes der verschlüsselten Bilder, die in dem abgerufenen Bitstrom enthalten sind, in eine Mehrzahl von Struktureinheiten, und durch Zuweisen von jeder der Mehrzahl von Struktureinheiten zu einem der zu erzeugenden N Segmentströme als einen Anteil, wobei N eine ganze Zahl gleich oder größer als 2 ist; und
paralleles Entschlüsseln der entsprechenden, erzeugten N Segmentströme;
wobei jede Struktureinheit einen Sliceanteil zumindest eines Slices des verschlüsselten Bildes enthält, und wobei, wenn die verschlüsselten Bilder in Struktureinheiten aufgeteilt und die Struktureinheiten beim Erzeugen der N Segmentströme den N Segmentströmen zugewiesen werden, und wenn zumindest einem Segmentstrom eine Mehrzahl von Struktureinheiten zugewiesen wird, die Sliceanteile desselben Slices enthalten, wobei die Sliceanteile desselben Slices eine Sliceanteilsgruppe bilden, das Programm den Computer veranlasst, Folgendes auszuführen:
(i) Feststellen, für jeden der N Segmentströme, ob ein Anfang einer Sliceanteilsgruppe, welche dem entsprechenden der N Segmentströme zugewiesen werden soll, einem Anfang eines Slices in dem verschlüsselten Bild entspricht, oder ob dies nicht der Fall ist, wobei die Sliceanteilsgruppe die Sliceanteile desselben Slices enthält, der dem Entsprechenden der N Segmentströme zugewiesen werden soll; und
(ii) für den Fall, dass festgestellt wird, dass der Anfang der Sliceanteilsgruppe nicht dem Anfang des Slices entspricht, Einfügen einer zusätzlichen Information, die eine Adresse eines startenden Makroblocks enthält, nur am Anfang der Sliceanteilsgruppe in die Sliceanteilsgruppe.

13. Integrierter Schaltkreis, der einen Bitstrom, welcher verschlüsselte Bilddaten enthält, entschlüsselt, wobei der integrierte Schaltkreis umfasst:
eine Gewinnungseinheit (11), die eingerichtet ist, den Bitstrom abzurufen;
eine Stromsegmentierungseinheit (130; 12), die eingerichtet ist, N Segmentströme zu erzeugen durch Aufteilen eines Jeden der in dem durch die Gewinnungseinheit abgerufenen Bitstrom enthaltenen, verschlüsseiten Bilder in eine Mehrzahl von Struktureinheiten und durch Zuweisen einer jeden der Mehrzahl von Struktureinheiten zu einem der zu erzeugenden N Segmentströme als einen Anteil, wobei N eine ganze Zahl gleich oder größer als 2 ist; und
N Entschlüsselungseinheiten (120; 13), die eingerichtet sind, parallel zueinander die entsprechenden durch die Stromsegmentierungseinheit (130; 12) erzeugten N Segmentströme zu entschlüsseln,
wobei jede Struktureinheit einen Sliceanteil von zumindest einem Slice des verschlüsselten Bildes enthält und wobei, wenn die Stromsegmentierungseinheit (130; 12) die verschlüsselten Bilder in Struktureinheiten aufteilt und die Struktureinheiten den N Segmentströmen beim Erzeugen der N Segmentströme zuweist, und wenn die Stromsegmentierungseinheit (130;12) wenigstens einem Segmentstrom eine Mehrzahl von Struktureinheiten zuweist, welche Sliceanteile desselben Slices enthalten, wobei die Sliceanteile desselben Slices eine Sliceanteilsgruppe ausbilden, die Stromsegmentierungseinheit (130; 12)
(i) für jeden der N Segmentströme feststellt, ob ein Anfang einer Sliceanteilgruppe, welche dem entsprechenden der N Segmentströme zugewiesen werden soll, einem Anfang eines Slices in dem verschlüsselten Bild entspricht, oder ob dies nicht der Fall ist, wobei die Sliceanteilgruppe die Sliceanteile desselben Slices enthält, der dem entsprechenden der N Segmentströme zugewiesen werden soll; und
(ii) für den Fall, dass festgestellt wird, dass der Anfang der Sliceanteilsgruppe nicht dem Anfang des Slices entspricht, nur am Anfang der Sliceanteilsgruppe eine zusätzliche Information, die eine Adresse eines startenden Makroblocks enthält, in die Sliceanteilsgruppe einfügt.

## Revendications

1. Dispositif de décodage d'image (100; 10) qui décode un flux de bits contenant des données d'image codées, ledit dispositif (100; 10) comprenant;
une unité d'obtention (11) configurée pour obtenir le flux de bits;
une unité de segmentation de flux (130; 12) configurée pour générer N flux de segments en segmentant chacune des images codées contenues dans le flux de bits obtenu par ladite unité d'obtention, en une pluralité d'unités de structure, et en assignant, comme une portion, chacune de ladite pluralité d'unités de structure à l'un des N flux de segments à générer, N étant un entier égal ou supérieur à 2; et
N unités de décodage (120; 13) configurées pour décoder en parallèle les N flux de segments respectifs générés par ladite unité de segmentation de flux (130; 12),
dans lequel chaque unité de structure contient une portion de tranche d'au moins une tranche de l'image codée et dans lequel, lorsque l'unité de segmentation de flux (130; 12) segmente les images codées en unités de structure et assigne les unités de structure aux N flux de segments en générant lesdits N flux de segments, et lorsque l'unité de segmentation de flux (130; 12) assigne au moins un flux de segments une pluralité d'unités de structure contenant des portions de tranche de la même tranche, les portions de tranche de la même tranche formant un groupe de portions de tranche, ladite unité de segmentation de flux (130; 12)
(i) détermine, pour chacun des N flux de segments, si un début d'un groupe de portions de tranche à assigner à celui respectif des N flux de segments correspond ou non à un début d'une tranche dans l'image codée, ledit groupe de portions de tranche contenant les portions de tranche de la même tranche à assigner à celui respectif des N flux de segments; et,
(ii) au cas où il serait déterminé que le début du groupe de portions de tranche ne correspond pas au début de la tranche, elle insère, uniquement au début du groupe de portions de tranche, une information supplémentaire contenant une adresse d'un macrobloc de début, dans le groupe de portions de tranche.

2. Dispositif de décodage d'image selon la revendication 1, dans lequel
ladite unité de segmentation de flux (130; 12) est configurée pour insérer, comme en-tête, l'information supplémentaire au début du groupe de portions de tranche.

3. Dispositif de décodage d'image selon la revendication 1, dans lequel ladite unité de segmentation de flux (130; 12) comprend:
une unité à copier (12a) configurée pour générer une copie de l'information supplémentaire en copiant l'information supplémentaire contenant l'adresse du macrobloc de début dans la tranche et placée au début de la tranche dans l'image codée; set
une unité d'insertion (133; 12c) configurée pour insérer la copie de l'information supplémentaire, considérée comme l'information supplémentaire, au début du groupe de portions de tranche, et
ledit dispositif de décodage d'image (100; 10) comprend en outre:
une unité de mise à jour d'adresse (133c, 12b) configurée pour mettre à jour une information d'adresse contenue dans la copie de l'information supplémentaire, selon une information d'adresse indiquant l'adresse du macrobloc de début dans le groupe de portions de tranche.

4. Dispositif de décodage d'image (100; 10) selon la revendication 3, dans lequel
ladite unité de mise à jour d'adresse (133c, 12b) est contenue dans ladite unité de segmentation de flux (130; 12) et est configurée pour mettre à jour l'information d'adresse contenue dans la copie de l'information supplémentaire générée par ladite unité à copier (12a), et
ladite unité d'insertion (133; 12c) est configurée pour insérer, au début du groupe de portions de tranche, la copie de l'information supplémentaire contenant l'information d'adresse mise à jour par ladite unité de mise jour d'adresse.

5. Dispositif de décodage d'image selon la revendication 3, dans lequel
ladite unité de mise à jour d'adresse (133c, 12b) est configurée pour mettre à jour l'information d'adresse contenue dans la copie de l'information supplémentaire insérée par ladite unité d'insertion (133; 12c) au début du groupe de portions de tranche.

6. Dispositif de décodage d'image (100; 10) selon la revendication 1, dans lequel
la tranche dans le flux de bits comprend, au début de la tranche, une information supplémentaire contenant une adresse d'un macrobloc de début dans la tranche,
ladite unité de segmentation de flux (130; 12) comprend:
N tampons (12f) dont chacun est associé à l'une des N unités de décodage
une unité de sortie de segment (12e) configurée pour segmenter chacune des images codées en unités de structure et pour sortir chacune des unités de structure un tampon associé desdits N tampons (12); et
une unité de traitement d'information supplémentaire (12d) configurée pour obtenir séquentiellement des données contenues dans l'image codée et pour sortir l'information supplémentaire auxdits N tampons respectifs lorsque l'information supplémentaire est contenue dans les données obtenues séquentiellement;
chacun desdits N tampons (12f) est configuré pour:
sortir des données contenues dans l'une des unités de structure sorties par ladite unité de sortie de segment (12e) lors de l'obtention des données;
recevoir et retenir l'information supplémentaire sortie par ladite unité de traitement d'information supplémentaire (12d);
sortir l'information supplémentaire retenue avant de sortir les données, seulement lorsque les données de celle assignée des unités de structure est obtenue Immédiatement après l'information supplémentaire; et
recouvrir l'information supplémentaire retenue d'une nouvelle information supplémentaire, lorsque la nouvelle information supplémentaire est obtenue immédiatement après l'information supplémentaire retenue, et
chacune desdites N unités de décodage est configurée pour décoder le flux de segments contenant l'information supplémentaire et les données de celle assignée des unités de structure, le flux de segments étant sorti du tampon associé à ladite unité de décodage.

7. Dispositif de décodage d'image selon l'une quelconque des revendications 1 à 6, dans lequel,
au cas où le groupe de portions de tranche ne se terminerait pas à une fin d'une tranche dans l'image codée, ladite unité de segmentation de flux (130; 12) met, la fin du groupe de portions de tranche, une information de fin indiquant une fin du groupe de portions de tranche.

8. Dispositif de décodage d'image selon l'une quelconque des revendications 1 à 7, dans lequel
ladite unité de segmentation de flux est configurée en outre pour obtenir une information de mode indiquant de mettre en oeuvre ou non une segmentation; et,
au cas où l'information de mode indiquerait de ne pas mettre en oeuvre une segmentation, sortir chacun des flux de bits obtenus par ladite unité d'obtention à l'une des N unités de décodage, et
les N unités de décodage (120; 13) respectives sont configurées en outre pour recevoir et décoder, en parallèle, les flux de bits sortis par ladite unité de segmentation de flux (130; 12).

9. Dispositif de décodage d'image (100; 10) selon l'une quelconque des revendications 1 à 8, dans lequel
ladite unité de segmentation de flux (130; 12) est configurée pour segmenter l'image codée en unités de structure, dans laquelle on considère, comme unité de structure, une unité qui contient au moins une ligne de macroblocs composée de macroblocs disposés en une rangée dans une direction horizontale de l'image codée

10. Dispositif de décodage d'image (100; 10) selon l'une quelconque des revendications 1 8, dans lequel
lesdites N unités de décodage (120; 13) comprennent une première unité de décodage et une deuxième unité de décodage, et,
lorsque ladite première unité de décodage décode une première portion de tranche contenue dans un flux de segment assigné à la première unité de décodage parmi les N flux de segments, et ladite deuxième unité de décodage décode une deuxième portion de tranche contenue dans le flux de segments assigné à la deuxième unité de décodage parmi les N flux de segments, et lorsque la première portion de tranche et la deuxième portion de tranche sont adjacentes l'une à l'autre dans l'image codée;
ladite première unité de décodage commence à décoder la première portion de tranche avant que la deuxième unité de décodage commence à décoder la deuxième portion de tranche; et
ladite deuxième unité de décodage obtient en provenance de la première unité de décodage une information adjacente générée par ladite première unité de décodage dans le décodage de la première portion de tranche, et décode la deuxième portion de tranche en utilisant ou non de l'information adjacente.

11. Procédé de décodage d'image pour décoder un flux de bits contenant des données d'image codées, ledit procédé comprenant:
obtenir le flux de bits,
générer N flux de segments en segmentant chacune des images codées contenues dans le flux de bits obtenu, en une pluralité d'unités de structure, et en assignant, comme une portion, chacune de ladite pluralité d'unités de structure à l'un des N flux de segments à générer, N étant un entier égal ou supérieur à 2; et
décoder en parallèle les N flux de segments respectifs générés;
dans lequel chaque unité de structure contient une portion de tranche d'au moins une tranche de l'image codée et dans lequel, lorsque les images codées sont segmentées en unités de structure et les unités de structure sont assignées aux N flux de segments en générant lesdits N flux de segments, et lorsqu'à au moins un flux de segments est assignée une pluralité d'unités de structure contenant des portions de tranche de la même tranche, les portions de tranche de la même tranche formant un groupe de portions de tranche, ledit procédé comprend:
(i) déterminer, pour chacun des N flux de segments, si un début d'un groupe de portions de tranche à assigner à celui respectif des N flux de segments correspond ou non à un début d'une tranche dans l'image codée, ledit groupe de portions de tranche contenant les portions de tranche de la même tranche à assigner à celui respectif des N flux de segments; et,
(ii) au cas où il serait déterminé que le début du groupe de portions de tranche ne correspond pas au début de la tranche, insérer, uniquement au début du groupe de portions de tranche, une information supplémentaire contenant une adresse d'un macrobloc de début, dans le groupe de portions de tranche.

12. Programme de décodage d'un flux de bits contenant des données d'image codées, ledit programme incitant un ordinateur à exécuter:
obtenir le flux de bits;
générer N flux de segments en segmentant chacune des images codées contenues dans le flux de bits obtenu, en une pluralité d'unités de structure, et en assignant, comme une portion, chacune de ladite pluralité d'unités de structure à l'un des N flux de segments à générer, N étant un entier égal ou supérieur à 2; et
décoder en parallèle les N flux de segments respectifs générés;
dans lequel chaque unité de structure contient une portion de tranche d'au moins une tranche de l'image codée et dans lequel, lorsque les images codées sont segmentées en unités de structure et les unités de structure sont assignées aux N flux de segments en générant lesdits N flux de segments, et lorsqu'à au moins un flux de segments est assignée une pluralité d'unités de structure contenant des portions de tranche de la même tranche, les portions de tranche de la même tranche formant un groupe de portions de tranche, ledit programme incite l'ordinateur à exécuter:
(i) déterminer, pour chacun des N flux de segments, si un début d'un groupe de portions de tranche à assigner à celui respectif des N flux de segments correspond ou non à un début d'une tranche dans l'image codée, ledit groupe de portions de tranche contenant les portions de tranche de la même tranche à assigner à celui respectif des N flux de segments; et,
(ii) au cas où il serait déterminé que le début du groupe de portions de tranche ne correspond pas au début de la tranche, insérer, uniquement au début du groupe de portions de tranche, une information supplémentaire contenant une adresse d'un macrobloc de début, dans le groupe de portions de tranche.

13. Circuit intégré qui décode un flux de bits contenant des données d'image codées, ledit circuit intégré comprenant:
une unité d'obtention (11) configurée pour obtenir le flux de bits;
une unité de segmentation de flux (130; 12) configurée pour générer N flux de segments en segmentant chacune des images codées contenues dans le flux de bits obtenu par ladite unité d'obtention, en une pluralité d'unités de structure, et en assignant, comme une portion, chacune de ladite pluralité d'unités de structure à l'un des N flux de segments à générer, N étant un entier égal ou supérieur à 2; et
N unités de décodage (120; 13) configurées pour décoder en parallèle les N flux de segments respectifs générés par ladite unité de segmentation de flux (130; 12),
dans lequel chaque unité de structure contient une portion de tranche d'au moins une tranche de l'image codée et dans lequel, lorsque l'unité de segmentation de flux (130; 12) segmente les images codées en unités de structure et assigne les unités de structure aux N flux de segments en générant lesdits N flux de segments, et lorsque l'unité de segmentation de flux (130; 12) assigne à au moins un flux de segments une pluralité d'unités de structure contenant des portions de tranche de la même tranche, les portions de tranche de la même tranche formant un groupe de portions de tranche, ladite unité de segmentation de flux (130; 12)
(i) détermine, pour chacun des N flux de segments, si un début d'un groupe de portions de tranche à assigner à celui respectif des N flux de segments correspond ou non à un début d'une tranche dans l'image codée, ledit groupe de portions de tranche contenant les portions de tranche de la même tranche à assigner à celui respectif des N flux de segments; et,
(ii) au cas où il serait déterminé que le début du groupe de portions de tranche ne correspond pas au début de la tranche, elle insère, uniquement au début du groupe de portions de tranche, une information supplémentaire contenant une adresse d'un macrobloc de début, dans le groupe de portions de tranche.
